# EUROPEAN PATENT SPECIFICATION

(11) **EP 3 055 779 B1**
(45) Date of publication and mention of the grant of the patent: **02.08.2017**
(21) Application number: 14787359.0
(22) Date of filing: 08.10.2014
(51) Int. Cl.: G06F 13/24, G06F 13/364, G06F 13/42

(54) **COEXISTENCE OF I2C SLAVE DEVICES AND CAMERA CONTROL INTERFACE EXTENSION DEVICES ON A SHARED CONTROL DATA BUS**
KOEXISTENZ VON I2C-NEBENVORRICHTUNGEN UND VORRICHTUNG ZUR ERWEITERUNG VON KAMERASTEUERUNGSSCHNITTSTELLEN AUF EINEM DATENBUS MIT GEMEINSAMER STEUERUNG
COEXISTENCE DE DISPOSITIFS ESCLAVES I2C ET DE DISPOSITIFS D'EXTENSION D'INTERFACE DE COMMANDE DE CAMÉRA SUR UN BUS DE DONNÉES DE COMMANDE PARTAGÉ

(30) Priority: 08.10.2013 US 201361888475 P; 14.01.2014 US 201461927102 P; 03.04.2014 US 201461974910 P
(43) Date of publication of application: 17.08.2016
(73) Proprietor: Qualcomm Incorporated, San Diego, CA 92121-1714 (US)
(72) Inventor: SENGOKU, Shoichiro, San Diego, California 92121-1714 (US)
(74) Representative: Wagner, Karl H.
(86) International application number: PCT/US2014/059776
(87) International publication number: WO 2015/054433

(56) References cited:
- EP-A1- 0 588 191
- WO-A1-00/42740
- US-A1- 2007 088 874
- US-B1- 7 089 338

## Description

### CROSS-REFERENCE TO RELATED APPLICATIONS

The present Application for Patent claims priority to Provisional Application No. App. No.: 61/888,475, entitled "Coexistent of I2C Slave Devices and Camera Control Interface Extension Devices on a Shared Control Data Bus" filed October 8, 2013, and to Provisional Application No. App. No.: 61/974,910, entitled "Coexistent of I2C Slave Devices and Camera Control Interface Extension Devices on a Shared Control Data Bus" filed April 3, 2014, and to Provisional Application No. App. No.: 61/927,102, entitled "Camera Control Interface Extension With In-Band Interrupt" filed January 14, 2014, all of which are assigned to the assignee hereof and hereby expressly incorporated by reference herein.

### Field

The present disclosure pertains to enabling multimode operations over a shared bus and, more particularly, enabling devices with different protocols to share a single bus.

### Background

Inter Integrated Circuit (hereinafter "I2C" and also referred to as I²C) is a multi-master serial single-ended bus used for attaching low-speed peripherals to a motherboard, embedded system, cellphone, or other electronic devices. The I2C bus includes a clock (SCL) and data (SDA) lines with 7-bit addressing. The bus has two roles for nodes or devices: master device and slave device. A master node/device is a node/device that generates the clock and initiates communication with a slave node/device. A slave node/device is a node that receives the clock and responds when addressed by the master. The I2C bus is a multi-master bus which means any number of master devices can be present. Additionally, master and slave roles may be changed between messages (after a STOP is sent). I2C defines basic types of messages, each of which begins with a START and ends with a STOP.

In this context of a camera implementation, unidirectional transmissions may be used to capture an image from a sensor and transmit such image data to memory in a baseband processor, while control data may be exchanged between the baseband processor and the sensor as well as other peripheral devices. In one example, a Camera Control Interface (CCI) protocol may be used for such control data between the baseband processor and the image sensor (and/or one or more slave devices). In one example, the CCI protocol may be implemented over an I2C serial bus between the image sensor and the baseband processor.

As technology evolves, there is a need for "hot plug" functionality on an I2C bus. By "hot plug", it is meant that devices such as a slave device may be plugged into an already active bus (i.e., without shutting down the bus). This hot plug functionality is achieved with what is referred to as subset I2C (i.e., sI2C). The sI2C utilizes the control data bus (SCL and SDA together) as the means for slave devices to perform interrupt requests (IRQ). Additionally, because of a desire to increase speed of the CCI protocol, a CCI extension (CCIe) protocol is described herein that increases speed over the CCI protocol. However, having slave devices performing IRQs using the SDA is incompatible with the CCIe protocol which provides a dedicated IRQ line.

Therefore, a way is needed to increase speed over the CCI protocol and at the same time enable sI2C protocol slave devices to coexist with CCIe devices and be hot pluggable onto the CCIe bus.

Patent document WO00/42740 to Ericsson Telefon AB LM, 20 July 2000, discloses communication between devices over a single bus that supports two interface protocols. The second protocol is used after deactivating devices using the first protocol by providing address information in the first protocol that is not identifying any of the devices.

### SUMMARY

A device is provided comprising a shared bus, a first slave device, a second slave device, and/or a master device. The first slave device may be coupled to the shared bus and is configured to: (a) operate according to a first protocol mode including issuing in-band interrupt requests over the shared bus; (b) monitor the shared bus for an entry call indicating the shared bus is switching to a second protocol mode; and/or (c) upon detection of the entry call, disable the first slave device from making in-band interrupt requests over the shared bus.

The second slave device may be coupled to the shared bus and is configured to: (a) operate according to the second protocol mode including issuing side-band interrupt requests over an interrupt bus or in-band interrupt request over the shared bus; and/or (b) detect the entry call over the shared bus, the entry call transmitted according to the second protocol mode.

The master device may be coupled to the shared bus and configured to: (a) operate according to both the first protocol mode and the second protocol mode; (b) manage communications over the shared bus; (c) send the entry call over the shared bus indicating the shared bus is switching to a second protocol mode, where the entry call is sent according to the first protocol mode; (d) detect interrupt requests from slave devices according to both the first protocol mode and the second protocol mode; and/or (e) respond to the interrupt requests by granting a requesting slave device access to the shared bus.

The master device may be further configured to send an exit call over the shared bus indicating the shared bus is switching to the first protocol mode, where the exit call is sent according to both the second protocol mode and the first protocol mode.

For in-band interrupts, the second protocol defines an interrupt period within symbols transmitted over the shared bus during which one or more slave devices coupled to the shared bus can assert an interrupt request on a first line of the shared bus while a second line of the shared bus is used by the master device for a heartbeat transmission. In one implementation, the master device and second slave device may be configured to internally mask the first line of the shared bus during the interrupt period.

The master device may be configured to send an interrupt group inquiry call to all slave devices that operate according to the second protocol mode on the shared bus, where such interrupt group inquiry call provides slots in which any asserting slave devices can respond.

The second slave device may be further configured to receive data or commands over the shared bus according to the second protocol mode when the shared bus operates according to the second protocol mode.

The first slave device may be further configured to send an interrupt request over a dedicated interrupt line or bus separate from the shared bus while the shared bus operates according to the second protocol mode.

The device may also include an interrupt router slave device configured to receive interrupt requests from the first slave device over a dedicated line and send the received interrupt request over the dedicated interrupt line or bus according to the second protocol.

In one example, the shared bus may include a first line and a second line. When the shared bus operates according to the first protocol mode, the first line is used for data transmissions and the second line is used for a first clock signal. When the shared bus operates according to the second protocol mode, both the first line and second line are used for data transmissions while a second clock signal is embedded in symbol-to-symbol transitions with the data transmissions.

A multi-mode master device may include a first bus interface, a second bus interface, and a processing circuit. The first bus interface may serve to couple to other devices coupled to a shared control data bus, the data bus dynamically configured to operate in either a first protocol mode or a second protocol mode. The second bus interface may server to couple to a dedicated interrupt line used by at least a subset of the other devices and which issue interrupt requests over the dedicated interrupt line in the second protocol mode. The processing circuit may be configured to: (a) manage data transfers over a shared bus to which a plurality of other devices are coupled, wherein at least a first subset of the other devices operate according to a first protocol mode and a second subset of the other devices operate according to a second protocol mode incompatible with the first protocol mode; (b) dynamically switch operation of the shared bus between the first protocol and second protocol mode by: (1) sending an entry call over the shared bus indicating that the shared bus is to operate according to the second protocol mode, and/or (2) sending an exit call over the shared bus indicating that the shared bus is to operate according to the first protocol mode

The master device may be further configured to: (a) receive interrupt requests from the first subset of devices over the shared bus when the shared bus operates according to the first protocol mode; (b) receive interrupt requests from the second subset of devices over a dedicated interrupt bus when the shared bus operates according to the second protocol mode, and/or (c) receive interrupt requests from the first subset of devices over the dedicated interrupt bus when the shared bus operates according to the second protocol mode. In one implementation, no interrupt requests are received from the first subset of devices when the shared bus operates according to the second protocol mode.

The shared bus includes a first line and a second line. When the shared bus operates according to the first protocol mode, the first line used for data transmissions and the second line used for a first clock signal. When the shared bus operates according to the second protocol mode, both the first line and second line are used for data transmissions while a second clock signal is embedded in symbol-to-symbol transitions with the data transmissions.

The second protocol may define an interrupt period within symbols transmitted over the shared bus during which the second subset of the other devices can assert an interrupt request on a first line of the shared bus while a second line of the shared bus is used by the master device for a heartbeat transmission.

The master device may also be configured to internally mask the first line of the shared bus during the interrupt period.

In one implementation, in response to an in-band interrupt request while operating according to the second protocol mode, the master device may send an interrupt group inquiry call to all slave devices that operate according to the second protocol mode on the shared bus, where such interrupt group inquiry call provides slots in which any asserting slave devices can respond.

A slave device may comprise a bus interface and a processing circuit. The bus interface may serve to couple to a shared bus shared with a plurality of other devices, wherein at least a first subset of the other devices operate according to a first protocol mode and the slave device operates according to a second protocol mode. The processing circuit may be configured to:

(a) detect an entry call over the shared bus from a master device capable of operating according to the first protocol mode and the second protocol mode, the entry call indicating that the shared bus is to operate according to the second protocol mode; (b) send an interrupt request (IRQ) either in-band over the shared bus or side-band over a separate path to the master device; (c) communicate over the shared bus according to the second protocol mode; (d) monitor the shared bus for an exit call from the master device; and/or (c) disable the slave device from communicating over the shared bus upon detection of an exit call from the master device. The exit call may serve to indicate to the slave device that the shared bus is to operate according to the first protocol mode.

The shared bus may include a first line and a second line. When the shared bus operates according to the first protocol mode, the first line used for data transmissions and the second line used for a first clock signal. When the shared bus operates according to the second protocol mode, both the first line and second line are used for data transmissions while a second clock signal is embedded in symbol-to-symbol transitions with the data transmissions.

A slave device may include a bus interface and a processing circuit. The bus interface may serve to couple to a shared bus shared with a plurality of other devices, wherein the slave device operates according to a first protocol mode and at least a first subset of the other devices operate according to a second protocol mode. The processing circuit may serve to coupled to the bus interface and configured to: (a) detect an entry call over the shared bus from a master device capable of operating according to the first protocol mode and the second protocol mode, the entry call indicating that the shared bus is to operate according to the second protocol mode; and/or (b) disable the slave device from making in-band interrupt requests over the shared bus upon detection of the entry call.

The processing circuit is further configured to monitor the shared bus for an exit call from the master device, the exit call indicating that the shared bus is to operate according to the first protocol mode. The shared bus includes a first line and a second line, when the shared bus operates according to the first protocol mode, the first line used for data transmissions and the second line used for a first clock signal, and when the shared bus operates according to the second protocol mode, both the first line and second line are used for data transmissions while a second clock signal is embedded in symbol-to-symbol transitions with the data transmissions.

An interrupt request router slave device may include a first bus interface, a second bus interface, a third bus interface, and a processing circuit. The first bus interface may serve to couple to a shared control data bus, the data bus dynamically configured to operate in either a first protocol mode or a second protocol mode. The second bus interface may serve to couple to at least one subset of other slave device coupled to the shared bus, the subset of other slave devices operating according to the first protocol mode including in-band interrupt requests over the shared control data bus. The third bus interface may serve to couple to a dedicated interrupt line used in the second protocol mode to issue interrupt request to a master device that manages the shared bus. The processing circuit may be configured to: (a) receive an interrupt request over the second bus interface from a slave device within the first subset of slave devices; and/or (b) route the received interrupt request to the master device via the third bus interface.

### DRAWINGS

Various features, nature, and advantages may become apparent from the detailed description set forth below when taken in conjunction with the drawings in which like reference characters identify correspondingly throughout.
FIG. 1 is a block diagram illustrating a device having a baseband processor and an image sensor and implementing an image data bus and a multi-mode control data bus.
FIG. 2 is a block diagram illustrating the exemplary coexistence of I2C mode (e.g., legacy CCI or first mode) and CCIe mode (e.g., second mode) over a shared I2C bus (e.g., control data bus).
FIG. 3 is a block diagram illustrating the coexistence of I2C mode (i.e., legacy CCI) and CCIe mode over a common I2C bus including one or more sI2C slave devices, a multi-mode I2C and CCIe master device, one or more I2C slave devices, and one or more CCIe slave devices.
FIG. 4 illustrates how a clock may be embedded within data symbols, thereby allowing the use of both I2C wires (i.e., SDA line and SCL line) for data transmissions.
FIG. 5 is a block diagram illustrating an exemplary method for transcoding of data bits into transcoded symbols at a transmitter to embed a clock signal within the transcoded symbols.
FIG. 6 illustrates an exemplary conversion between transition numbers and sequential symbols.
FIG. 7 further illustrates an exemplary conversion between transition numbers and sequential symbols.
FIG. 8 illustrates a timing diagram of an I2C one byte write data operation.
FIG. 9 illustrates a timing diagram of a sI2C one byte write data operation wherein the most significant bit (MSB) is one (1), in accordance with the sI2C protocol.
FIG. 10 illustrates one example of the CCIe protocol.
FIG. 11 illustrates a diagram of an exemplary in-band interrupt signal (IRQ) sent by a sI2C-compatible slave device over a shared bus.
FIG. 12 illustrates an additional way of a sI2C slave device to issue an interrupt signal (IRQ) in a mixed protocol mode environment (e.g., where a shared bus can operate according to or dynamically switch between distinct communication protocols).
FIG. 13 illustrates an exemplary slave device comprising a transmitter and receiver circuit and a processing/logic circuit.
FIG. 14 illustrates a method for permitting a single-mode slave device to coexist on a shared data bus that switches between multiple communications modes.
FIG. 15 is a block diagram illustrating a system having a master device and a plurality of slave devices coupled to a shared control data bus and a shared interrupt bus/request.
FIG. 16 is a block diagram illustrating how the plurality of slave devices in FIG. 15 may be logically grouped for purposes of issuing interrupts.
FIG. 17 illustrates a first example of how IRQ signals may be arbitrated over the IRQ line or bus.
FIG. 18 illustrates a second example of how IRQ signals may be arbitrated over the IRQ line or bus.
FIG. 19 illustrates a shortest IRQ signal length that may be feasible in one example.
FIG. 20 is a block diagram illustrating an exemplary system in which the interrupt bus has been eliminated in favor of in-band interrupts.
FIG. 21 illustrates an exemplary timing diagram of an I2C one byte write data operation.
FIG. 22 illustrates an exemplary CCIe transmission in which data bits have be transcoded into twelve symbols for transmission over the SDA line and the SCL line.
FIG. 23 illustrates that a slave device should not be allowed to drive the control data bus to assert an IRQ while the master device is driving the control data bus in order to avoid collisions.
FIG. 24 illustrates a solution to avoid the potential for collisions of FIG. 23.
FIG. 25 illustrates that when the slave device sends the in-band IRQ on the SDA line, it may cause an erroneous clock to be detected.
FIG. 26 illustrates a solution to avoid the extra receiver clock pulse and synchronization loss illustrated in FIG. 25.
FIG. 27 illustrates one approach to implementing an in-band IRQ period while supporting both I2C mode and CCIe mode.
FIG. 28 illustrates the bit 19 (i.e., the 20^{th} bit when the bit count starts at the first bit being bit 0).
FIG. 29 illustrates that bit 19 may span the numbers 2221_2201_2002₃ to 2222_2222_2222₃, and that range of numbers may be subdivided into six subdivisions on the left side of FIG. 29.
FIG. 30 illustrates a range within the bit 19 number space that may be used to define the heartbeat.
FIG. 31 illustrates one example of how the heartbeat clock may be transmitted over the SDA line and SCL line of a shared control data bus.
FIG. 32 illustrates another example of a heartbeat clock may be transmitted over the SDA line and SCL line.
FIG. 33 illustrates one example of transition number to symbol number conversion.
FIG. 34 further expands on the symbol number to transition number conversion of FIG. 33.
FIG. 35 illustrates the condition during the in-band IRQ period in which the SDA line is masked.
FIG. 36 illustrates a side-effect of SDA Mask of FIGS. 32 and 35.
FIG. 37 illustrates that the heartbeat used for in-band IRQs occupies the number space 0x81BD6∼0x81BF0 (i.e., 27 addresses) within the ternary number space.
FIG. 38 illustrates an example of how bit 19 of the ternary number used in FIG. 37 for CCIe mode transmissions may be mapped.
FIG. 39 illustrates an alternative technique for implementing an in-band IRQ over the control data bus in CCIe mode.
FIG. 40 illustrates the condition during the in-band IRQ period of FIG. 39 in which the SDA line is masked.
FIG. 41 illustrates a side-effect of SDA Mask of FIGS. 39 and 40.
FIG. 42 illustrates that the heartbeat used for in-band IRQs occupies the number space 0x81BBB∼0x81BD5 (i.e., 27 addresses) within the ternary number space.
FIG. 43 illustrates how heartbeats may be transmitted when the master device is active mode and in a power savings mode.
FIG. 44 illustrates the combination synchronization word and heartbeat.
FIG. 45 illustrates the synchronization and heartbeat mapping within bit 19 of the CCIe protocol.
FIG. 46 illustrates an interrupt group inquiry general call within an exemplary CCIe protocol.
FIG. 47 illustrates the response to a group inquiry call. In this example, one or more response periods (i.e., inquiry words) may be defined on the SDA line by transferring the heartbeat to the SCL line and using an SDA mask.
FIG. 48 illustrates an exemplary "terminator word" that may be used to indicate the end of an IRQ group inquiry general call to make the length (i.e., word count) of the IRQ group inquiry general call flexible.
FIG. 49 illustrates one example of how a DDR clock read general call may be implemented
FIG. 50 illustrates an exemplary timing diagram for a global clock read word.
FIG. 51 illustrates the coexistence of I2C-compatible and CCIe-compatible devices on a shared bus within a device, where all master/slave devices use in-band interrupts over the shared bus.
FIG. 52 illustrates the coexistence of the master/slave devices of FIG. 51 over a shared bus
FIG. 53 illustrates a method operational by an I2C-compatible slave device that facilitates coexistence with CCIe-compatible slave devices over a shared bus, where all devices can use in-band interrupts over the shared bus.
FIG. 54 illustrates a method operational by a CCIe-compatible slave device that facilitates coexistence with I2C-compatible slave devices over a shared bus, where all devices can use in-band interrupts over the shared bus.
FIG. 55 illustrates an exemplary multi-mode master device.
FIG. 56 illustrates an exemplary slave device.
FIG. 57 illustrates an exemplary interrupt request router slave device.

### DETAILED DESCRIPTION

In the following description, specific details are given to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, structures, and techniques may not be shown in detail in order not to obscure the embodiments.

### Overview

A first feature provides a way to concurrently operate devices on a common/shared bus (e.g., a control data bus) according to multiple modes of operation. A plurality of slave devices may be coupled to a control data bus along with at least one master device that controls access to the control data bus. At least a first slave device may operate in a subset I2C (sI2C) protocol mode of operation and at least a second slave device may operate in a camera control interface extension (CCIe) mode of operation. Note that the use of sI2C mode (e.g., first mode) and CCIe mode (e.g., second mode) are exemplary modes and other operating modes (e.g., for different communication standards). The first slave device (e.g., sI2C-compatible slave device) operating in the sI2C protocol mode (e.g., first mode) may use the control data bus for interrupt requests or IRQs (e.g., referred to as in-band IRQs). In one example, such IRQs may be issued by the first slave device to indicate to the master device that it wishes to use the shared bus. By contrast, the second slave device (CCIe slave device) operates in CCIe mode (e.g., second mode) and uses a dedicated IRQ line for IRQs. In order to maintain the integrity of CCIe communications over the shared bus, the first slave device operating in the sI2C protocol mode disables its IRQ ability (e.g., does not issue in-band IRQs) upon a CCIe communication starting over the shared control data bus. That is, while the shared control data bus is used for CCIe communications, the first slave device operating in the sI2C protocol mode is prevented from sending interrupts over the shared bus.

Although the first slave device operating in the sI2C protocol mode does not understand CCIe communications, entry into the CCIe mode is initiated by the master device operating in the CCIe mode by sending an I2C protocol message over the shared control data bus announcing entry into the CCIe mode. The first slave device, operating in the sI2C protocol mode, understands this CCIe entry announcement and may desist from using the shared control data bus. Additionally, after sending the CCIe entry announcement over the shared control data bus (i.e., a message in the I2C protocol, which the first slave device operating in the sI2C protocol mode understands), the master device operating in the CCIe mode sends an exit/stop message (e.g., in the CCIe protocol and the I2C protocol) announcing an exit or stop from using the shared bus for CCIe communications. The first slave device operating in the sI2C protocol mode disables its own ability to send IRQs over the shared bus while the shared bus is being used for CCIe mode communications.

From the perspective of the first slave device operating in the sI2C protocol mode (e.g., the "sI2C slave device"), the first slave device receives an understandable I2C protocol message announcing entry into the CCIe mode and immediately disables itself from sending in-band IRQs over the shared control data bus. The first slave device may then receive one or more CCIe communications which the first slave device (which operates in in the sI2C protocol mode) does not understand and/or ignores. Subsequently, the first slave device receives an understandable I2C protocol message announcing an exit or end of the CCIe mode over the shared bus, and the first slave device enables itself to send in-band IRQs. This self-disabling and enabling to send in-band IRQs by sI2C slave devices prevents data collision over the shared control data bus from a sI2C slave device performing an in-band IRQ while a slave device in the CCIe mode is communicating in the CCIe protocol on the same shared control data bus.

A second feature provides for allowing hot plugging (also called hot swapping) of a sI2C slave device onto a CCIe-enabled bus (i.e., the shared control data bus). More generally, this second feature permits a slave device operating according to a first protocol mode (e.g., sI2C compatible communication protocol) to be dynamically plugged or added onto a bus operating according to a different second protocol mode (e.g., CCIe mode). By enabling sI2C slave devices to coexist on a CCIe enabled shared control data bus along with CCIe devices, the hot plug functionality is implemented for devices operating on a CCIe enabled shared bus.

A third feature provides adding an additional way for a sI2C slave device to issue an interrupt (IRQ). In addition to the sI2C slave device using the shared bus (e.g., control data bus) to issue in-band interrupts (IRQs), a separate line (e.g., dedicated IRQ bus or line for sI2C devices) may be utilized to couple the sI2C slave device to an IRQ router CCIe-compatible slave device. The IRQ router CCIe-compatible slave device receives the sI2C protocol interrupts (IRQs) and routes the sI2C protocol IRQ to a CCIe IRQ bus or line. In one example, the sI2C slave device may monitor the shared bus for an entry into the CCIe mode. However, instead of disabling the ability of the sI2C slave device to perform an IRQ, internal logic switches the output of the IRQ from the shared bus to the line coupling the sI2C slave device to the IRQ router CCIe-compatible slave. Subsequently, upon sensing an exit signal while the shared bus is operating according to CCIe mode, the sI2C slave device may again start using the shared bus for issuing in-band IRQs. Accordingly, both sI2C slave devices and slave devices in the CCIe mode can coexist on a CCIe enabled bus without data collisions. The IRQ router CCIe-compatible slave device routes all IRQs received from sI2C slave devices to a dedicated IRQ line or bus operating in the CCIe mode.

A fourth feature provides for sI2C-compatible devices and CCIe-devices to coexist over the same shared bus while both types of devices use in-band interrupt requests (IRQs).

### Exemplary Coexistence of Devices Using Different Communication Protocols Over A Shared Bus

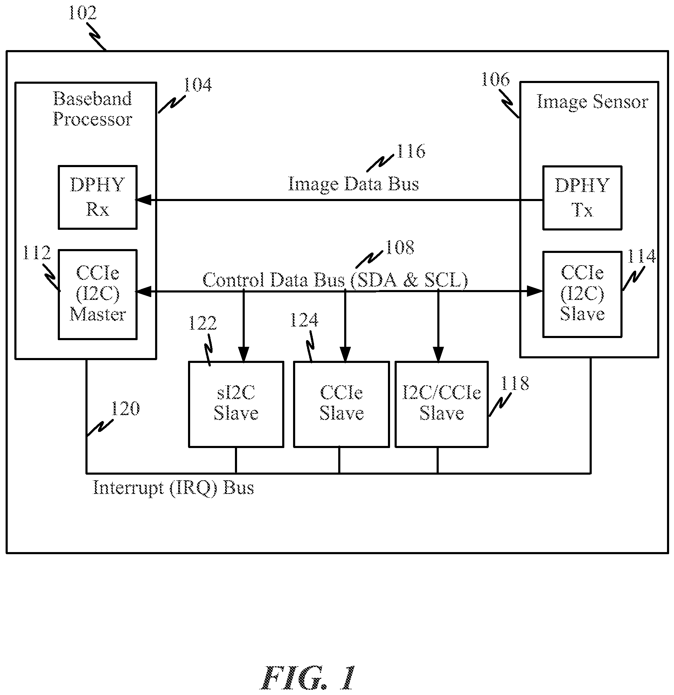

FIG. 1 is a block diagram illustrating a device 102 having a baseband processor 104 and an image sensor 106 and implementing an image data bus 116 and a multi-mode control data bus 108. While FIG. 1 illustrates the multi-mode control data bus 108 within a camera device, it should be clear that this control data bus 108 may be implemented in various different devices and/or systems. Image data may be sent from the image sensor 106 to the baseband processor 104 over an image data bus 116 (e.g., a high speed differential DPHY link). In one example, the control data bus 108 may be an I2C bus comprising two wires, a clock line (SCL) and a serial data line (SDA). The clock line SCL may be used to synchronize all data transfers over the I2C bus (control data bus 108). The data line SDA and clock line SCL are coupled to all devices 112, 114, 118, 122, and 124 on the I2C bus (control data bus 108). Some or all of the devices 112, 114, and 118 may also be coupled with a one line interrupt (IRQ) bus 120. The slave devices 114, 118, 122, and 124 may have different protocol modes (e.g., may operate using different protocols). For example, a first slave device 122 may be a sI2C-compatible slave device (e.g., communicates according to the sI2C protocol), a second slave device 124 may be a CCIe-compatible slave device (e.g., communicates according to the CCIe protocol), and a third slave device 118 may be capable of multi-mode operation (e.g., communicates according to the I2C/sI2C and CCIe protocols). In one example, control data may be exchanged between the baseband processor 104 and the image sensor 106 as well as the slave devices 118, 122, 124 via the shared control data bus 108. The standard clock (SCL) speed for I2C communications/signaling is up to 100KHz. The standard clock SCL speed in I2C fast mode is up to 400KHz, and in I2C fast mode plus (Fm+) it is up to 1 MHz. These operating modes over an I2C bus may be referred to as a camera control interface (CCI) mode when used for camera applications.

According to one aspect, an improved mode of operation (i.e., greater than 1 MHz) may be implemented over the multi-mode control data bus 108 to support camera operation. This improved mode of operation over an I2C bus may be referred to as a camera control interface extension (CCIe) mode when used for camera applications. In this example, the baseband processor 104 includes a master device/node 112 and the image sensor 106 includes a slave device/node 114, both the master device 112 and slave device 114 may operate according to the camera control interface extension (CCIe) mode over the control data bus 108 without affecting the proper operation of other legacy I2C devices coupled to the control data bus 108. According to one aspect, this improved mode of operation over the control data bus 108 may be implemented without any bridge device between CCIe devices and any legacy I2C slave devices. According to one aspect, legacy I2C devices may operate in a first mode having a first clock, first bus speed, and/or first signal protocol, while CCIe-capable devices may operate in a second mode having a second clock, second bus speed, and/or second protocol. The first clock, first bus speed, and/or first signal protocol may be distinct from the second clock, second bus speed, and/or second protocol. For example, the second clock and/or second bus speed may be faster or have greater speed than the first clock and/or first bus speed, respectively.

According to one aspect, when all slave devices 118 and 124 are CCIe-capable devices there is no need to switch between the first mode and second mode of operation. That is, all signaling and/or communications over the control data bus 108 may be performed according to the second mode (e.g., at a second clock, second bus speed, and/or a second protocol). For example, because the second mode may provide a greater bit rate than the first rate of the first mode, there is no need to switch back and forth between the first mode and second mode. In fact, because legacy devices compatible with the first mode need not be accommodated, a third mode of operation may be implemented which provides a higher/greater bit rate than the second mode.

According to another aspect, at least the first slave device 122 is sI2C compatible to allow the first slave device 122 to be hot pluggable. The sI2C slave device 122 disables its own ability to send in-band IRQs over the control data bus 108 whenever any other device on the control data bus 108 sends a CCIe entry message (in I2C protocol format) over the control data bus 108. The IRQ disabled slave device 122 may be totally disabled or partially disabled. When totally disabled, the sI2C slave device 122 sends no in-band IRQs over the control data bus 108. In some implementations, when partially disabled, rather than sending an in-band IRQ over the control data bus 108, the sI2C slave device 122 may send side-band IRQs over a connection to an IRQ router CCIe slave device that may serve to route side-band IRQs from the sI2C slave device 122 to a dedicated IRQ bus or line.

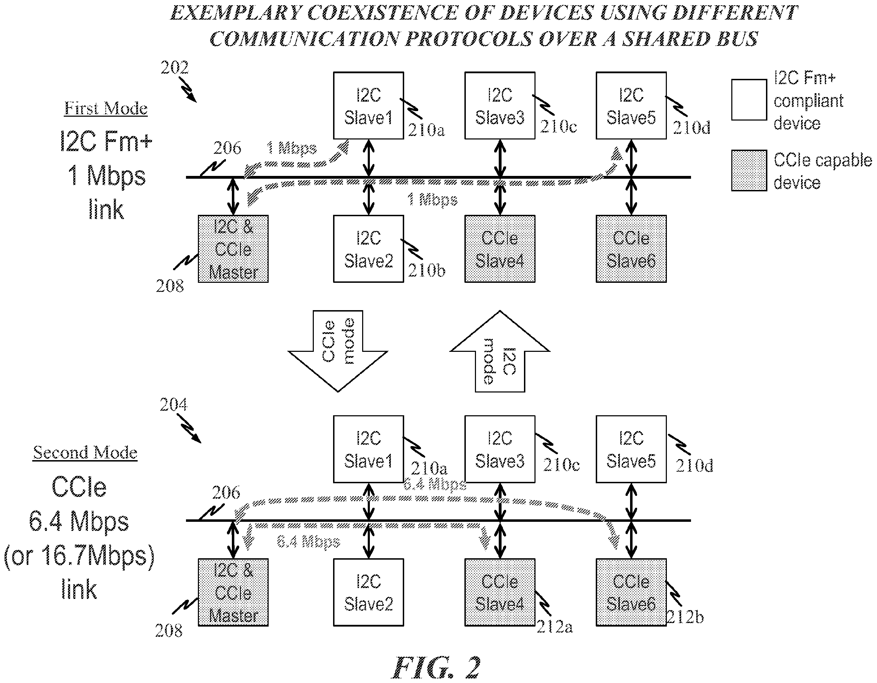

FIG. 2 is a block diagram illustrating the exemplary coexistence of I2C mode 202 (e.g., legacy CCI or first mode) and CCIe mode 204 (e.g., second mode) over a shared I2C bus 206 (e.g., control data bus). A master device 208 which manages access to the bus 206 may be capable of operating according to the I2C mode (e.g., first mode) and the CCIe mode (e.g., second mode).

In I2C mode 202, a CCIe-capable master device 208 may support full CCI or I2C Fm+ capability, while a CCIe-capable slave device 210 may not support full I2C capability. In I2C mode, the CCIe master 208 communicates with I2C slaves 210a, 210b, 210c, 210d on the bus 206 using CCI or I2C Fm+ protocol at a maximum of 1Mbps link rate.

Like the CCI standard operation, CCIe operation 204 only supports a single master device operation (e.g., multiple masters are not supported). In CCIe mode 204 (e.g., the bus 206 is being used for CCIe protocol communications), the CCIe master device 208 communicates with only CCIe-capable slave devices 212a and 212b on the control data bus 206, at either 6.4 Mbps or 16.7 Mbps for example.

At a start-up, by default, the bus 206 may operate in legacy I2C mode 202 (e.g., the bus 206 is being used for CCIe protocol communications). When CCIe master 208 wants to access to a CCIe slave 212a and/or 212b, it switches from I2C mode 202 to CCIe mode 204 by means of an I2C general call.

In CCIe mode 204, when CCIe master 208 wants to access the I2C slaves 210a, 210b, 210c, and/or 210d, it switches from CCIe mode 204 back to I2C mode 202 by means of a combination of CCIe "exit" protocol and an I2C general call.

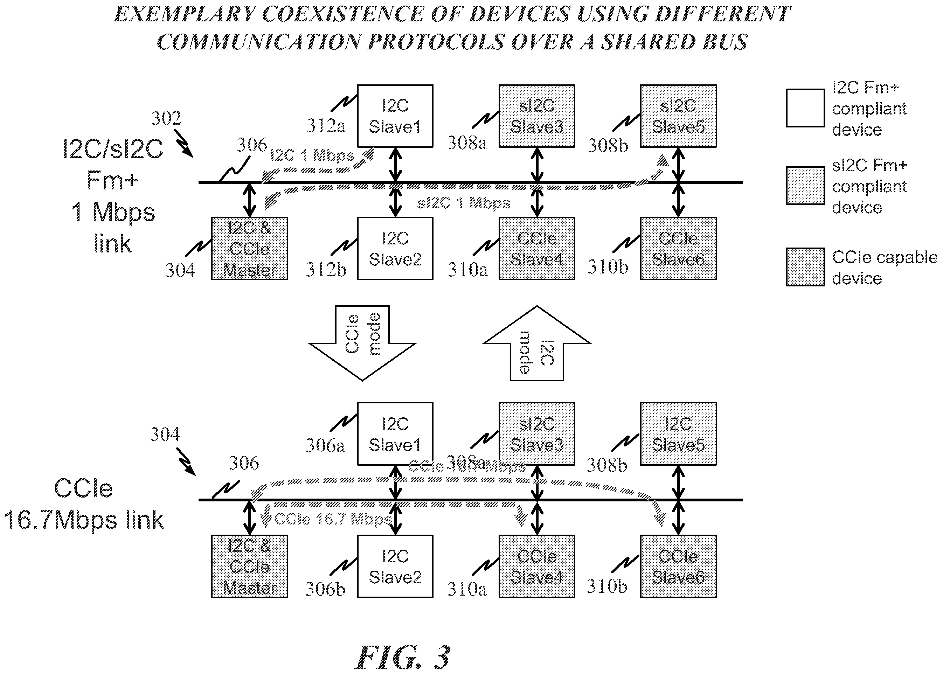

FIG. 3 is a block diagram illustrating the coexistence of I2C mode 302 (i.e., legacy CCI) and CCIe mode 304 over a common I2C bus 306 including one or more sI2C slave devices 308a and 308b, a multi-mode I2C and CCIe master device 304, one or more I2C slave devices 312a and 312b, and one or more CCIe slave devices 310a and 310b. The various features and operations described with respect to FIG. 2 may be applicable with respect to FIG. 3 and is not repeated in the interest of brevity. In one aspect, the sI2C slave devices 308a and 308b are only capable of sI2C protocol mode operation (wherein most, if not all, I2C communications are understandable by the sI2C slave devices 308a and 308b, and few, if any, CCIe communications are understandable by the sI2C slave devices 308a and 308b). That is, the sI2C slave devices 308a and 308b operate in sI2C mode while CCIe slave devices 310a and 310b operate in CCIe mode. The sI2C slave devices 308a and 308b disable their own ability to send IRQs over the control data bus 306 whenever any device sends a CCIe entry message (in I2C protocol format) over the control data bus 306.

### Exemplary Communication Protocol and Encoding Method for Increasing Bit Rates Over Shared Bus

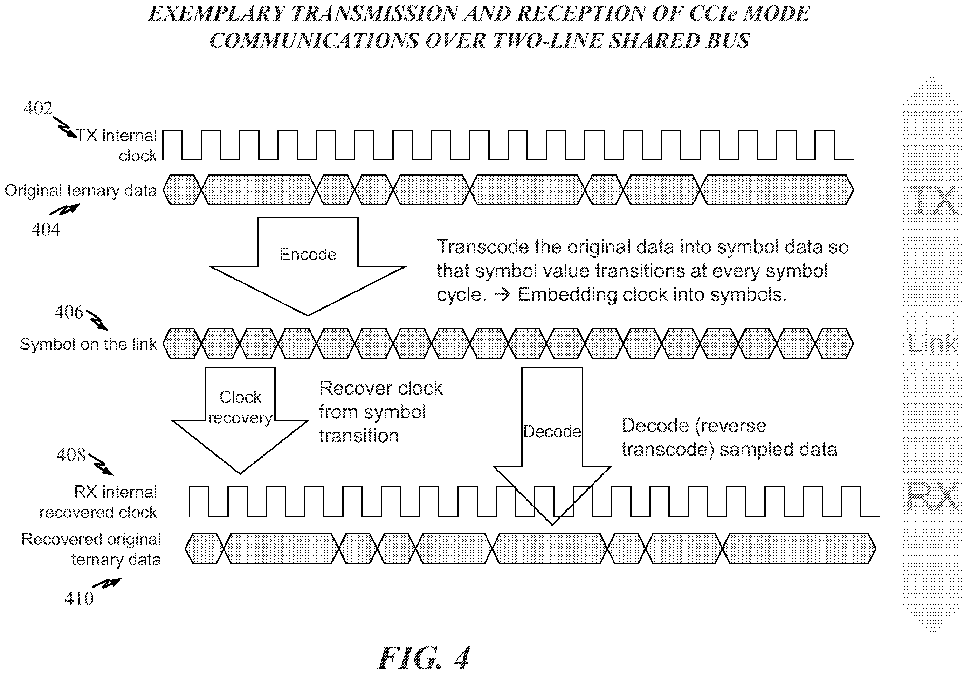

FIG. 4 illustrates how a clock may be embedded within data symbols, thereby allowing the use of both I2C wires (i.e., SDA line and SCL line) for data transmissions. In one example, this embedding of the clock may be achieved by transition clock transcoding. For instance, the data 404 to be transmitted over the physical link (wires) is transcoded so that it changes state at every symbol cycle of the transmitted symbols 406. Consequently, the original clock 402 is embedded in the change of symbol states at every symbol cycle. A receiver recovers clock information 408 from the state transition at each symbol (in the transmitted symbols 406) and then reverses the transcoding of the transmitted symbols 406 to obtain the original data 410. This allows both wires of the I2C bus (control data bus 108 in FIG. 1, SDA line and SCL line) to be used to send data information. Additionally, the symbol rate can be doubled since it is no longer necessary to have a setup and hold time between clock and data signals.

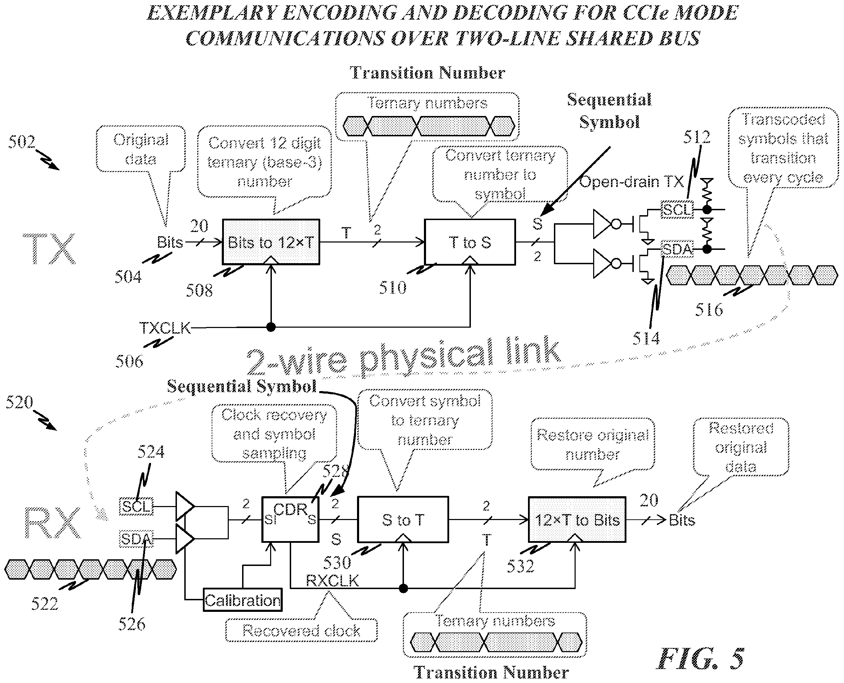

FIG. 5 is a block diagram illustrating an exemplary method for transcoding of data bits into transcoded symbols at a transmitter to embed a clock signal within the transcoded symbols. At the transmitter 502, a sequence of data bits 504 are converted into a ternary (base 3) number (i.e., a "transition number"), and the ternary numbers are then converted into (sequential) symbols which are transmitted over the clock line SCL 512 and the data line SDA 514.

In one example, an original 20 bits of binary data is input into a bit-to-transition number converter block 508 to be converted to a 12-digit ternary number. Each digit of a 12-digit ternary number represents a "transition number". Two consecutive transition numbers may have be the same numbers (i.e., consecutive digits of the ternary number may be the same). Each transition number is converted into a sequential symbol at a transition-to-symbol block 510 such that no two consecutive sequential symbols have the same values. Because a transition is guaranteed at every sequential symbol, such sequential symbol transition may serve to embed a clock signal. Each sequential symbol 516 is then sent over a two wire physical link (e.g., I2C bus comprising a SCL line 512 and a SDA line 514).

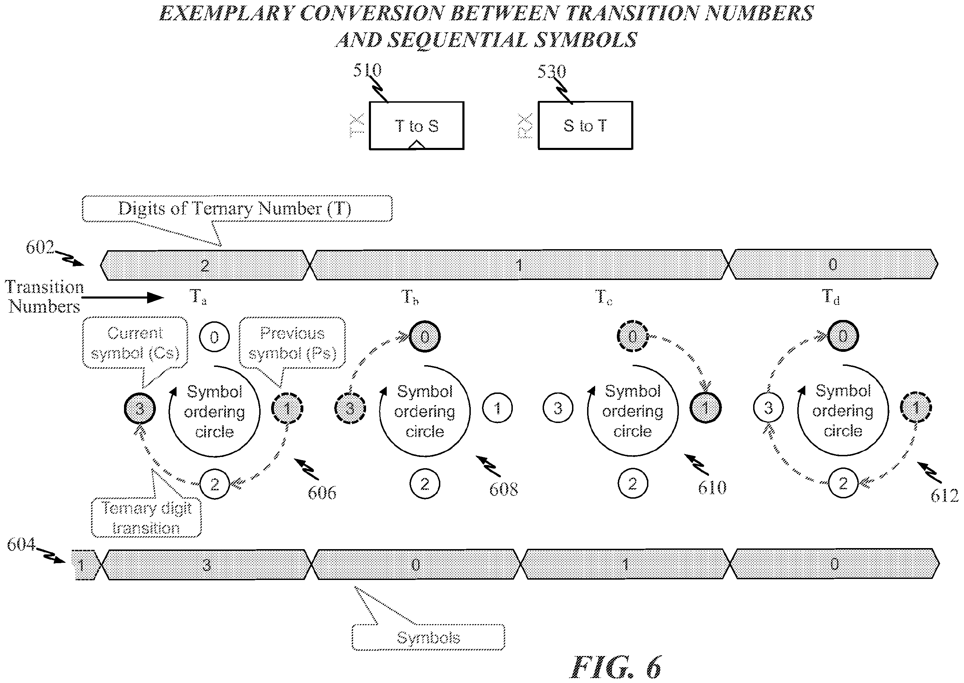

FIG. 6 illustrates an exemplary conversion between transition numbers 602 and sequential symbols 604. An individual digit of ternary number, base-3 number, also referred to as a transition number, can have one of the three (3) possible digits or states, 0, 1, or 2. While the same digit may appear in two consecutive digits of the ternary number, no two consecutive sequential symbols have the same value. The conversion between a transition number and a sequential symbol guarantees that the sequential symbol always changes (from sequential symbol to sequential symbol) even if consecutive transition numbers are the same.

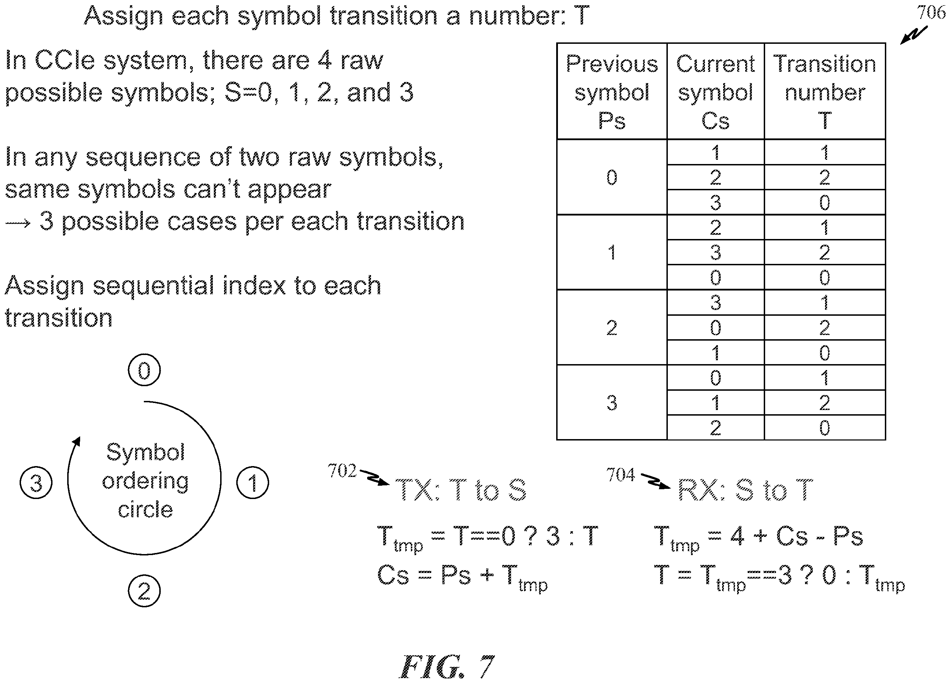

FIG. 7 further illustrates an exemplary conversion between transition numbers and sequential symbols. On the transmitter side (TX: T to S) 702, a transition number (T) may be converted to a sequential symbol (S). For instance, a current sequential symbol (Cs) may be obtained based on a previous sequential symbol (Ps) and a temporary transition number (Tₜₘₚ) that is a function of a current transition number (T). The temporary transition number (Tₜₘₚ) may be obtained by comparing the current transition number T to zero and when T = zero, the temporary transition number (Tₜₘₚ) becomes equal to 3, else (when T not equal zero) Tₜₘₚ becomes equal to T (i.e., Tₜₘₚ = T = 0 ? 3 : T). The current sequential symbol may be obtained as a sum of the current sequential symbol (Cₛ) plus the previous sequential symbol (Pₛ) plus the temporary transition number (Tₜₘₚ) (i.e., Cₛ = Pₛ + Tₜₘₚ).

On the receiver side (RX: S to T) 704 the conversion operation is reversed to obtain a transition number from a current sequential symbol (Cs) and a previous sequential symbol (Ps). A temporary transition number (Tₜₘₚ) may be obtained as the sum of the current sequential symbol (Cs) plus 4 minus the previous symbol (Ps) (i.e., Tₜₘₚ = Cₛ + 4 - Pₛ). The current transition number (T) is equal to the temporary transition number (Tₜₘₚ), but the temporary transition number (Tₜₘₚ) is compared to three (3) and when Tₜₘₚ = 3, the temporary transition number (Tₜₘₚ) becomes equal to zero (0), else (when Tₜₘₚ not equal 3) T becomes equal to Tₜₘₚ (i.e., T = Tₜₘₚ = 3 ? 0 : T).

A table 706 illustrates the conversion between transition numbers and sequential symbols.

Referring again to FIG. 6, an example of the conversion between transition numbers and sequential symbols is illustrated therein. For example, in a first cycle 606, the current transition number (Ta) is 2, so Tₜₘₚ is also 2, and with the previous sequential symbol Pₛ being 1, the new current sequential symbol Cₛ is now 3.

In a second cycle 608, the transition number (Tb) is 1. Since the transition number (Tb) is not equal to zero, the temporary transition number Tₜₘₚ is equal to the transition number (Tb) value of 1. The current sequential symbol (Cs) is obtained by adding the previous sequential symbol (Ps) value of 3 to the temporary transition number Tₜₘₚ of 1. Since the result of the addition operation equals 4, which is greater than 3, the rolled over number 0 becomes the current sequential symbol (Cs).

In a third cycle 610, the current transition number (T) is 1. Because the transition number T is 1, the temporary transition number Tₜₘₚ is also 1. The current sequential symbol (Cs) is obtained by adding the previous sequential symbol (Ps) value of 0 to the temporary transition number Tₜₘₚ of 1. Since the result of the addition operation equals 1, which is not greater than 3, the current symbol (Cs) is equal to 1.

In a fourth cycle 612, current transition number (T) is 0. Because the transition number T is 0, the temporary transition number Tₜₘₚ is 3.

The current sequential symbol (Cs) is obtained by adding the previous sequential symbol (Ps) value of 1 to the temporary transition number Tₜₘₚ of 3. Since the result of the addition operation is 4, which is greater than 3, the rolled over number 0 becomes the current sequential symbol (Cs).

Note that even if two consecutive ternary digits Tb and Tc have the same numbers, this conversion guarantees that two consecutive sequential symbols have different state values. Because of this, the guaranteed transition in the sequential symbols 604 may serve to embed a clock signal, thereby freeing the clock line SCL in an I2C bus for data transmissions.

Referring again to FIG. 5, at the receiver 520 the process is reversed to convert the transcoded symbols back to bits and, in the process, a clock signal is extracted from the symbol transition. The receiver 520 receives a sequence of sequential symbols 522 over the two wire physical link (e.g., I2C bus comprising a SCL line 524 and a SDA line 526). The received sequential symbols 522 are input into a clock-data recovery (CDR) block 528 to recover a clock timing and sample the transcoded symbols (S). A symbol-to-transition number converter block 530 then converts the transcoded (sequential) symbols to a transition number, i.e., one ternary digit number. Then, a transition number-to-bits converter 532 converts 12 transition numbers to restore 20 bits of original data from the 12 digit ternary number.

This technique illustrated herein may be used to increase the link rate of a control bus 108 (FIG. 1) beyond what the I2C standard bus provides and is referred hereto as CCIe mode. In one example, a master node/device and/or a slave node/device coupled to the control data bus 108 may implement transmitters and/or receivers that embed a clock signal within symbol transmissions (as illustrated in FIGS. 4 and 5) in order to achieve higher bit rates over the same control data bus than is possible using a standard I2C bus.

### Exemplary Method for Supporting I2C, sI2C, and CCIe Devices On A Shared Bus

One feature provides for implementing a shared bus that supports both I2C devices and CCIe devices at the same time. As noted in FIGS. 1-7, it is possible to embed a clock signal (SCL line for I2C bus) within symbol transitions, thereby allowing the use of a clock line (SCL line) for data transmissions. This may permit, for example, a CCIe mode of operation with higher bit rates than typical I2C mode buses.

However, one challenge is to permit the operation of both legacy I2C-compatible devices and CCIe-compatible devices on the same shared bus at the same time. Some details about the requirements of the I2C protocol and CCIe protocol may be useful in formulating a way to support devices operating according to these modes.

The I2C standard requires that all I2C compatible slave devices must reset their bus logic on receipt of a START condition (e.g., indicated by a high-to-low transition on the SDA line while the SCL line is high on the shared bus).

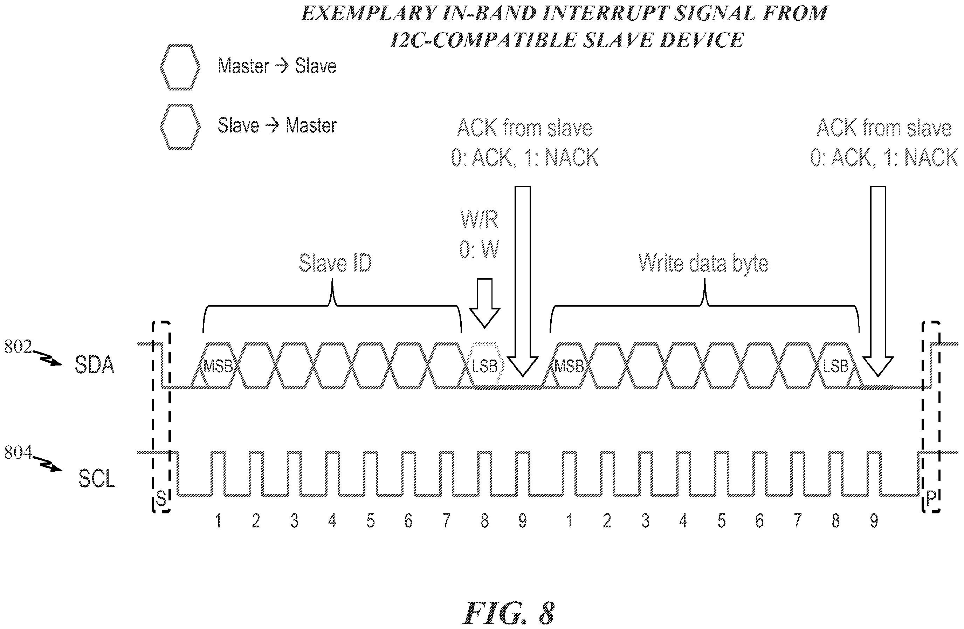

FIG. 8 illustrates a timing diagram of an I2C one byte write data operation. The I2C master device sends a 7-bit slave ID in the SDA line 802 to indicate which slave device on the I2C bus the master device wishes to access, then one bit to indicate a write operation. Only the slave device whose ID matches with the 7-bit slave ID can cause intended actions. In order for an I2C slave device to detect its own ID, the master device has to send at least 8-bits on the SDA line (or 8 clock pulse on the SCL line 804). Therefore, this can be exploited when operating the shared bus in CCIe mode to prevent legacy I2C slave devices from reacting to any CCIe operations over the shared bus. In particular, if the CCIe protocol sends less than 7-bits between start (S) indicators, then the legacy I2C slave devices (which expect at least 7-bits) treat this as an incomplete slave identifier (SID) and resets its logic.

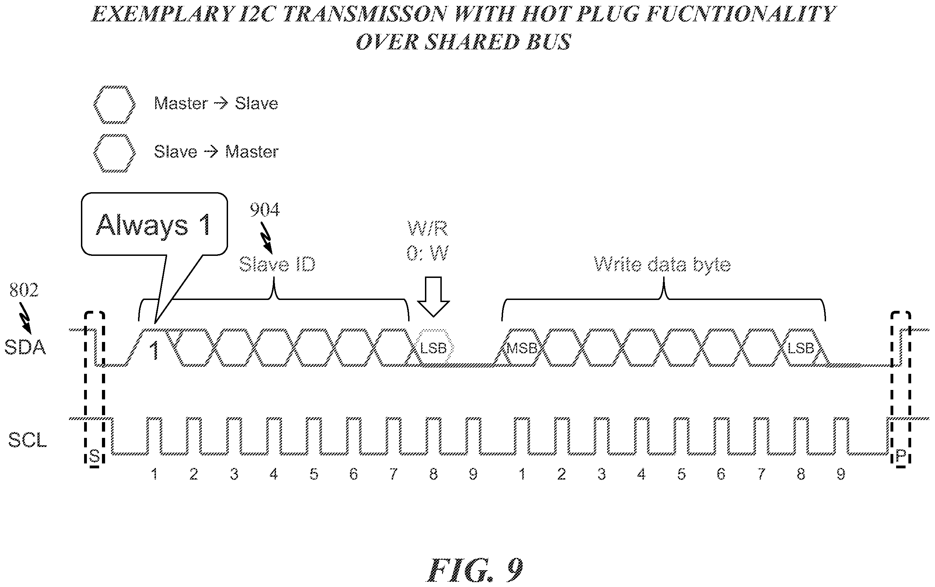

FIG. 9 illustrates a timing diagram of a sI2C one byte write data operation wherein the most significant bit (MSB) is one (1), in accordance with the sI2C protocol. In this example, the I2C transmission over the SDA line 902 may include a one (1) in the most significant bit of the slave identifier (SID) 904. The MSB being one (1) allows for hot plugging or swapping of sI2C slave devices because a master device can easily know a newly added slave device is a slave device by merely examining the MSB.

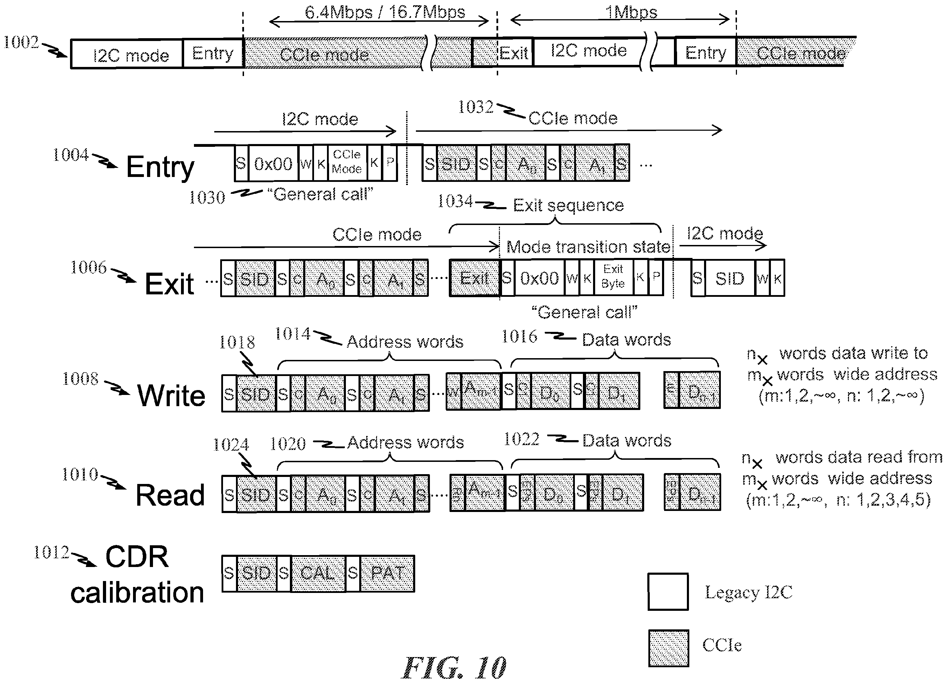

FIG. 10 illustrates one example of the CCIe protocol. The blocks indicate CCIe specific timing and signaling as well as legacy I2C timing and signaling.As illustrated in 1002, there are protocols to enter into CCIe mode, and exit from CCIe mode. Once entry to CCIe mode is executed, the shared bus mode stays in CCIe mode until an exit from CCIe mode is executed. In this example, entry into CCIe mode is accomplished by a CCIe mode entry sequence 1004 as part of a general call during I2C mode. To announce entry into CCIe mode to I2C-compatible devices, the master device operating in CCIe mode may send an I2C general call 1030 over the shared bus announcing entry into the CCIe mode 1032. Similarly, to announce the exit 1006 from CCIe mode the master device may send a CCIe mode exit sequence 1034 as part of a general call. These entry/exit sequences 1030 and 1034 within a general call are used by CCIe-enabled devices to switch from I2C mode to CCIe mode and from CCIe mode to I2C mode, respectively. These general calls 1030 and 1034 also allow I2C-only slave devices to know when the shared bus is switching to CCIe mode and withhold issuing interrupts or otherwise transmitting over the shared bus.

A write data protocol 1008 can send an arbitrary number of address words 1014 and data words 1016 to a slave node/device identified by a Slave Identifier (SID) 1018. Similarly, a read data protocol 1010 can read a plurality of data words 1022 from a slave node/device identified by a Slave Identifier (SID), while the number of address words 1020 is still arbitrary.

One last special protocol is the clock data recovery (CDR) calibration 1012, that may be used by the CCIe master device to cause an indicated CCIe device (including the master device itself) to start a sequence to calibrate its clock-data recovery logic to maximize the link rate. For this purpose, the CCIe master device also has to have its own slave ID.

Any CCIe words may be sent in 12-symbols that carry 19-bits information. Except for the CDR calibration protocol 1012, 16 bits of the 19-bits may be data information while 3 bits of the 19-bits are used for other information such as control information.

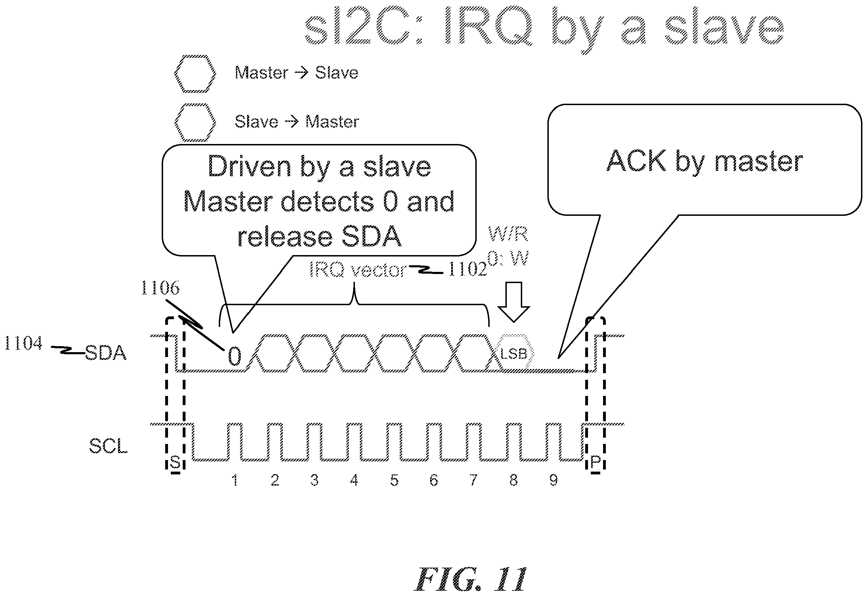

FIG. 11 illustrates a diagram of an exemplary in-band interrupt signal (IRQ) 1102 sent by a sI2C-compatible slave device over a shared bus. The slave device pulls down or grounds 1106 the SDA line 1104 of a shared bus which a master device detects and then releases the SDA line 1104 to the requesting slave device. The slave device is then able to transmit its IRQ signal 1102. Upon termination of the IRQ signal, the master device may acknowledge receipt of the interrupt signal by holding the SDA line 1104 low for a period of time.

Referring again to FIG. 10, like a I2C-compatible slave device, a sI2C slave device may receive an understandable I2C protocol message 1030 announcing entry into the CCIe mode and immediately disables itself from sending in-band IRQs (i.e., interrupt signals over the shared bus). The sI2C slave device may then receive a CCIe communication 1032 which the sI2C slave device does not understand and ignores. Lastly, the sI2C slave device may receive an understandable I2C protocol message 1034 announcing an exit from the CCIe mode, and the sI2C slave device enables itself for sending in-band IRQs again

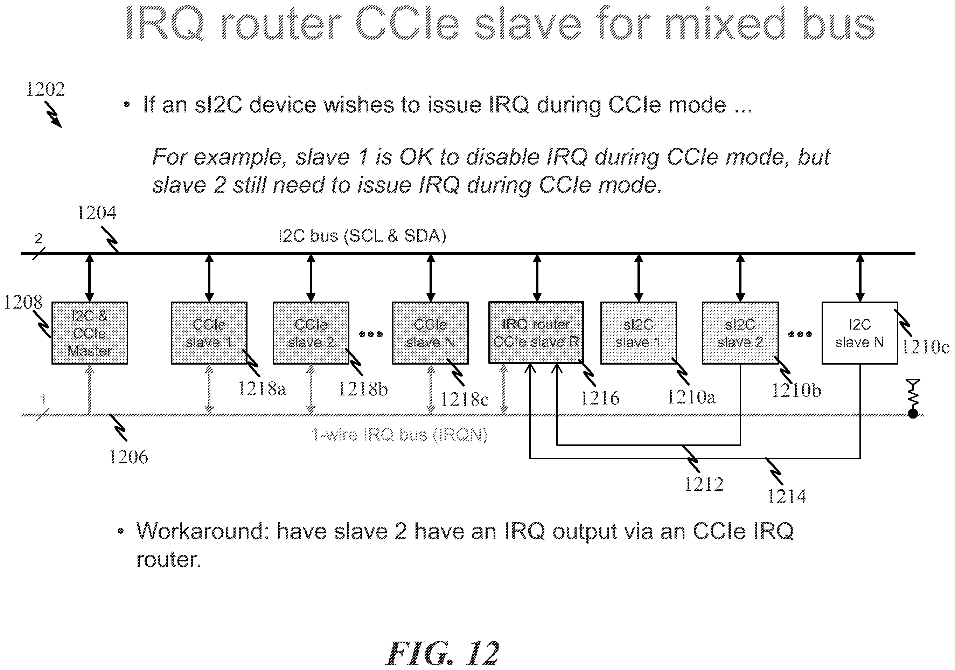

FIG. 12 illustrates an additional way of a sI2C slave device to issue an interrupt signal (IRQ) in a mixed protocol mode environment (e.g., where a shared bus can operate according to or dynamically switch between distinct communication protocols). As previously noted, while a shared bus 1204 is managed by a master device 1208 in CCIe mode, sI2C-compatible slave devices 1210a and 1210b may desist from sending or issuing in-band interrupt signals over the shared bus 1204. However, in this alternative approach, these sI2C-compatible slave devices 1210a and 1210b may be coupled to an IRQ router CCIe slave device 1216 via one or more separate lines 1212 and 1214. When the shared bus 1204 is operating in CCIe mode, the sI2C-compatible slave devices 1210 may be configured to send their interrupt signals to the IRQ router CCIe slave device 1216 instead. The IRQ router CCIe slave device 1216 receives the sI2C protocol interrupt signals and routes the interrupt to a CCIe IRQ bus or line 1206 so that they may be processed by the master device 1208. The master device 1208 may then decide whether to switch the shared bus 1204 to I2C mode and grant the requesting I2C-compatible slave device its interrupt request.

Consequently, while the shared bus 1204 may be operating in CCIe mode, instead of the sI2C-compatible slave devices 1210 disabling their ability to issue an interrupt signal (e.g., requesting a service or use of the shared bus 1204), internal logic within each sI2C-compatible slave device 1210 may switch the output of the interrupt signal from the shared bus 1204 to the separate line 1212 or 1214 coupling the sI2C slave devices 1210 to the IRQ router CCIe slave device 1216. Also, upon detecting an exit code from the CCIe mode over the shared bus 1204, the sI2C-compatible slave devices 1210 switch back to using the shared bus 1204 for issuing interrupt signals. Accordingly, the sI2C-compatible slave devices 1210 and the CCIe-compatible slave devices 1218 can coexist while the shared bus 1204 operates in CCIe mode without data collisions.

### Exemplary Single-Mode Slave Device Operating Over A Multi-Mode Shared Control Data Bus

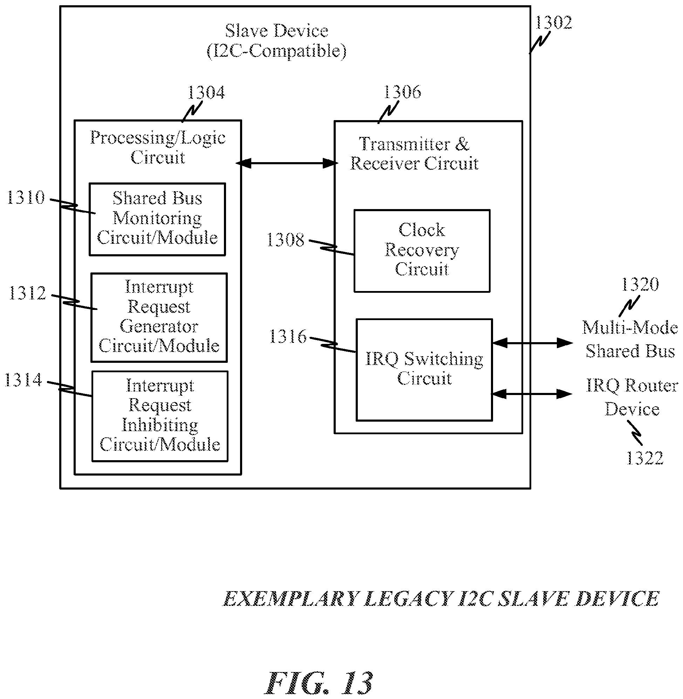

FIG. 13 illustrates an exemplary slave device 1302 comprising a transmitter and receiver circuit 1306 and a processing/logic circuit 1304. The transmitter and receiver circuit 1306 may be coupled to the processing circuit 1304 to transmit data to and from the processing/logic circuit 1304 and one or more buses. The transmitter and receiver circuit 1306 may be coupled, for example, to a multi-mode shared bus 1320 that may include a first line and a second line. In a first mode of operation (e.g., I2C mode), the transmitter and receiver circuit 1306 may be configured to use the first line for data transmissions and the second line for a first clock signal. In a second mode of operation (e.g., CCIe mode), the transmitter and receiver circuit 1306 may be configured to use both the first line and the second line for data transmissions while embedding a second clock signal within symbol transitions of the data transmissions. The multi-mode shared bus may be an I2C-compatible bus and/or a CCIe-compatible bus. In a third mode of operation, the transmitter and receiver circuit 1306 operate similar to the second mode but without concurrent support for first mode-only legacy devices (e.g., I2C-compatible legacy devices).

The slave device 1302 may coexist with a set of other devices coupled to the multi-mode shared bus 1320 but operates only in the first mode while constantly monitoring at least the first line and/or second line during both the first mode and second mode of operations. In the first mode of operation, the slave device 1302 may transmits data to another device over the first line of the shared bus 1320. In the second mode of operation, the first line and second line of the shared bus 1320 may both transmit data according to the second mode for other devices that support the second mode.

In various examples, the devices coupled to the shared bus 1320 may support multiple different modes of operation (e.g., distinct communication protocols). For example, a first slave device may be a sI2C-compatible slave device, a second slave device may be a CCIe-compatible slave device, and a third slave device may be capable of multiple modes (e.g., I2C-compatible and CCIe-compatible modes).

The first mode of operation may implement a first protocol for data transmissions over the shared bus 1320 and the second mode implements a second protocol for data transmissions over the shared bus 1320.

In one example, the slave device 1302 may be a sI2C-compatible slave device. The processing circuit 1304 may include a shared bus monitoring circuit/module 1310 that, when the shared bus 1320 operates according to the first mode, serves to monitor for communications over the shared bus 1320. When the shared bus 1320 operates according to the second mode, the shared bus monitoring circuit/module 1310 serves to monitor for an exit call/command indicating that the bus is switching back to first mode. An interrupt request generator circuit/module 1312 may serve to generate an interrupt signal. An interrupt request inhibiting circuit/module 1314 may serve to ascertain when the slave device 1302 should withhold from generating and/or issuing an interrupt request. For instance, if the shared bus monitoring circuit/module 1310 detects that the shared bus 1320 is operating according to a second mode, the interrupt request inhibiting circuit/module 1314 may prevent interrupts from being issued over the shared bus 1322.

The transmitter and receiver circuit 1306 may include a clock recover circuit 1308 (to recover a clock signal from the transmitted data). In an optional/alternative approach, an IRQ switching circuit 1316 may allow the slave device 1302 to issue interrupt request to an interrupt router device 1322 over a separate line when the shared bus 1320 operates in the second mode.

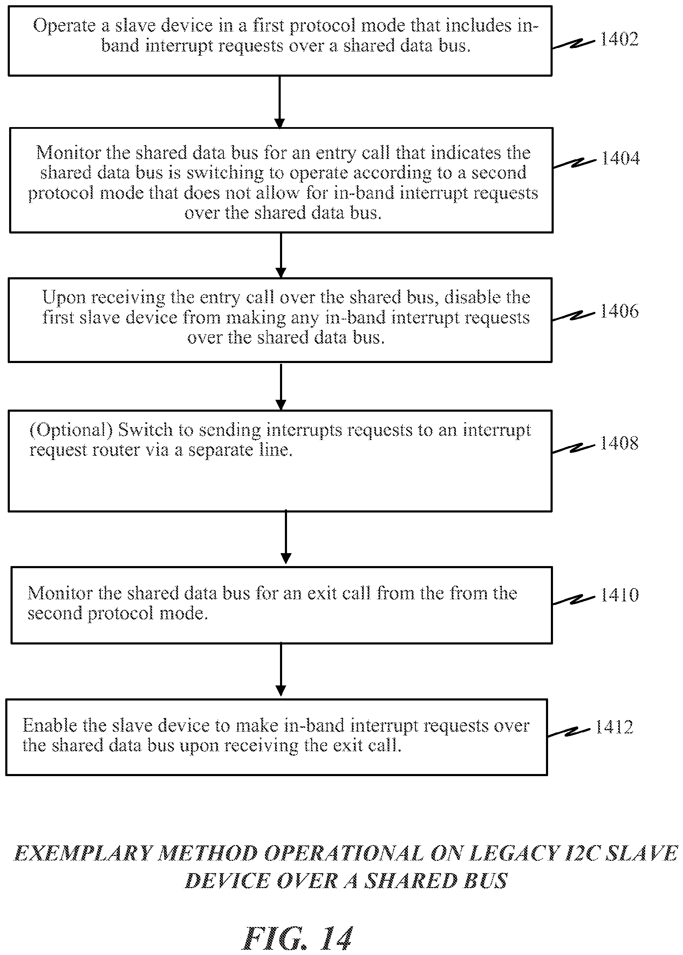

FIG. 14 illustrates a method for permitting a single-mode slave device to coexist on a shared data bus that switches between multiple communications modes. The slave device may operate in a first protocol mode that includes in-band interrupt requests over the shared data bus 1402. The slave device may then monitor the shared data bus for an entry call indicating the shared data bus is switching to operate according to a second protocol mode that does not allow for in-band interrupt requests over the shared data bus 1404. Upon detecting the entry call, the slave device disables issuing any in-band interrupt requests over the shared data bus 1406. Optionally, the slave device may switch to sending interrupt requests to an interrupt request router via a separate line 1408. The slave device may monitor the shared data bus for an exit call from the second protocol mode 1410.Upon receiving the exit call, the slave device enables making in-band interrupt requests over the shared data bus 1412.

### Coexistent of I2C Slave Devices and Camera Control Interface Extension Devices on a Shared Control Data Bus with In-Band IRQ

The previous discussion provided for routing IRQs between I2C-compatible slave devices and CCIe-compatible devices using a dedicated interrupt bus. The following discussion provides for I2C-compatible devices and CCIe-compatible devices to both use in-band interrupts over the shared control data bus.

A first feature provides for eliminating dedicated interrupt lines and pins for all devices coupled a shared bus. Instead, all devices use the shared control data bus to issue interrupt requests, thereby allowing slave devices coupled to the shared control data bus to transmit data over the shared control data bus.

A second feature provides for defining an interrupt period within the symbols transmitted over the shared control data bus during which one or more slave devices coupled to the bus can assert an interrupt request on a first line of the bus while a second line of the bus is used by the master device for a heartbeat transmission, where such heartbeat transmission serves to synchronize the one or more slave devices.

A third feature provides for internally masking the first line of the shared bus, at a receiver device during the interrupt period, for purposes of decoding the transcoded data bits received over the shared bus. For instance, the master device and slave devices may mask the first line input to a clock data recovery circuit (CDR) by using a locally (internally) generated mask signal.

A fourth feature provides for a master device to monitor the first line of the shared control data bus during the interrupt period to ascertain whether a slave device has asserted an interrupt request.

A fifth feature provides for a master device, upon detecting an interrupt request over the first line of the shared control data bus, to scan the slave devices over the shared control data bus to identify the asserting/requesting slave device.

### Interrupt Mechanism Using Dedicated IRQ Line

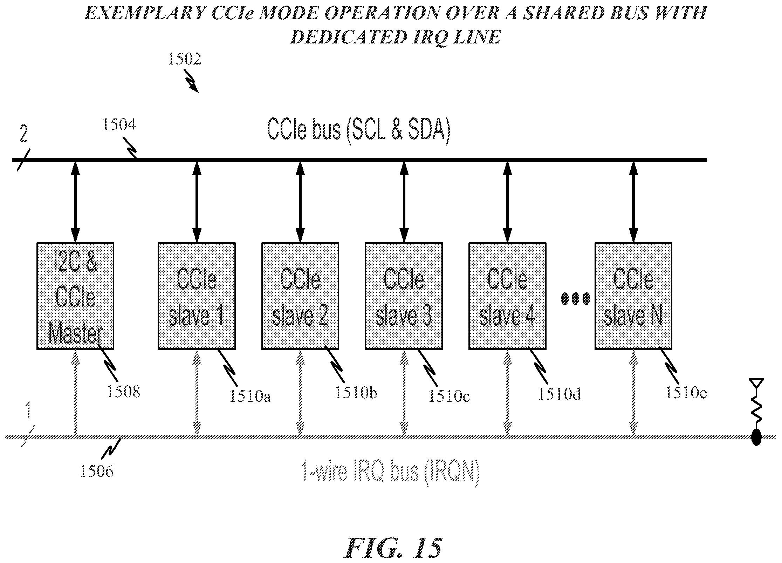

FIG. 15 is a block diagram illustrating a system 1502 having a master device 1508 and a plurality of slave devices 1510a-1510e coupled to a shared control data bus 1504 and a shared interrupt bus/request 1506. In one example, the control data bus 1504 may be an I2C bus comprising two wires, a clock line (SCL) and a serial data line (SDA). The clock line SCL may be used to synchronize all data transfers over the I2C bus (control data bus 1504). The data line SDA and clock line SCL are coupled to all devices 1508 and 1510a-1510e on the I2C bus (control data bus 1504). When used in CCIe mode, both the SDA line and SCL line of the control data bus 1504 may be used for data transmissions.

According to one aspect, the shared interrupt bus 1606 may be a single line coupled to the slave devices 1610a-1610e as well as to the master device 1608. This shared interrupt bus 1506 may be pulled up (e.g., pull high) when not in use and may be pulled low (e.g., grounded) when a slave device asserts an interrupt request (IRQ) signal. That is, each slave device 1510a-1510e may independently request access to transmit on the shared control data bus 1504 by sending an IRQ signal (e.g., request) to the master device 1508.

In some examples, the single line IRQ bus may be an asynchronous bus (e.g., unmanaged by a master device or any other device). This means that the slave devices can unilaterally assert an IRQ signal at any time.

In another example, the single line IRQ bus may be dedicated to unidirectional signal transmissions from slave devices to the master device. That is, the single line IRQ bus may be used for only IRQ signals and no other types of signals.

In one example, the control data bus 1504 may be a camera control interface (CCI) or CCI extension compatible bus.

In another example, the control data bus 1504 may be a bidirectional bus between the slave devices and the master device.

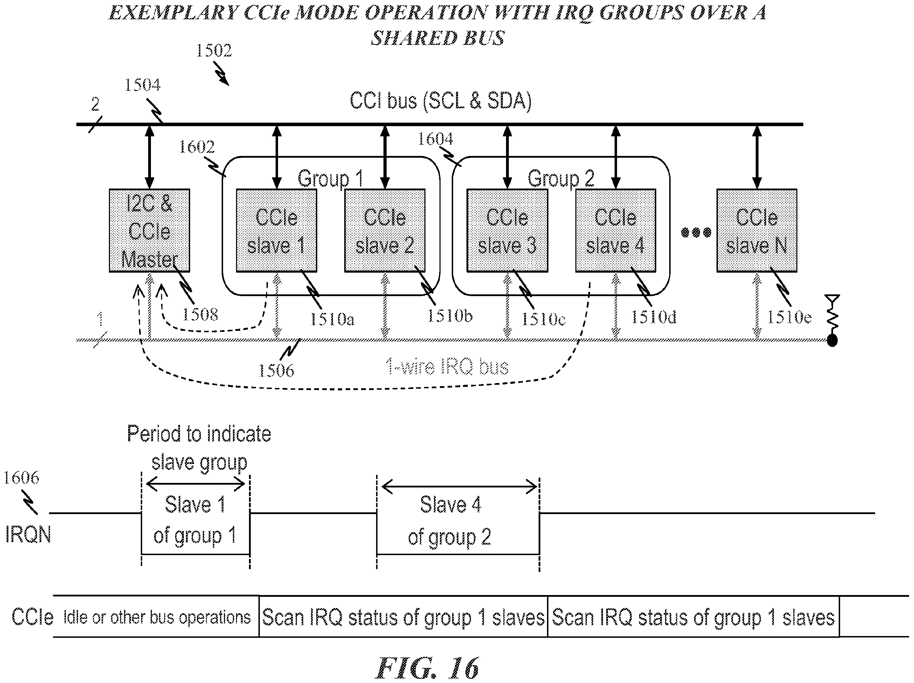

FIG. 16 is a block diagram illustrating how the plurality of slave devices 1510a-1510e in FIG. 15 may be logically grouped for purposes of issuing interrupts. In this example, a first plurality of slave devices 1510a and 1510b may be in a first group 1602 and a second plurality of slave devices 1510c and 1510d may be in a second group 1604. Such groupings may be, for example, pre-configured or dynamically defined (e.g., by enumeration) upon boot-up by the master device 1508. Such groupings allow the master device 1508 to more quickly identify which slave device triggered an IRQ signal on the IRQ bus 1506 without unacceptable delays.

Each group of slave devices 1602 and 1604 may have a distinct IRQ signal. For instance, the first group 1602 may use a first signal having a first period, and the second group 1604 may use a second signal having a second period, and so on. For example, the "period" may be a length of time for which the IRQ bus 1506 is pulled low by the asserting slave device. Note that other forms of signal differentiation may be used, e.g., different voltage levels for the IRQ signals used by different groups of slave devices, etc. In one implementation, each "group" may include a single slave device. In other implementations, each "group" may include 2, 3, and/or 4 slave devices or more. The number of slave devices per group may be a function of how long it would take to query and identify an asserting slave device. For instance, if a large number of slave devices coupled to the IRQ bus 1506 have to be queried by the master device 1508, this may cause an unacceptably long delay. Consequently, grouping slave devices and using distinct IRQ signals for each group allows the master device 1508 to identify an asserting slave device in a relatively short period or an acceptable period of time.

The master device 1508 detects the occurrence of an IRQ signal on the shared single line IRQ bus 1506 and queries each slave device in the group to identify which slave device triggered or asserted the IRQ signal. For example, if the IRQ signal identifies a Group-2 1604 slave device, then the master device 1508 may send a register status request (via the control data bus 1504) to a first slave device 1510c within Group-2 1604. If the first slave device 1510c status response indicates that it is not the asserting slave device, then the master device 108 may send another register status request (via the control data bus 1504) to a second slave device 1510d within Group-2 1604. This process is repeated for all slave devices in Group-2 1604 until the slave device that asserted the IRQ signal is identified.

In an alternative approach, the master device 1508 may scan through all slave devices in Group-2 1604 even if the first slave device 1510c is identified the issuer of the IRQ signal. For instance, it is possible that the more than one slave device in the same group issue an IRQ signal at the same time. Consequently, the master device may know all the IRQ requests from devices in group at once and handle them one-by-one. In one implementation, concurrent or overlapping IRQ requests from multiple devices in a single group may be handled by the master device 1608 in order of urgency, importance, and/or priority.

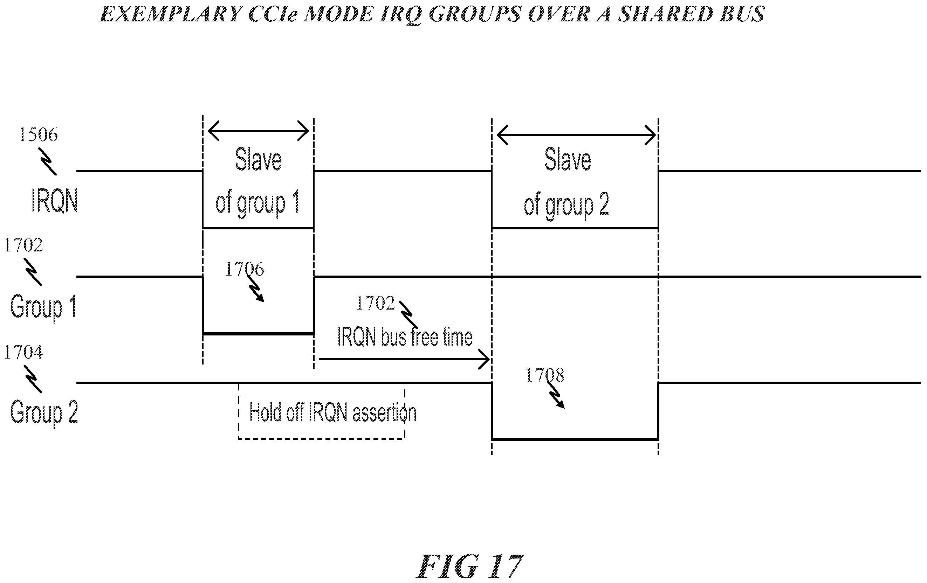

FIG. 17 illustrates a first example of how IRQ signals may be arbitrated over the IRQ line or bus. In this example, different slave device groups 1702 and 1704 may be defined, with each slave device group 1702 and 1704 having interrupts 1706 and 1708 of different widths. When a slave device detects that the IRQN line 1506 low, it waits for the IRQN line 1506 to become high plus minimum bus free time 1702 before asserting IRQN line low. In this example, a first interrupt 1706 is asserted by a slave device within a first group 1702, followed by a second interrupt request 1708 asserted by another slave device within a second group 1704.

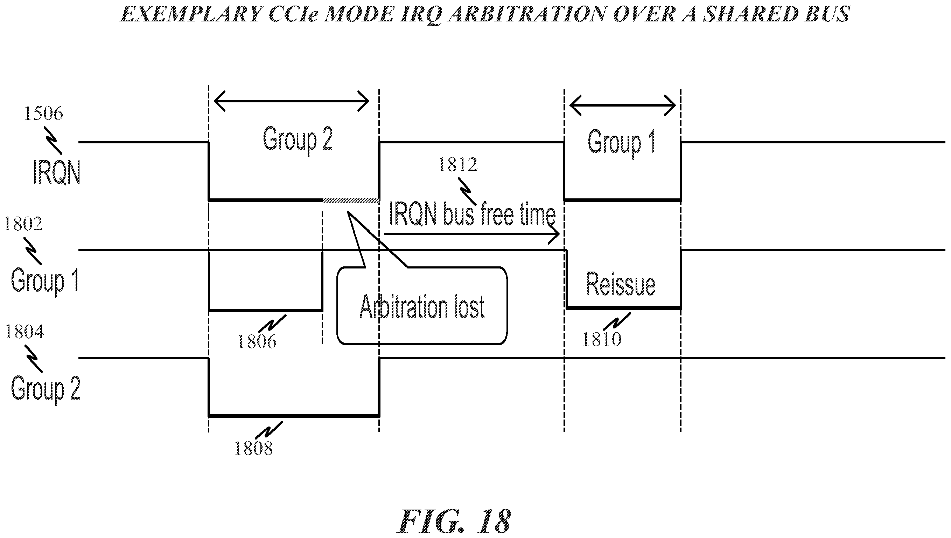

FIG. 18 illustrates a second example of how IRQ signals may be arbitrated over the IRQ line or bus 1506. When two slave devices assert IRQN line low (to indicate an interrupt request) at the same time (or overlapping times), the slave group with longest IRQN low period wins. In this example, a first interrupt signal 1806 has been asserted/issued by a first slave device in a first group 1802 while, concurrently or contemporaneously (e.g., overlapping in time), a second slave device in a second group 1804 has asserted/issued a second interrupt signal 1808 over the shared interrupt bus 1506. Because the second interrupt signal 1808 is longer than the first interrupt signal 1806, the first slave device in the first group 1802 loses arbitration. That is, the second interrupt signal 1808 is recognized on the interrupt bus 1506 but not the first interrupt signal 1806. The requesting first slave device can detect a loss of arbitration when it releases the interrupt bus 1506 at the end of the first interrupt signal 1806 but the interrupt bus 1506 remains low (e.g., pull to ground) when it should have returned to high (e.g., pulled high). Consequently, the first slave device reissues its interrupt signal 1810 at a later time (e.g., after the interrupt bus 1506 has been pulled up again for an amount of time 1812 upon the second interrupt signal 1808 ending.

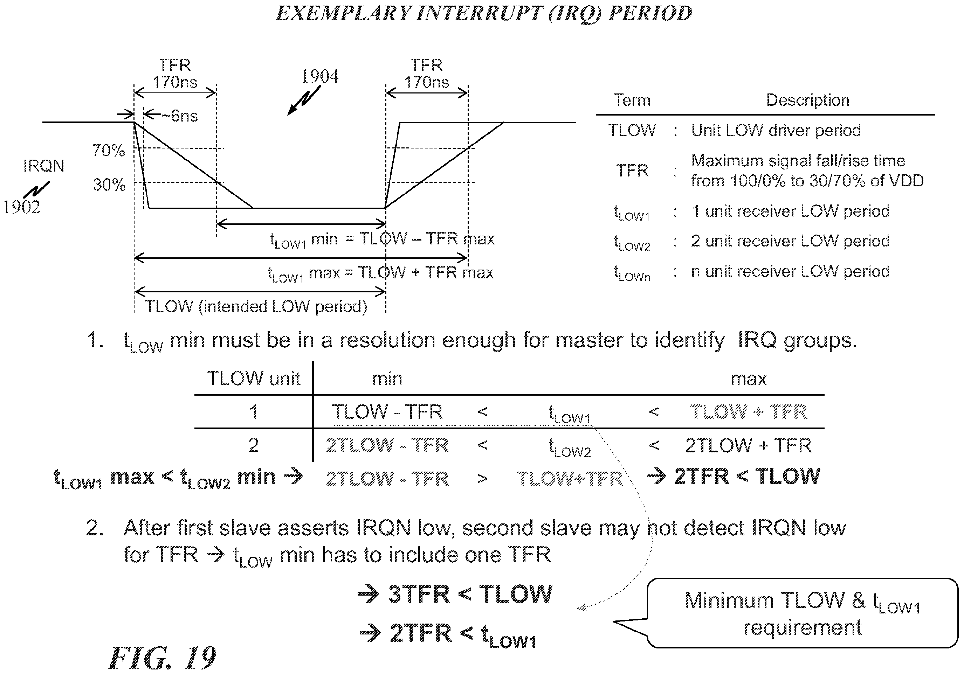

FIG. 19 illustrates a shortest IRQ signal length that may be feasible in one example. This example assumes that, for an interrupt line 1902, a "high" state can be detected when the IRQ signal 1904 is 70% of VDD level (e.g., high state) at latest and a "low" state can be detected when the IRQ signal 1904 is 30% of VDD level at latest. Note that a high or low state maybe detected when the IRQ signal 1902 is anywhere between 30% to 70% of VDD level depending on receiver input levels. Here, TRF max is the maximum fall-rise time and TLOW is the intended low period. The main purpose of the tLOW constraint is so that the master device is able to distinguish between IRQ signals from different groups of slave devices. Additionally, from the master device's point of view, the 2TRF max must be less than TLOW (i.e., 2TRF max < TLOW) so that the IRQ signal 1904 is guaranteed to be detected as low state.

A first IRQ signal length (period) tLOW is greater than TLOW-TFR and less than 2TLOW+TFR (i.e., TLOW-TFR < tLOW < 2TLOW+TFR). Similarly, a second IRQ signal length (period) tLOW' is greater than 2TLOW-TFR and less than 2TLOW+TFR (i.e., 2TLOW-TRF < tLOW < 2TLOW+TFR).

Note that after a first slave device asserts IRQ signal low, a second slave device may not detect IRQ signal low for a period of time extending TFR max to tLOW min which must at least TFR max long. Therefore, TLOW > 3TFR max, and tLOW min > 2TFR max.

Side-band IRQ (e.g., over a dedicated IRQ bus/line) has a clear advantage over in-band IRQ (e.g., over the shared control data bus) in terms of interrupt latency. Side-band IRQs may be preferable in some implementations that require very short latencies in the detection of interrupt signals.

### In-Band Interrupt Mechanism Over Shared Bus

The side-band IRQ method illustrated in FIGS. 15 to 19 requires the use of an extra pin for each slave device and master device. Slave devices in particular are often limited in size/space available and it would be desirable to eliminate the use of side-band interrupts or the requirement of a dedicated interrupt line/bus. Thus, an alternative to side-band IRQ method is sending in-band IRQs over the shared control data bus.

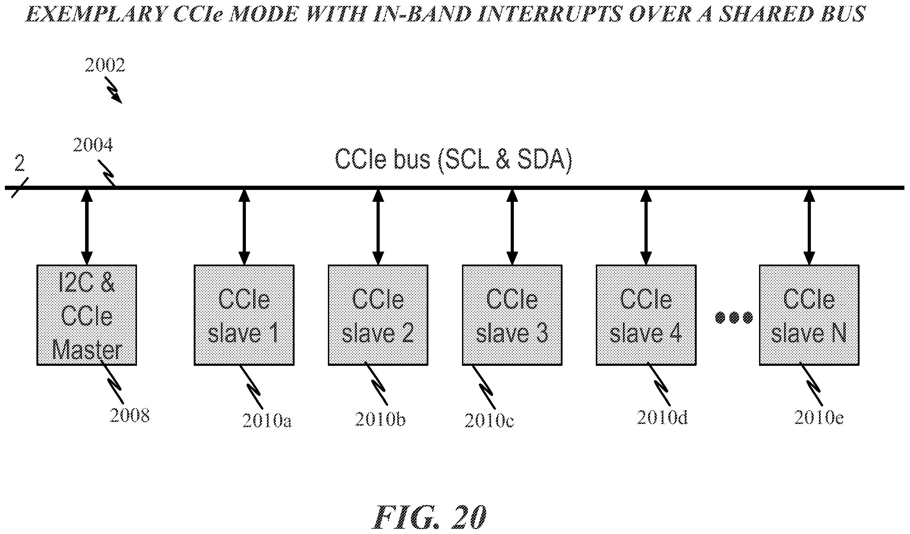

FIG. 20 is a block diagram illustrating an exemplary system 2002 in which the interrupt bus has been eliminated in favor of in-band interrupts. The system 2002 may include a master device 2008 and a plurality of slave devices 2010a-2010e coupled to a shared control data bus 2004. In one example, the control data bus 2004 may be an I2C bus comprising two wires, a clock line (SCL) and a serial data line (SDA). The clock line SCL may be used to synchronize all data transfers over the I2C bus (control data bus 2004). The data line SDA and clock line SCL are coupled to all devices 2008 and 2010a-2010e on the I2C bus (control data bus 2004). Relative to FIGS. 15-16, this system 2002 does not have a separate interrupt line or bus. Instead, interrupts are sent in-band over the shared control data bus 2004.

One feature provides for implementing a shared control data bus that supports both I2C devices and Camera Control Interface extension (CCIe) devices at the same time (e.g., dynamically switch the shared bus between CCIe mode and I2C mode).

### Exemplary CCIe and I2C Transmissions Over Shared Bus

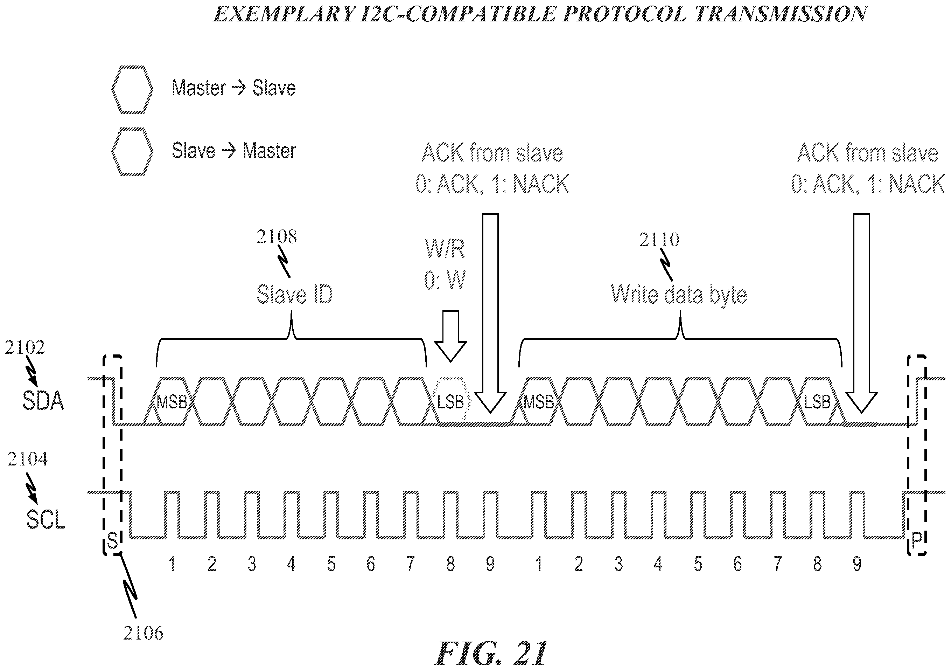

FIG. 21 illustrates an exemplary timing diagram of an I2C one byte write data operation. In this example, the shared control data bus 2004 (FIG. 20) includes a serial data line SDA 2102 and a serial clock line SCL 2104. The transmission scheme illustrated in FIG. 21 may be referred to as "I2C mode". The SCL line 2104 is used to send a clock from the master device to all slave devices while the SDA line 2102 transmits data bits. An I2C master device sends a 7-bit slave ID 2208 in the SDA line 2102 to indicate which slave device on the I2C bus the master device wishes to access, then one bit to indicate a write operation. Only the slave device whose ID matches with the 7-bit slave ID 2108 can cause intended actions. In order for an I2C slave device to detect its own ID, the master device has to send at least 8-bits on the SDA line (or 8 clock pulses on the SCL line 2104).

The I2C standard requires that all I2C compatible slave devices reset their bus logic on receipt of a START condition 2106 (e.g., indicated by a high-to-low transition on the SDA line while the SCL line is high).

The CCIe protocol uses both the SDA line 2102 and the SCL line 2104 for data transmissions while embedding a clock signal within the data transmissions. For example, data bits may be transcoded into a plurality of symbols which are then transmitted over lines. By embedding the clock signal (SCL line for I2C bus in FIG. 21) within symbol transitions, both the SDA line 2102 and SCL line 2104 may be used for data transmission.

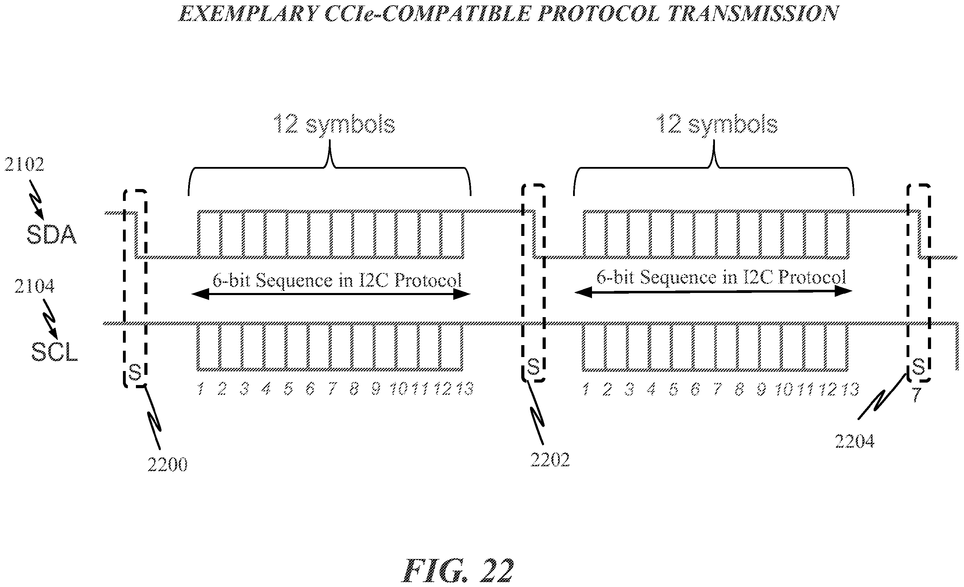

FIG. 22 illustrates an exemplary CCIe transmission in which data bits have be transcoded into twelve symbols for transmission over the SDA line 2102 and the SCL line 2104. The transmission scheme illustrated in FIG. 22 may be referred to as "CCIe mode".

CCIe mode is source synchronous, driven by push-pull drivers. Whoever sends out data over the shared control data bus also sends out clock information embedded in the data. Consequently, only one device on the control data bus is allowed to drive the bus at any one time.

In order to support both legacy I2C devices and CCIe devices over the same bus, CCIe mode operations use the same START condition 2200, 2202, 2204, which prevents legacy I2C slave devices from reacting to any CCIe operations (e.g., the Start condition during CCIe mode causes the legacy I2C slave devices to reset). In this example, the START condition 2200, 2202, and 2204 (i.e., indicated by a high to low transition on the SDA line 2102 while the SCL line 2104 is high) is detected before a full slave ID (i.e., a full 7 bits) is transmitted, therefore this is an incomplete slave ID (less than 7 bits). If a master device sends 6 SCL pulses then issues a START condition 2200, 2202, or 2204, then all legacy I2C slave devices reset their bus logic before they recognize the data as an I2C Slave ID. Since the 6-bit sequences (e.g., corresponding to every two symbols) are sent between two START conditions 2200, 2202, and 2204, these 6-bit sequences are not decoded as a valid slave ID by any slave devices. Consequently, legacy I2C slave devices will not act upon the incomplete Slave IDs.

In this system, the master device controls access to the shared bus. So, any device that wishes to transmit over the control data bus must request such access from the master device, for example, by issuing an interrupt request. Prior art mechanisms for issuing interrupts have relied on dedicated interrupts lines or a dedicated interrupt bus. However, such dedicated interrupt lines or bus means that the devices must include at least one additional pin to accommodate such interrupt line or bus. In order to eliminate the need for such dedicated interrupt pin and lines/bus, a mechanism for in-band interrupts within CCIe is needed.

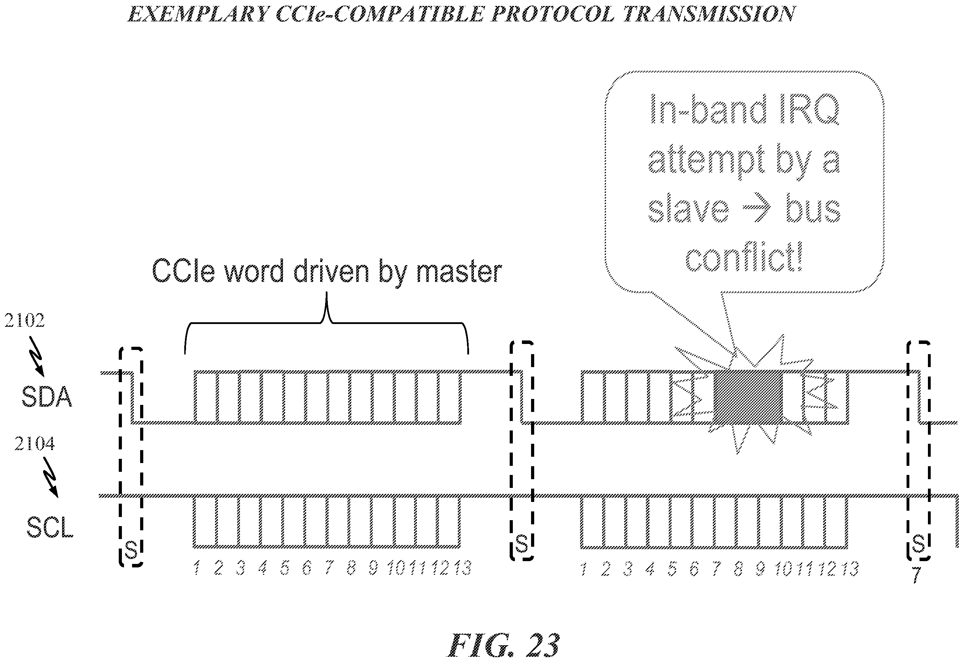

The use of in-band interrupts should also avoid bus contention or collisions. For example, as illustrated in FIG. 23, to avoid collisions, a slave device should not be allowed to drive the control data bus (e.g., either SDA line 2102 or SCL line 2104) to assert an IRQ while the master device is driving the control data bus.

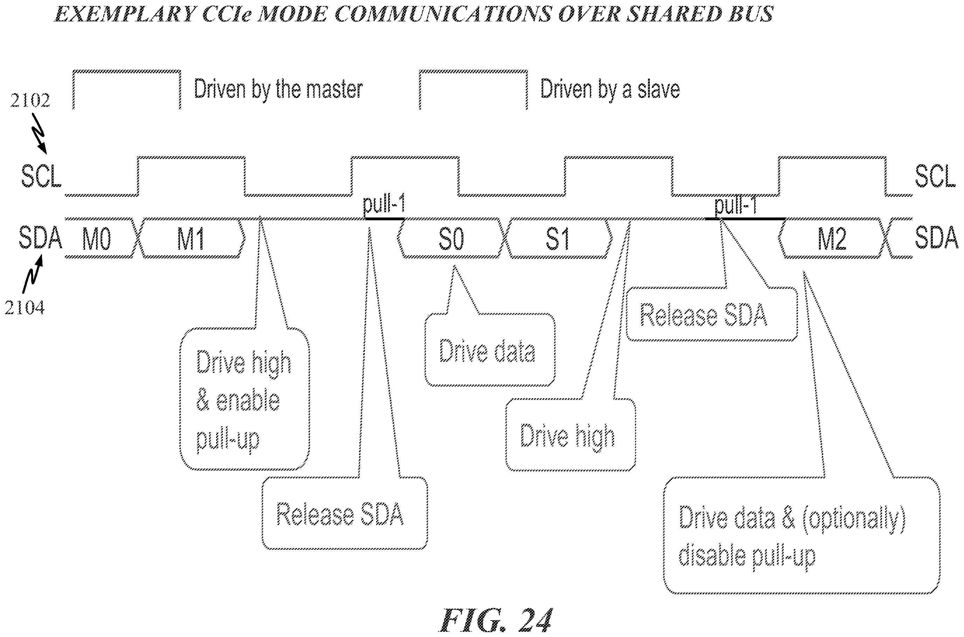

FIG. 24 illustrates a solution to avoid the potential for collisions of FIG. 23. In this approach, the CCIe protocol defines when an in-band IRQ may be issued. As illustrated here, the master device may drive a clock on the SCL 2102 line while a period of time is defined to allow the slave to drive the SDA line 2104 to issue an in-band interrupt. In particular, CCIe-compatible slave devices first check whether the SDA line 2104 is in use (e.g., pulled low) and, only if it is not, does it issue an interrupt request by pulling the SDA line 2104 low.

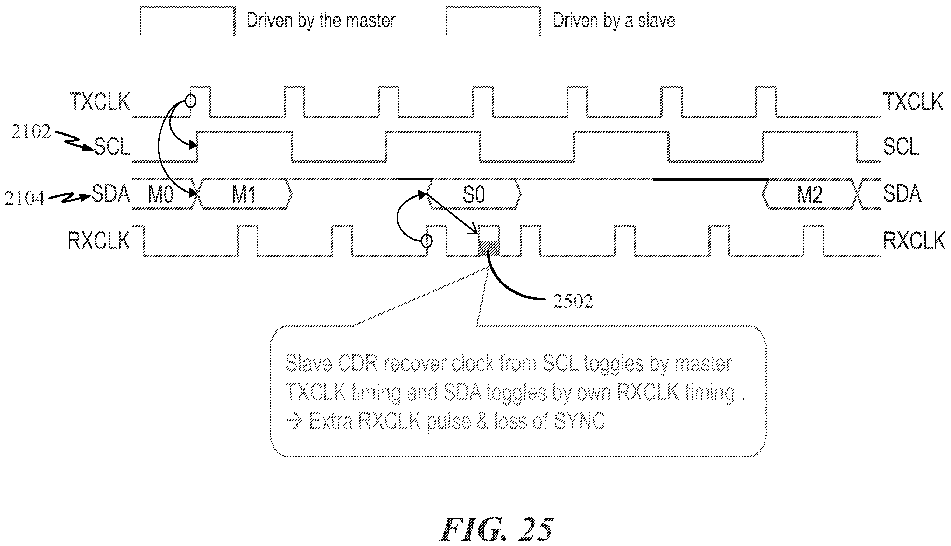

Another problem, illustrated in FIG. 25, is that when the slave device sends the in-band IRQ on the SDA line, it may cause an erroneous clock to be detected. That is, in CCIe mode, symbol transitions are used to generate a receiver clock RXCLK. This means that all receiving devices recover clock timing from state transition of the shared bus. The state transition, the state change of the SDA and SCL lines, has to be timing aligned between SDA and SCL lines. Although the CCIe clock data recovery (CDR) circuit can tolerate some skews between the SDA and SCL lines, skew larger than CDR's tolerance will cause the CDR to generate an extra receiver clock pulse 2502, resulting a synchronization loss to the CCIe word boundary.

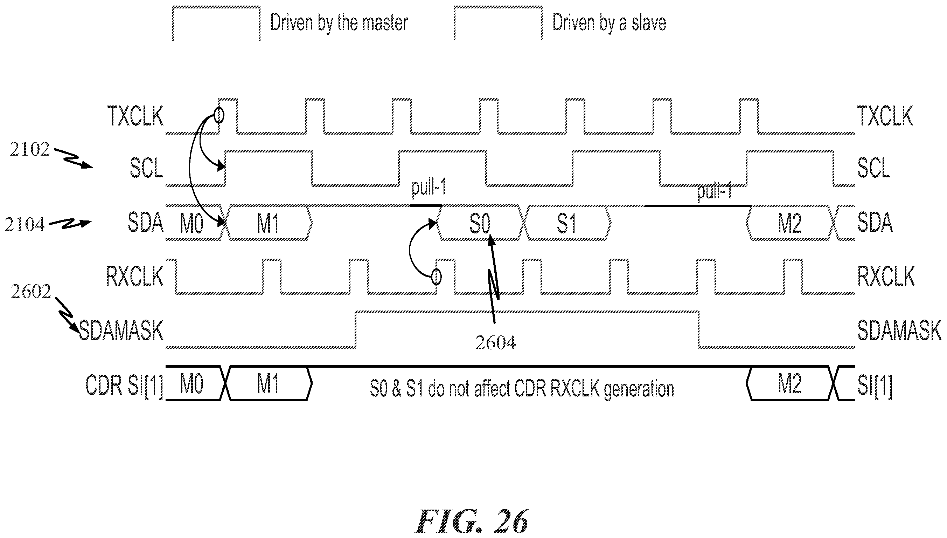

FIG. 26 illustrates a solution to avoid the extra receiver clock pulse and synchronization loss illustrated in FIG. 25. The signal that is used for in-band IRQ has to be masked at the clock data recovery circuit input by each device (e.g., master device and slave devices). For instance, each CDR circuit masks 2602 the SDA line 2104 or SCL line (whichever line is used for in-band IRQ) during in-band IRQ transmissions. If, for example, a master device lets a slave device drive the SDA line 2104 with a particular in-band IRQ protocol 2604, all devices on the control data bus then must mask their SDA line input during that period to prevent erroneous/extra RXCLK pulses from being detected. In one example, each device must gate the SDA line to hold its value into the CDR circuit as 1 (or high) during the in-band IRQ period.

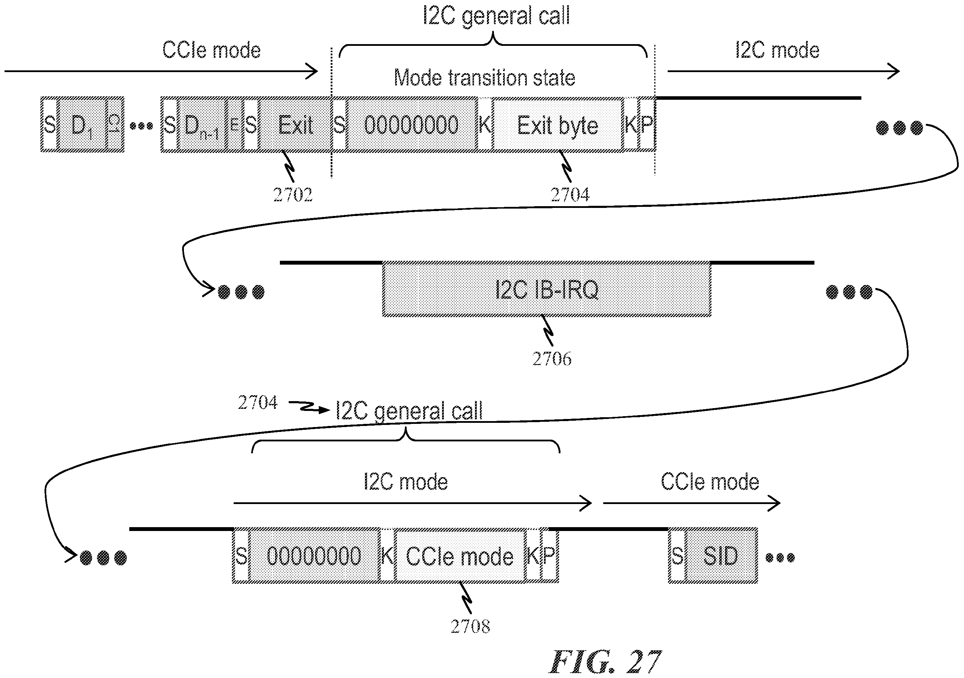

FIG. 27 illustrates one approach to implementing an in-band IRQ period while supporting both I2C mode and CCIe mode. In this approach, an exit indicator 2702 and 2704 is send in CCIe mode as well as I2C mode to indicate that the shared bus is to switch from CCIe mode to I2C mode. Thereafter, an sI2C slave device may issue an in-band IRQ 2706 while in I2C mode. After the in-band IRQ is issued, the shared bus may revert back to CCIe mode when the master device issues an entry call 2708 while in I2C mode.

### Exemplary Embedding/Encoding of Heartbeat Clock Within CCIe Mode

According to one example, the "heartbeat" may be encoded or embedded within a ternary number space used to encode data bits for transmission over the two-line control data bus.

Referring to FIG. 5, the transcoding method illustrated includes encoding 20 bits into a ternary number which is then converted into twelve symbols. The use of this encoding provides an extra or spare bit within the 20 bit that may be used to send commands within the CCIe protocol.

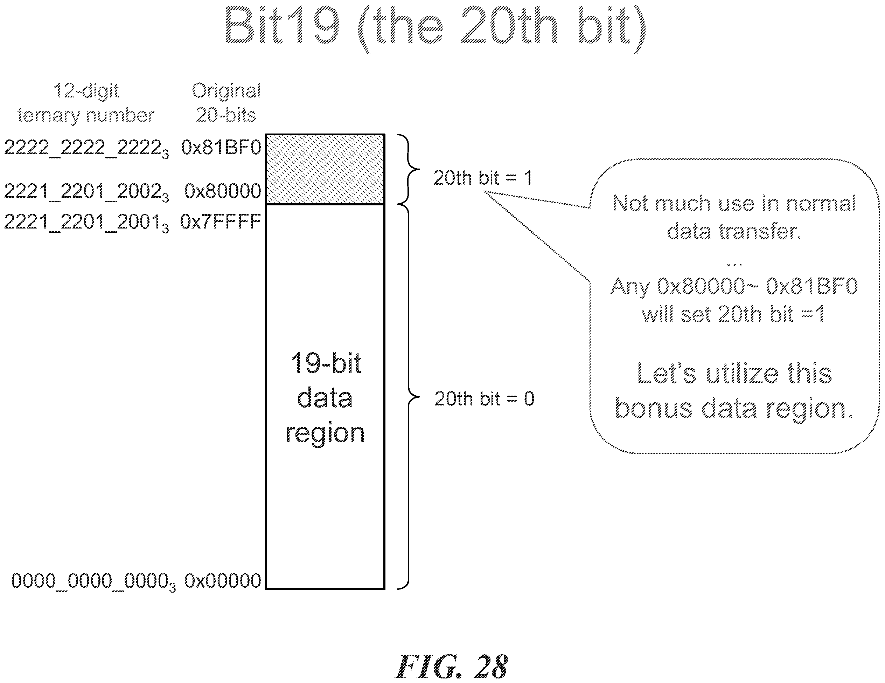

FIG. 28 illustrates the bit 19 (i.e., the 20^{th} bit when the bit count starts at the first bit being bit 0). In other words, as is typical in the computer sciences, counting bit wise begins at zero, and bit 19 is the 20^{th} bit. Here, the bits 0-18 are represented within the ternary number range of 0000_0000_0000₃ to 2221_2201_2001₃. The ternary numbers in the range of 2221_2201_2002₃ to 2222_2222_2222₃ are unused for data transmission. Consequently, the ternary number range 2221_2201_2002₃ to 2222_2222_2222₃ may be used to represent bit 19 (i.e., 20^{th} bit). In other words, 2221_2201_2002₃ ternary is 1000_0000_0000_0000_0000 binary (0x80000 hexadecimal) and 2222_2222_2222₃ ternary (0x81BF0) is the largest 12 digit ternary number possible. It is within the number space of this 20^{th} bit (bit 19) that a heartbeat may be transmitted.

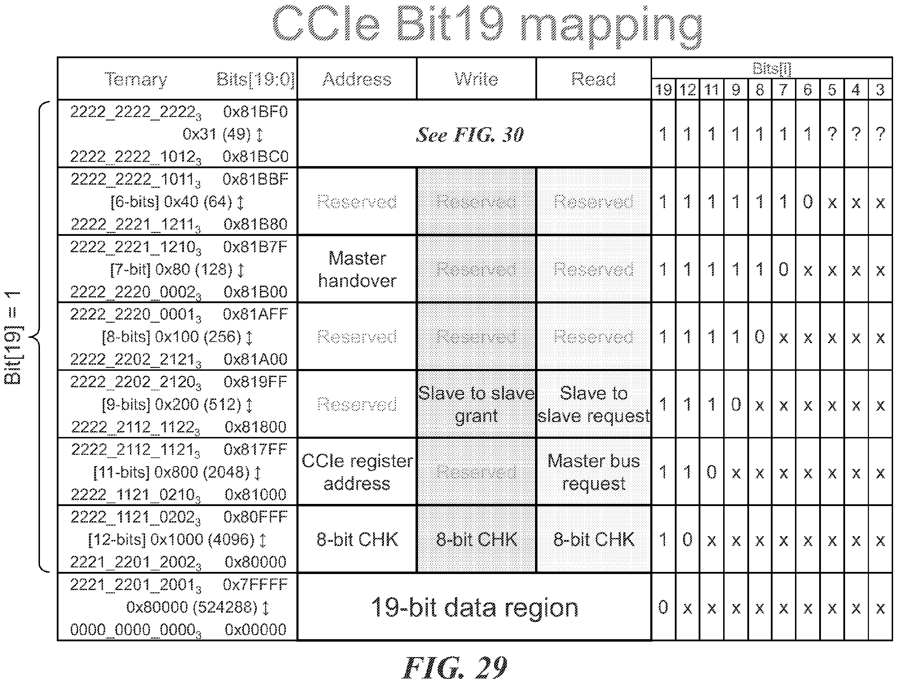

FIG. 29 illustrates that bit 19 may span the numbers 2221_2201_2002₃ to 2222_2222_2222₃, and that range of numbers may be subdivided into six subdivisions on the left side of FIG. 29. CCIe is a multi-master control data bus architecture and management of the control data bus can be transferred from one master device to another master device. Consequently, a "master bus request" command is available (within subrange 2222_1121 0210₃ to 2222_2112_1121₃ as well as a "master handover" (within subrange 2222_2220_0002₃ to 2222_2221_1210₃).

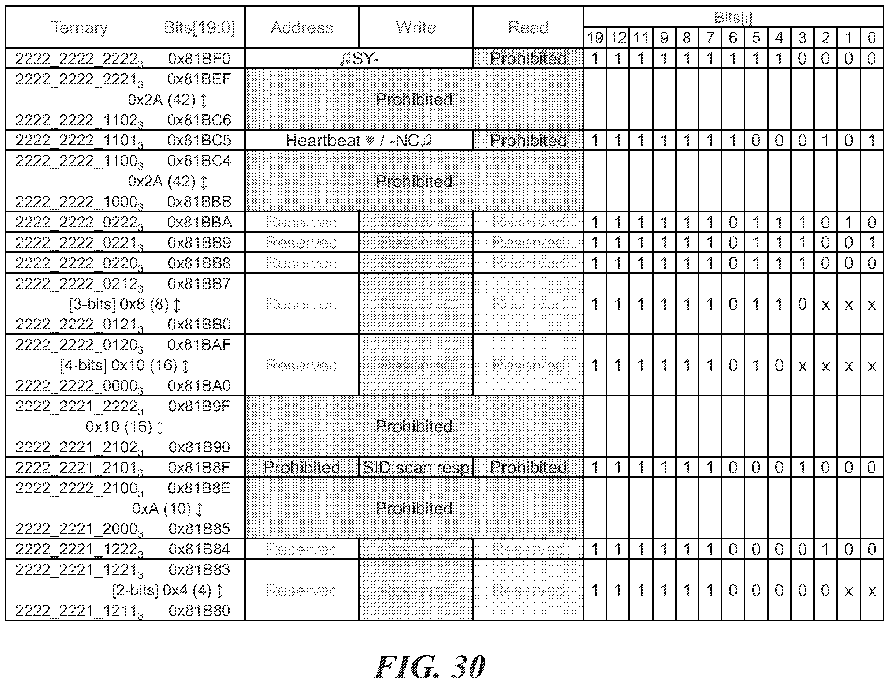

FIG. 30 illustrates a range within the bit 19 number space that may be used to define the heartbeat.

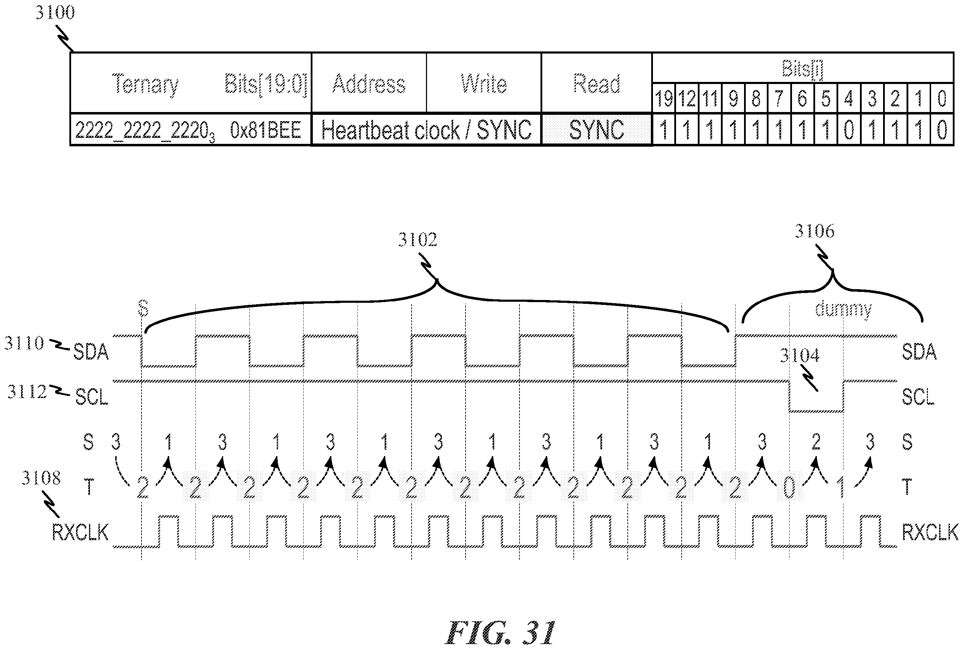

FIG. 31 illustrates one example of how the heartbeat clock may be transmitted over the SDA line and SCL line of a shared control data bus. A receiver clock (RXCLK) 3108 may be extracted from state transitions of transmitted symbols over the control data bus (e.g., SDA line 3110 and SCL line 3112). This example may illustrate how the heartbeat clock may appear before transmission or encoding and/or after reception and decoding. As can be perceived, a first portion 3102 of the heartbeat clock is transmitted on the SDA line, while a second portion 3104 of the heartbeat clock may be transmitted on the SCL line. In this manner, a space 3106 is created on the SDA line by moving part of the heartbeat clock to the SCL line.

### First Exemplary In-Band IRQ Technique for CCIe Devices

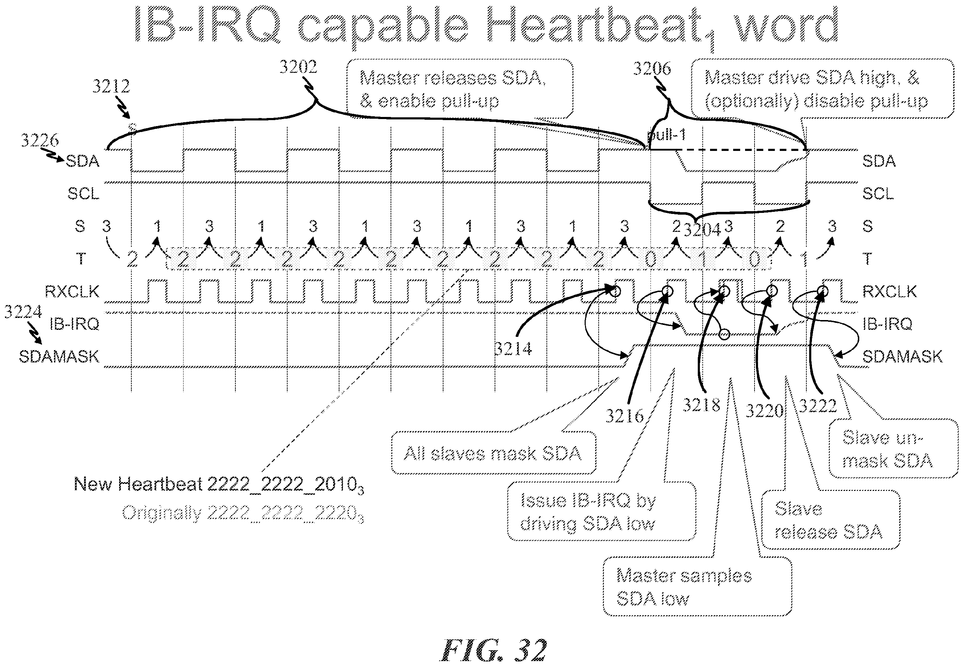

FIG. 32 illustrates another example of a heartbeat clock may be transmitted over the SDA line and SCL line. In this example, the heartbeat clock includes a first portion 3202 of the heartbeat clock is transmitted on the SDA line, while a second portion 3204 of the heartbeat clock may be transmitted on the SCL line, thereby creating a larger space 3206 for the in-band IRQ on the SDA line.

According to the protocol, a receiving slave device may detect, for example, the n^{th} RXCLK 3214 after the start S indicator 3212. The n^{th} RXCLK 3214 may trigger an internal SDA mask 3224 to internally (e.g., within a receiving slave device) mask the SDA line 3226.

At the n+1 RXCLK 3216, the slave device may trigger an IRQ by pulling the SDA line low. The SDA line is weakly pulled high by the master device, so that when it is pulled low (by a slave device) this serves to indicate an in-band IRQ. That is, by weakly pulling the SDA line high, this allows a slave device to pull the SDA line low to assert an interrupt signal.

At the n+2 RXCLK 3218, the master device may sample the SDA line to ascertain whether an in-band IRQ has been asserted.

At the n+3 RXCLK 3220, the slave device may release the SDA line (e.g., de-assert the in-band IRQ).

Between n+3 and n+4 RXCLK, the master device re-enables the SDA driver and starts driving the SDA line high. That is why the receiver device (e.g., slave device) can safely release SDA mask at n+4 RXCLK.

At the n+4 RXCLK 3222, the slave device may release the SDA mask 3224.

In this manner, an IRQ may be transmitted by a slave device during the IRQ period 3506 defined on the SDA line.

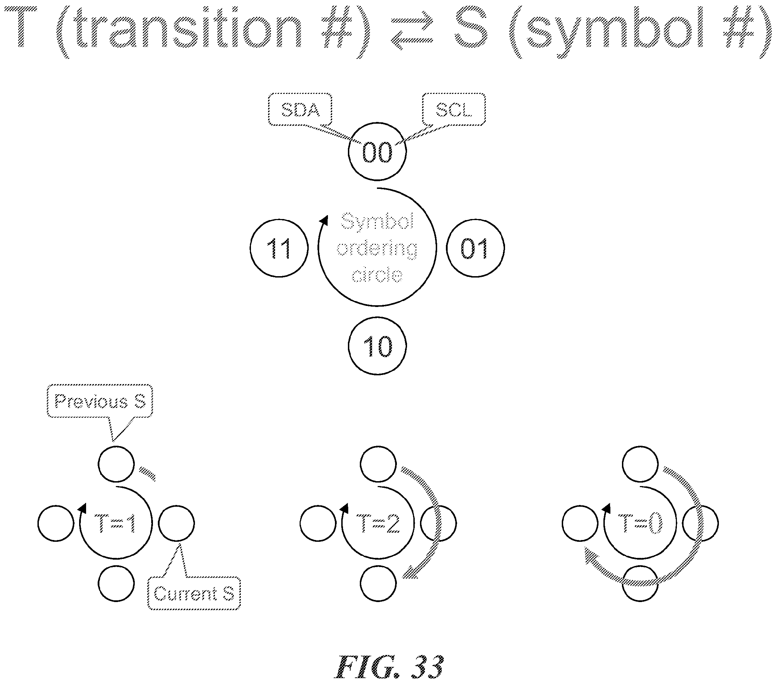

FIG. 33 illustrates one example of transition number to symbol number conversion.

A symbol S is sent over the control data bus (e.g., SDA line and SCL line) in CCIe mode. In one example, each symbol may be made up of 2 bits, with the LSB assigned to the SCL line and the MSB assigned to the SDA line.

In one example, each ternary transition number T is defined such that:
T=1 when S transitions from previous state to current state clockwise by one state on the symbol ordering circle;
T=2 when S transitions from previous state to current state clockwise by two states on the symbol ordering circle; and
T=0 when S transitions from previous state to current state clockwise by three states on the symbol ordering circle. Typical data transmissions over the data control bus in CCIe mode may employ any transition number.

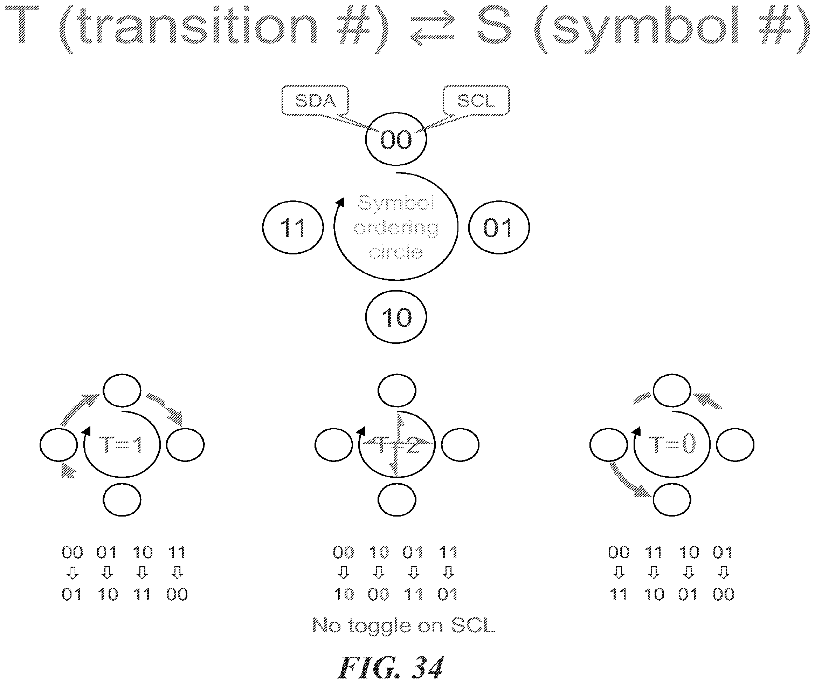

FIG. 34 further expands on the symbol number to transition number conversion of FIG. 33. The conversion may be defined as:
T=1 when S transitions from previous state to current state clockwise by one state on the symbol ordering circle;
T=2 when S transitions from previous state to current state across the symbol ordering circle;
T=0 when S transitions from previous state to current state counterclockwise by one states on the symbol ordering circle.
While the SCL line toggle always happens when T=0 or 1, the SCL line is not toggled when T=2.

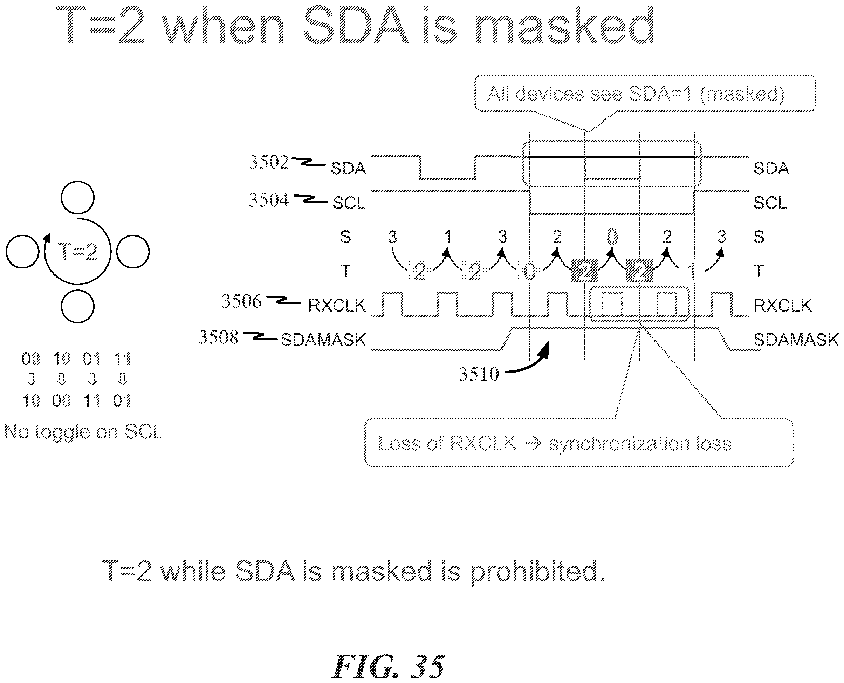

FIG. 35 illustrates the condition during the in-band IRQ period in which the SDA line 3502 is masked. Since the SCL line 3504 does not toggle when transition number T = 2 is sent, and the SDA line 3502 is seen as always high regardless of its actual state when the SDA line 3502 is masked 3508, there is no symbol transition. Consequently, therefore is no clock RXCLK 3506 generated if T=2 is sent during the SDA Mask period 3510. For that reason, T=2 is prohibited while SDA Mask=1.

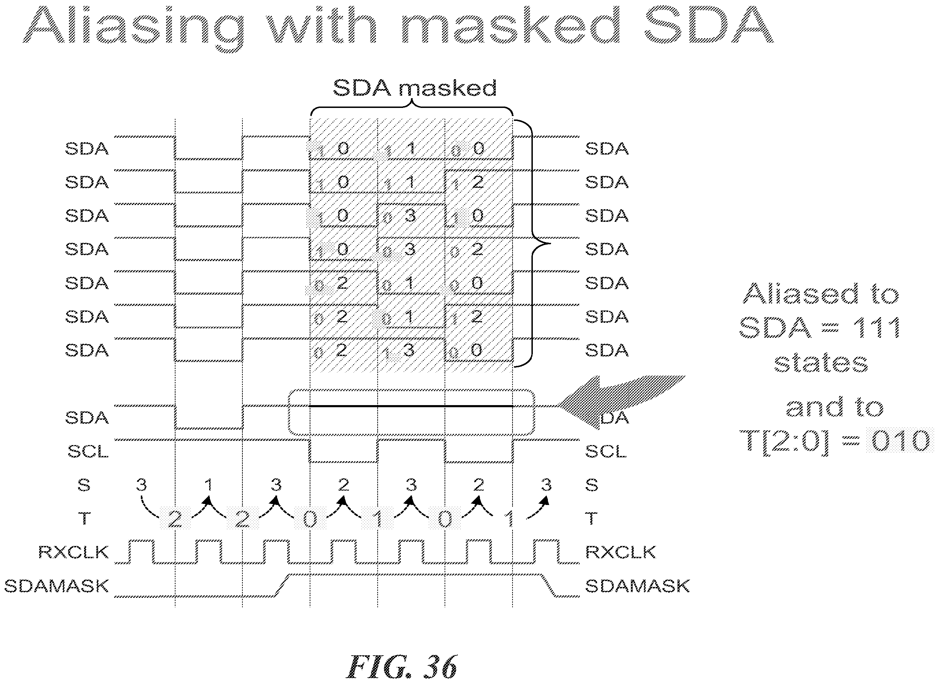

FIG. 36 illustrates a side-effect of SDA Mask of FIGS. 32 and 35. Even if T is not equal to 2, since the SDA line is always seen as a logic 1 state during the in-band IRQ period, any transition T values that would result in logic 0 for the SDA line is aliased to T[2:0]=010 that assume SDA bit is always 1.

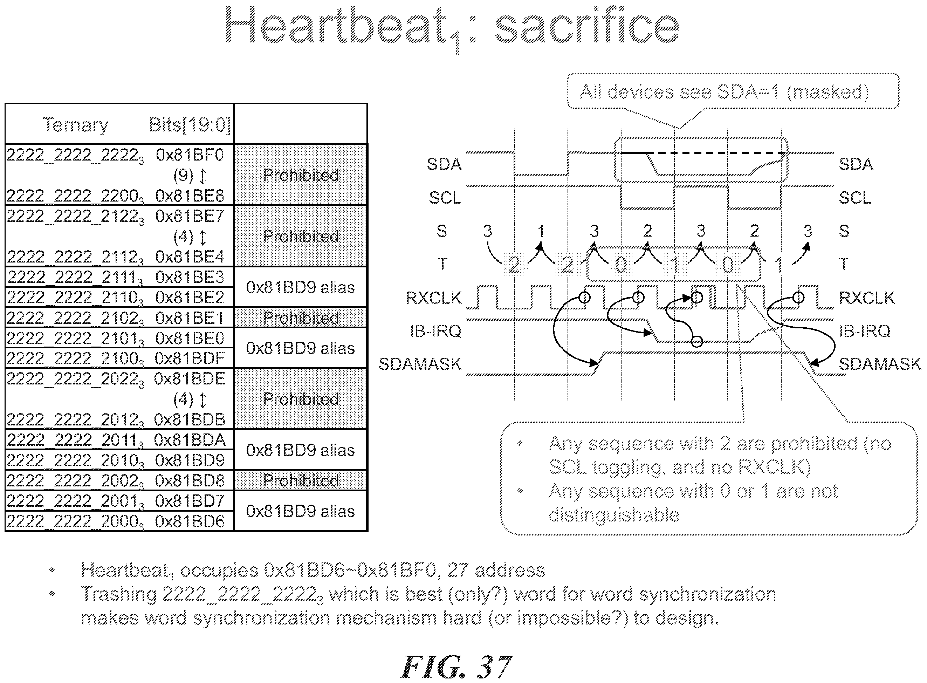

FIG. 37 illustrates that the heartbeat used for in-band IRQs occupies the number space 0x81BD6∼0x81BF0 (i.e., 27 addresses) within the ternary number space. The fact that T=2 is prohibited and any other T combinations are alias to T=010 while SDA Mast=1 means that the heartbeat word that supports in-band IRQ occupies not only one address, but it actually occupies 27 addresses of Bit19 region. The use of this particular heartbeat pattern prohibits use of the ternary number 2222_2222_2222, which is 81BF0 hex, and is very useful as the first word of the two word CCIe synchronization. Without the ternary number 2222_2222_2222, absolute synchronization may not be easy or possible.

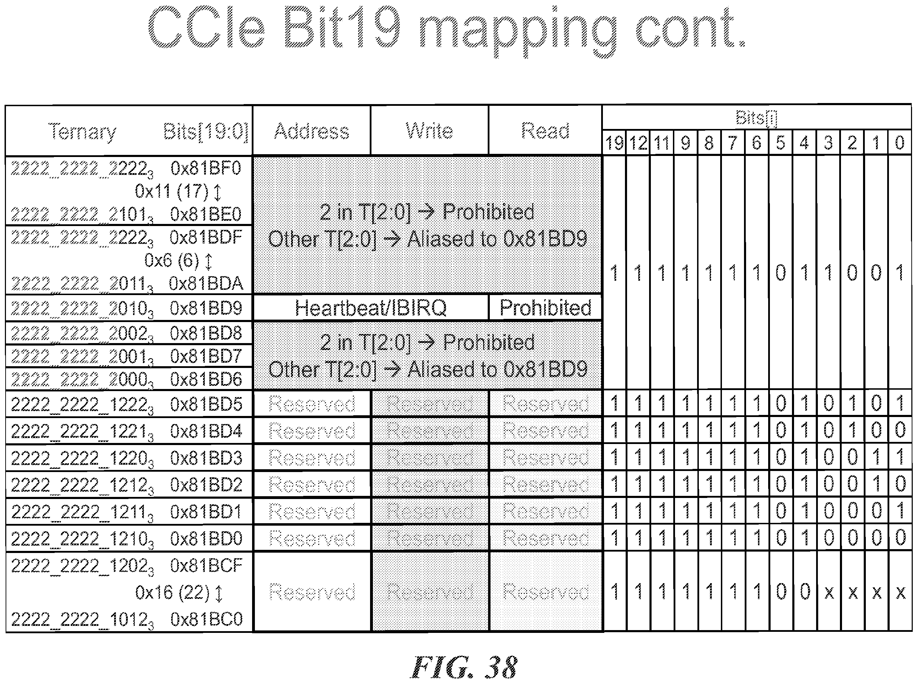

FIG. 38 illustrates an example of how bit 19 of the ternary number used in FIG. 37 for CCIe mode transmissions may be mapped. In this example, the heartbeat may be assigned to the ternary number 2222_2222_2010₃. Note that in this example, so long as a ternary number in the range of 2222_2222_2xxx₃ is detected, this may be interpreted as a heartbeat and/or in-band IRQ (e.g., 0x81BD9 hex).

### Second Exemplary In-Band IRQ Technique for CCIe Devices

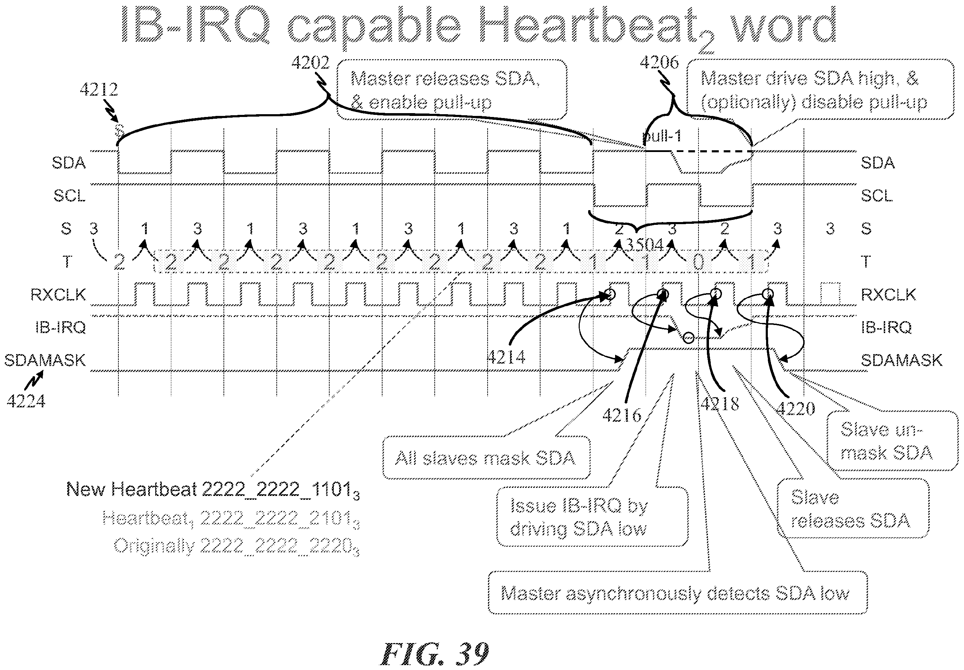

FIG. 39 illustrates an alternative technique for implementing an in-band IRQ over the control data bus in CCIe mode. This example reduces the number of receiver clock RXCLK cycles needed in FIG. 32 to perform in-band IRQ.

According to this protocol for providing an in-band IRQ period 3906, a receiving slave device may detect, for example, the n^{th} RXCLK 3914 after the start S indicator 3912. The n^{th} RXCLK 3914 may trigger an internal SDA mask 3924 to internally (e.g., within a receiving slave device) mask the SDA line.

At the n+1 RXCLK 3916, the slave device may trigger an IRQ by pulling the SDA line low. The SDA line is weakly pulled high by the master device, so that when it is pulled low (by a slave device) this serves to indicate an in-band IRQ.

Rather than waiting until the next clock cycle, between the n+1 RXCLK 3916 but before the n+2 RXCLK 3918, the master device may monitor the SDA line to ascertain if and/or when it goes low, meaning an in-band IRQ request has been asserted. Note that such monitoring of the SDA line by the master device is performed only during the IRQ period to asynchronously detect any IRQ requests from slave devices.

At the n+2 RXCLK 3918, the slave device may release the SDA line (e.g., de-assert the in-band IRQ).

Between n+2 and n+3 RXCLK, master device may re-enable SDA driver and starts driving the SDA line high. Consequently, the receiver (asserting slave device) can safely release SDA mask at n+3 RXCLK.

At the n+3 RXCLK 3920, the slave device may release the SDA mask 3924. In this manner, an in-band IRQ may be transmitted by a slave device during the IRQ period 3906 defined on the SDA line.

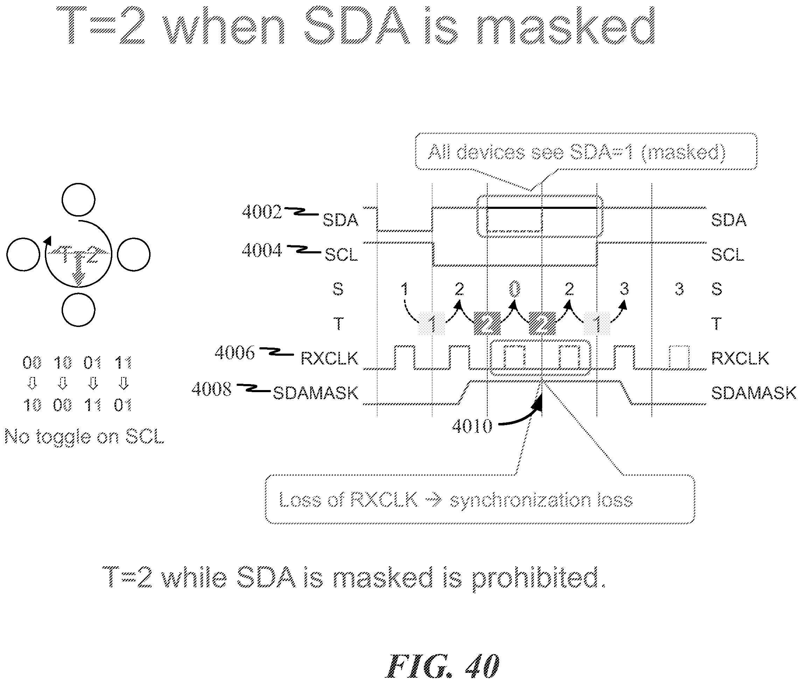

FIG. 40 illustrates the condition during the in-band IRQ period of FIG. 39 in which the SDA line is masked. Since the SCL line 4004 does not toggle when transition number T = 2 is sent, and the SDA line 4002 is seen as always high regardless of its actual state when the SDA line 4002 is masked 4008, there is no symbol transition. Consequently, there is no receiver RXCLK 4006 generated if T=2 is sent during SDA Mask period 4010. For that reason, T=2 is prohibited while SDA Mask=1.

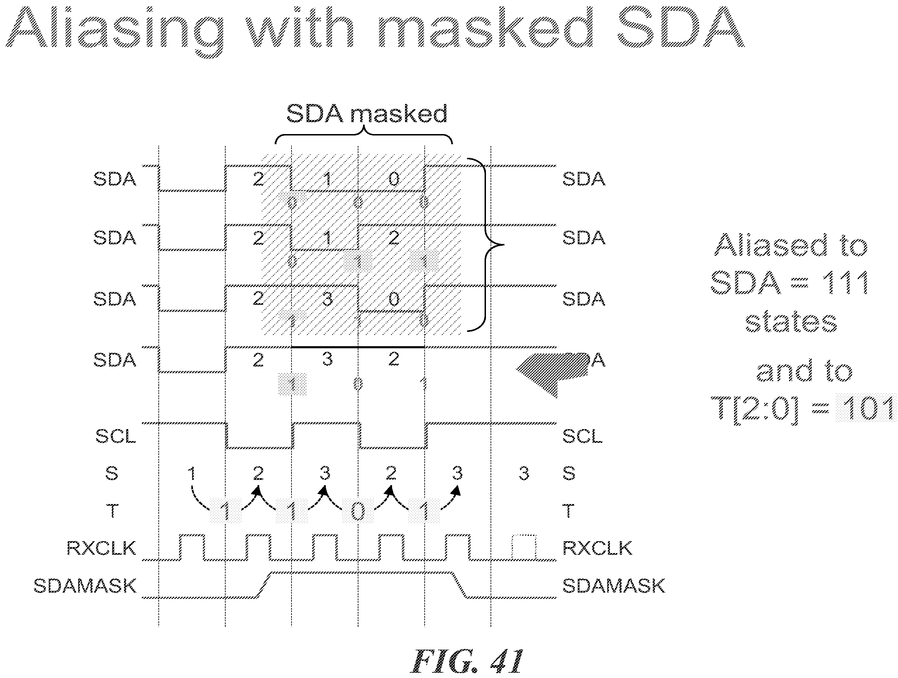

FIG. 41 illustrates a side-effect of SDA Mask of FIGS. 39 and 40. Even if T is not equal to 2, since SDA line is always seen as logic 1 state during the in-band IRQ period, any transition T values that would result in logic 0 for the SDA line is aliased to T[2:0]=010 that assume SDA bit is always 1.

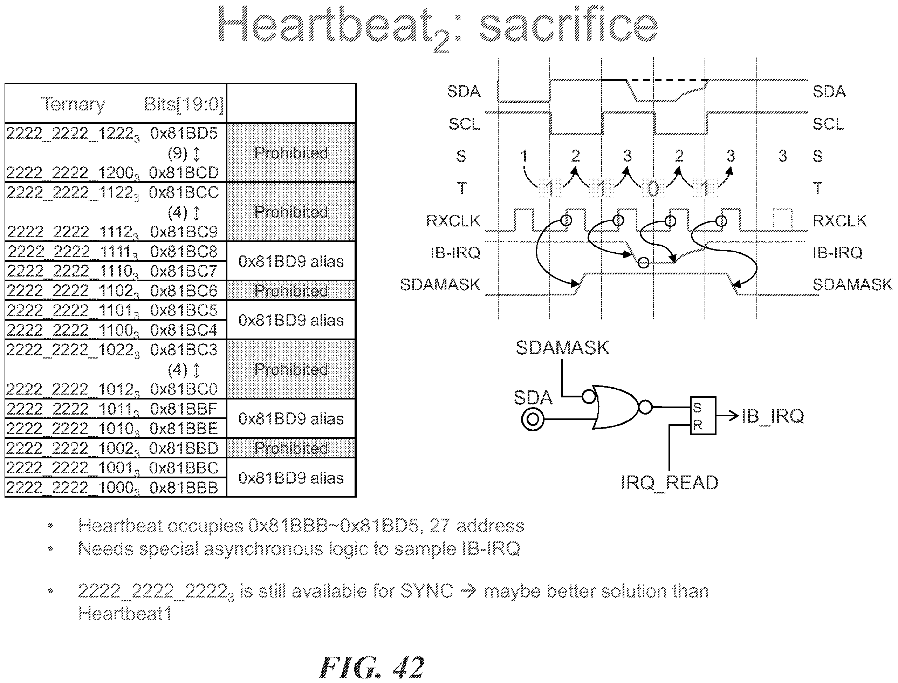

FIG. 42 illustrates that the heartbeat used for in-band IRQs occupies the number space 0x81BBB∼0x81BD5 (i.e., 27 addresses) within the ternary number space. Similar to the heartbeat in FIGS. 32 and 39, the alternative heartbeat of FIGS. 39-41 also occupies 27 addresses of Bit19 region. However, this alternative heartbeat does not prohibit use of the 2222_2222_2xxx ternary number space, so the 2222_2222_2222 word is still available for synchronization. This heartbeat pattern also requires a master device to use an asynchronous in-band IRQ detection circuit in order to accommodate a shorter in-band IRQ period, which should not be significant sacrifice.

Ideally, the protocol to implement in-band interrupts should be as compact as one or two CCIe words so that in-band IRQs can be issued as often as possible with as minimum protocol overhead as possible. For example, a periodic in-band IRQ window maybe defined. Among other consideration, the in-band IRQ period should be available even when the bus system is in low-power mode to prevent "starvation" by the slave devices. One solution to this may be to define an in-band IRQ within a CCIe "heartbeat" word which is periodically transmitted by the master device over the shared control data bus to allow synchronization of the slave devices.

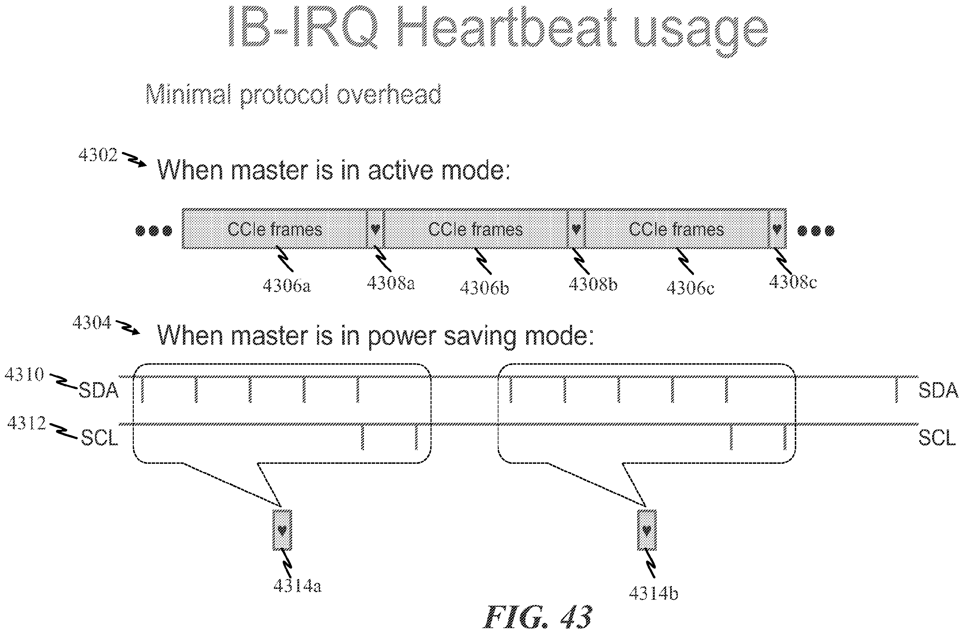

FIG. 43 illustrates how heartbeats may be transmitted when the master device is active mode and in a power savings mode. During normal operations when the master device is in active mode 4302, the master device periodically sends the heartbeat word 4608 in between CCIe frames 4306 in order to allow slaves devices to issue in-band IRQs. The heartbeat word interval may be such that it will not starve slave devices of opportunities to issue an interrupt request.

When the master device is in power saving mode, the heartbeat 4316 can also be transmitted, thereby allowing the slave devices on the shared bus (e.g., SDA line 4310 and SCL line 4312) an opportunity to issue an in-band IRQ during power saving mode.

The master device may send this "heartbeat" CCIe word 4316 at a rate that is slow enough for power savings by the master device but fast enough not to starve slave devices of opportunities to issue an IRQ signal. This "heartbeat" CCIe word may serve as an indicator to slave devices that they may issue IRQs. The term "heartbeat" is used herein to indicate a slow running clock to slave devices during a power savings mode for their minimal functionality to slay active (alive).

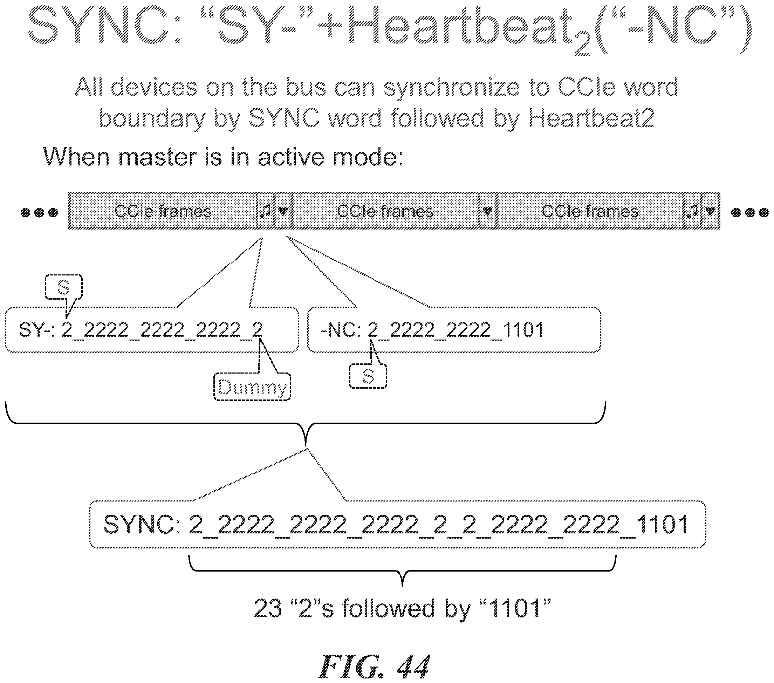

FIG. 44 illustrates the combination synchronization word and heartbeat. The heartbeat word also has a role as the 2nd word of synchronization word sequence. The two word synchronization sequence start with the all-2 word 2222_2222_2222 as denoted as "SY-", and the heartbeat word 2222_2222_1101 as denoted as "-NC".

"SY-" word causes RX devices to generate 14 transition state 2s including one "2" by START condition and one "2" after the last symbol when the bus state (symbol) turns form 1 (SDA=0, SCL=1) to 3 (SDA=1, SCL=1).

"-NC" word causes RX devices to generate 9 transition state 2s including one "2" by START condition.

The "SY-" word and the "-NC" word are put together or combined (e.g., hence "SYNC"), resulting a total of 23 transition state 2s followed by "1101" sequence, which is a unique sequence and can't occur in any other CCIe transactions. CCIe devices can use the sequence to synchronize to CCIe word boundary.

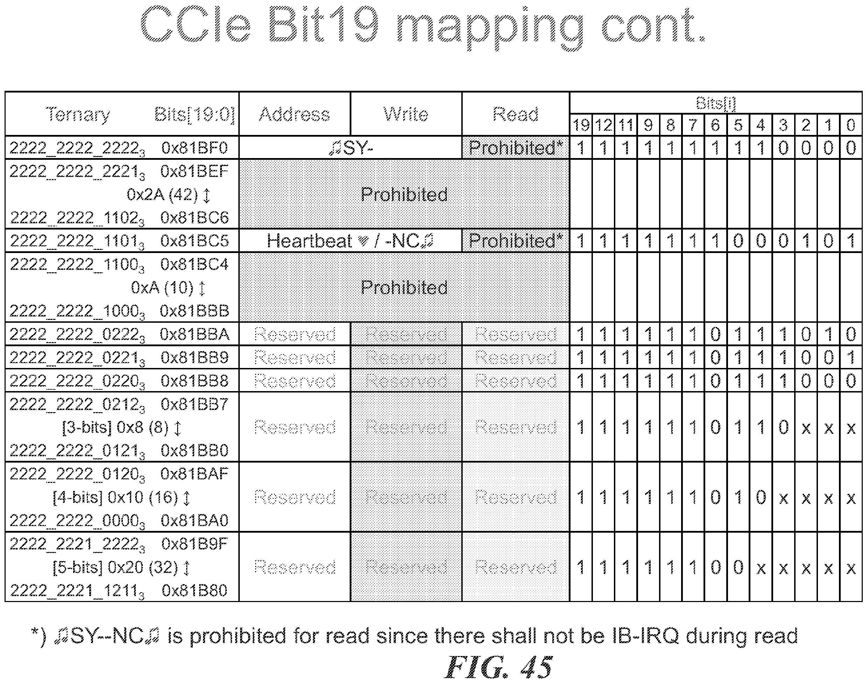

FIG. 45 illustrates the synchronization and heartbeat mapping within bit 19 of the CCIe protocol. Numerical space 0x81BC6∼0x81BEF hex, spanning 42 numbers, are prohibited in order to make the two word pattern "SY-NC" 23 "2"s and "1101" absolutely unique only for synchronization. The master device can periodically send "SY-" word right before the heartbeat which is "-NC" word, in order to allow slave devices to resynchronize in case of synchronization loss, or to let hot-plugged slaves to synchronize to the bus.

### Exemplary IRQ Group Inquiry

According to one feature, each slave device may be assigned or associated with a "group", each "group" including one or more slave devices. Upon detecting an IRQ signal associated with a particular "group", the master device may send an inquiry (e.g., over the control data bus) to each of the slave devices in the "group" in order to identify the slave device(s) that asserted the IRQ signal (e.g., where the IRQ signal is asserted either in-band IRQ over the control data bus or side-band IRQ over a dedicated IRQ bus). A slave device that asserted the IRQ may respond to the inquiry only within its assigned group, thereby identifying the asserting slave device to the master device. Note that each "group" of slave devices may have one or more slave devices. Note that, when power savings is being implemented by the master device, a slave device may issue an in-band interrupt within a heartbeat word. Also, multiple slave devices may issue an interrupt within the same heartbeat word.

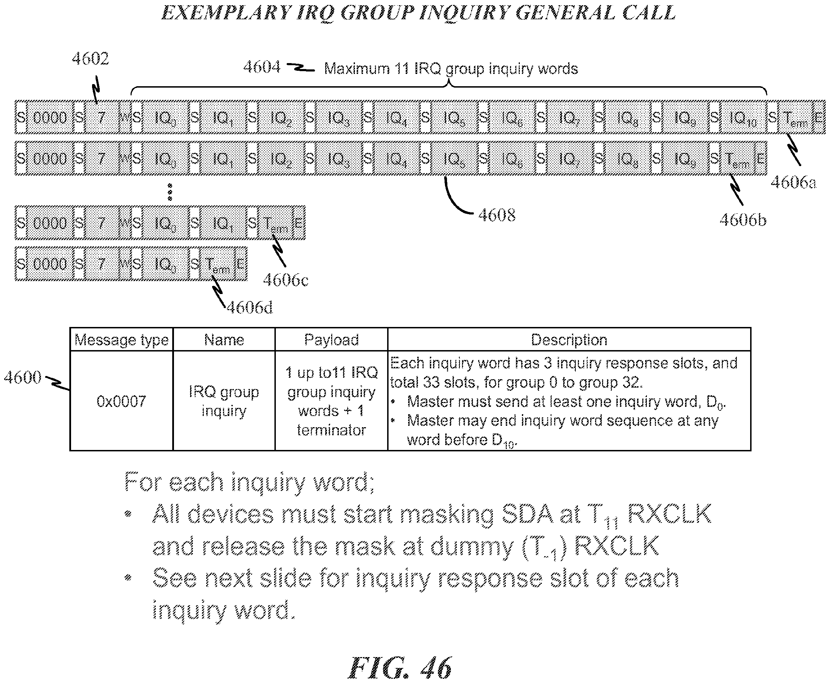

FIG. 46 illustrates an interrupt group inquiry general call within an exemplary CCIe protocol. The master device may broadcast a general call IRQ group inquiry 4600 to all slave devices on the shared bus. Following the IRQ group inquiry command 0x0007 hex 4602, a plurality of IRQ group inquiry words 4604 are sent. In one example, each inquiry word has 3 inquiry response slots, and total 33 slots, for group 0 to group 32. In one example, the inquiry words 4604 may include from one (1) to eleven (11) IRQ group inquiry words (IQ) and one terminator word (Term) 4606 at the end. For each inquiry word 4604, all slave devices mask the SDA line of the shared bus.

At each IRQ group inquiry (IQ) word 4608 of the payload 4604 of the general call, each slave receiver must start masking SDA at T₁₁ RXCLK and release the mask at dummy (T₋₁) RXCLK.

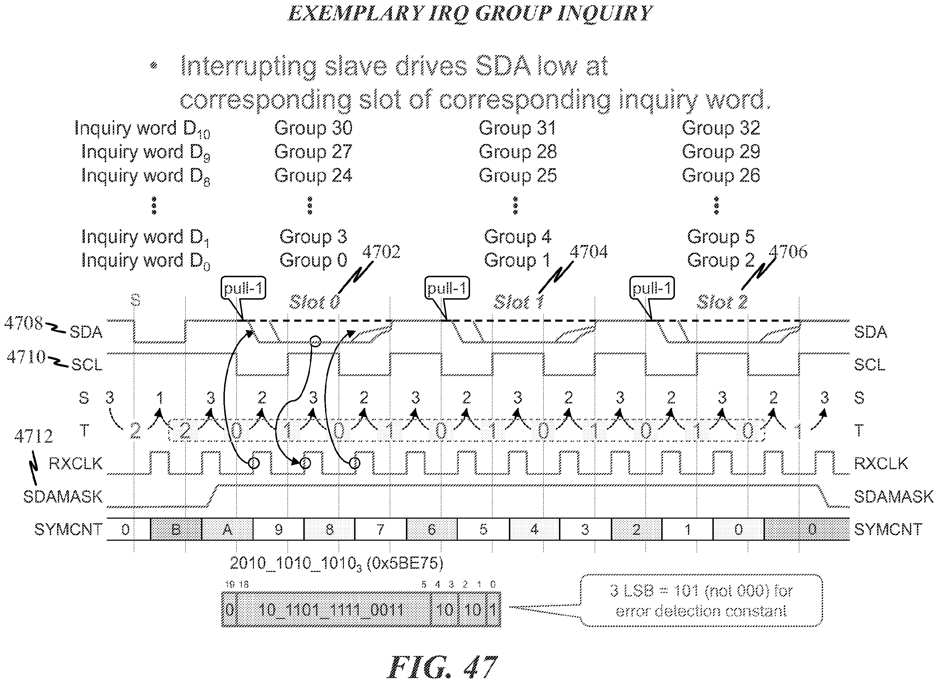

FIG. 47 illustrates the response to a group inquiry call. In this example, one or more response periods (i.e., inquiry words) may be defined on the SDA line 4708 by transferring the heartbeat to the SCL line 4710 and using an SDA mask 4712. In this example, three separate slots 4702, 4704, and 4706 have been defined for each inquiry word 4608 (FIG. 46). Each of the three time slots 4702, 4704, and 4706 in each IQ word 4608 may be assigned to three different IRQ groups. The slave devices assigned to each slot 4702, 4704, and 4706 can drive the SDA line 4708 during the assigned slot 4702, 4704, and 4706 as an inquiry response to indicate it has issued an IRQ or is has an IRQ that has not been serviced. Since each IRQ group inquiry (IQ) word 4608 has three inquiry response slots 4702, 4704, and 4706, and maximum 11 IRQ group inquiry (IQ) words can be in the general call payload 4604, there can be maximum 33 group slots in one call.

Up to thirty-two (32) devices may be assigned to groups such that only one device is in one group, thereby providing immediate identification of IRQ issuers. This approach identifies multiple IRQ groups at once, thereby reducing the number of IRQ scans necessary (e.g., fewer IRQ nesting). Alternatively, multiple devices may be assigned to each group, but an additional inquiry may be necessary by the master device to identify which of the plurality of devices in the group issued the IRQ.

The master device may chose the number of IRQ group inquiry (IQ) words to include in a general call based on number of IRQ groups on the bus system. In some examples, the master device may send a lesser number of inquiry words 4608 (e.g., less than a maximum number of eleven (11)). This may allow shortening the time for the IRQ group inquiry general call.

The sequence of the IRQ group inquiry (IQ) words ends with a terminator word (Term) 4606. The symbol pattern of the terminator word 4606 may be chosen so that each receiver slave device can recognize the word is a terminator (Term), not an IRQ group inquiry (IQ) at T11 RXCLK to know when to stop masking the SDA line 4708 and end of the IRQ group inquiry general call.

The three slots 4702, 4704, and 4706 for the first IRQ group inquiry (IQ) may be assigned to Group 0, 1, and 2. A group with smaller number may be assigned to earlier response slots.

In one example, Group 0 may be reserved for hot-plugged devices or devices that the master device has not yet recognized on the shared bus. Since at least one IRQ group inquiry (IQ) word must be sent, any hot-plugged device that issued an IRQ is always recognized.

Thanks to the use of the terminator (Term) word 4606, the length of a payload 4604 can be flexibly set, and the length of the IRQ group inquiry (IQ) word sequence can exceed 11 words if necessary.

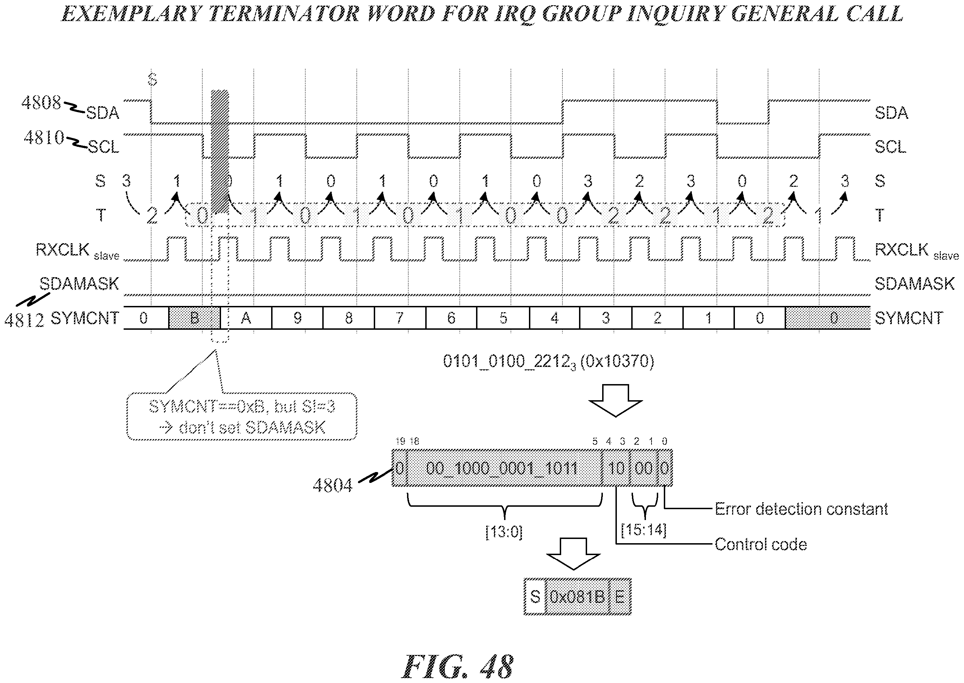

FIG. 48 illustrates an exemplary "terminator word" that may be used to indicate the end of an IRQ group inquiry general call to make the length (i.e., word count) of the IRQ group inquiry general call flexible.

The IRQ group inquiry method described herein may be applicable to both in-band IRQs and side-band IRQs. In one example, using the IRQ group inquiry method described avoids use of IRQ assertion periods to distinguish between slave device groups. That is, since all slave devices are being scanned, there is no need to distinguish them using interrupt requests having different widths. Consequently, side-band IRQs can now have any arbitrary period. A slave device no longer has to precisely time the IRQ period, so a free running clock may no longer be necessary.

Additionally, IRQ arbitration may also be eliminated using IRQ group inquiry. Since the master device scans all groups and slave devices therein, the master device can identify multiple IRQ issuers at once, which simplifies slave device logic since it no longer has to address arbitration loss.

One additional benefit to slave devices of using IRQ group inquiry may be power savings since a slave device no longer has to hold the IRQ line low for a long period of time which may cause DC current from the pull-up resistor to ground.

### Exemplary Global Clock Read

CCIe is a source synchronous symbol transition clocking system. Whoever sends data over the control data bus also sends clock embedded within the data. Unlike I2C, all slaves devices must have their clock source to generate read data with clock information. However, the technique used for IRQ group inquiry, e.g., always toggling SCL line while having all slave devices mask their SDA input and allow slave devices to drive the SDA line, is actually achieving a global clock read.

As can be appreciated in FIGS. 46 and 47, an IRQ group inquiry word can carry only 3 slave device responses, mainly in order to allow multiple slaves with different RXCLK timings to drive the SDA line within the same time slot. However, allowing only a single slave device to drive the SDA line during an SDA mask permits implementing a double data rate (DDR) global clock read.

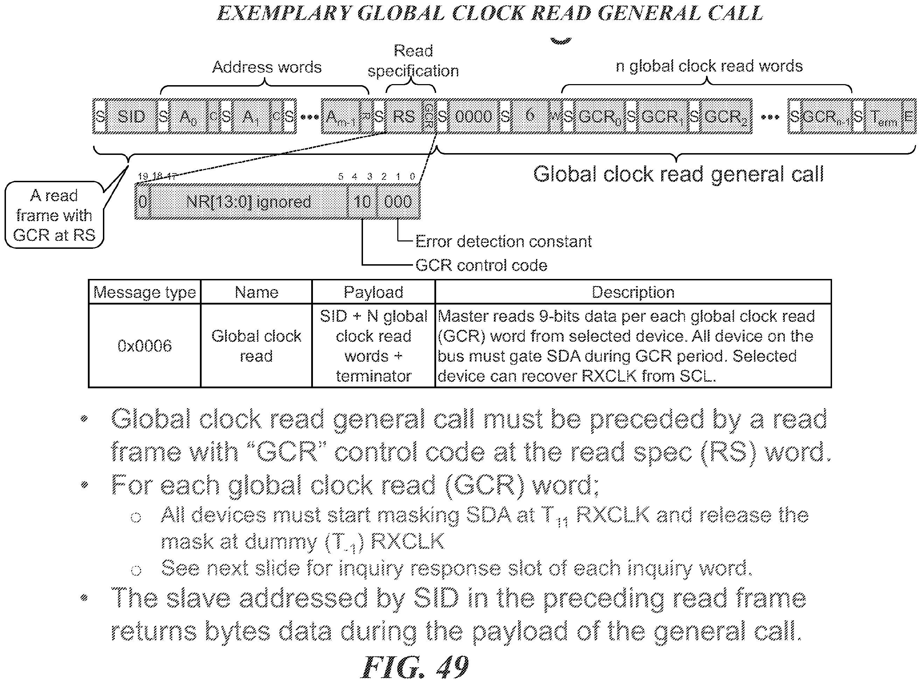

FIG. 49 illustrates one example of how a DDR global clock read general call may be implemented. Before starting a DDR global clock read sequence, the master device issues some CCIe protocol (such as general call) that indicates:
1. Following sequence is DDR global clock read.
2. Number of words of DDR global clock read.
3. SID of the device from which to read data.
4. Register address of the device from which to read data.
All the devices on the bus understand all the CCIe transactions after that call (until a specified number of words are sent) are DDR global clock read.

In the DDR global clock mode, all the devices on the bus must mask the SDA input to their clock data recovery (CDR) circuit during the symbol period including dummy symbol at the end of a word.

The addressed slave device drives the SDA line low at the 2nd RXCLK (not including RXCLK by the START condition), and that logic 0 is used by the master device to calibrate its clock to sample the SDA line (SDACLK).

From the 3rd RXCLK, the addressed slave device can drive out 9-bits of data serially. The 9-bits of data can be MSB first or LSB first or other format depending on system requirement. During this period, the master device provides or drives a DDR global clock on the SCL line.

The slave device drives the SDA line high at the 12th RXCLK, and release the SDA line at the 13th RXCLK.

The master device releases the SDA line after the 1st symbol "3" is sent, and enables its SDA driver and drives the SDA line high after the last symbol "2".

The master samples in SDA line at SDACLK timing to shift-in the 9 read data bits.

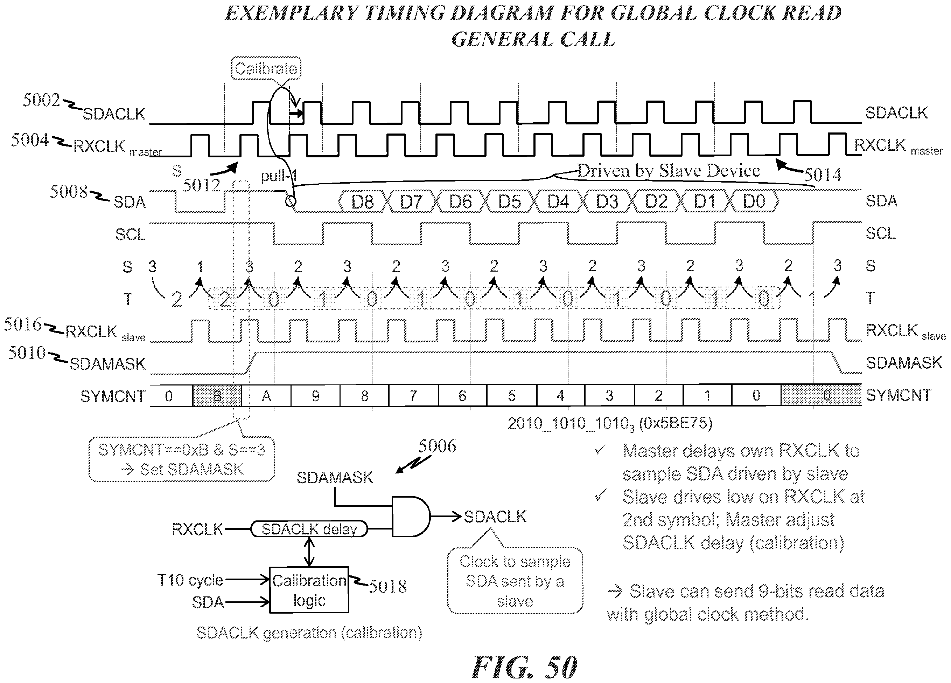

FIG. 50 illustrates an exemplary timing diagram for a global clock read word. A first clock signal SDACLK 5002 and a second clock signal RXCLK 5004, indicate internal signals within the master device. The second clock signal RXCLK 5004 may be generated by a clock data recovery circuit (CDR) of the master device. The first clock signal SDACLK 5002 may be generated by a clock generation circuit 5006 which may be used by the master device to sample data values from a SDA line 5008 (which is part of the shared bus) when driven by a slave device signal. The first clock signal SDACLK 5002 may be generated only when an SDAMASK signal 5010 is 1 (SDA line 5008 input to CDR is masked).

Since it is a slave device that drives the SDA line 5008 during a global clock read period, all the devices on the bus (including the master device) must mask the SDA line 5008 input to their CDR during this period, which starts at the second clock signal RXCLK rising 5012 from the START condition and ends at the last RXCLK rising edge 5014 for the word by the dummy symbol.

In this example, the master device sends 0x5BE75 (2010_1010_10103) for a global clock read word. Since this is the payload portion of the global clock read general call, each device on the shared bus knows that global clock read words follows after the call message "6", each device also knows when to start and end the SDAMASK 5010.

Each device expects the global clock read word for next word unless next word is the "Terminator" word that has distinct signal pattern at the first symbol.

Since the data signal on the SDA line 5008 is driven by a slave device using a RXCLK 5016 from the slave device's CDR, the master device must delay "properly" its second clock signal RXCLK 5004 from the master device's CDR in order for the master device to sample the data with enough setup and hold time. The master device learns that "proper delay at the first falling edge of the SDA line 5008 that is driven by the slave device per the global clock read protocol after the master device sent out the second symbol of the global clock read word (i.e., T10 cycle). The "calibration logic" 5018 measures delay of the SDA line 5008 falling from the beginning of the T10 cycle, and used the delay to configure "SDACLK delay", so that the master device reliable samples the SDA line 5008 transmissions from the slave device from next symbol.

### Exemplary Coexistence of sI2C and CCIe Devices Using In-Band IRQs

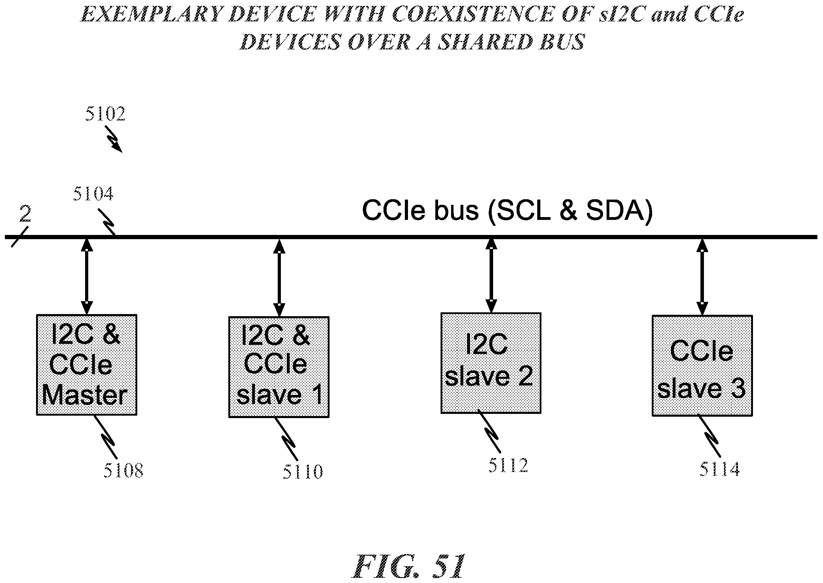

FIG. 51 illustrates the coexistence of I2C-compatible and CCIe-compatible devices on a shared bus 5104 within a device 5102, where all master/slave devices use in-band interrupts over the shared bus 5104. In this example, an I2C-compatible and CCIe-compatible master device 5108 may manage communications over the shared bus 5104. The master device 5108 may be configured to operate in both I2C mode and CCIe mode (i.e., according to two or more distinct protocols). An I2C-compatible and CCIe-compatible slave device 5110 may also be coupled to the shared bus 5104 and is configured to operate in both I2C mode and CCIe mode. An I2C-compatible slave device 5112 may also be coupled to the shared bus 5104 and is configured to operate in I2C mode. A CCIe-compatible slave device 5114 may also be coupled to the shared bus 5104 and is configured to operate in CCIe mode.

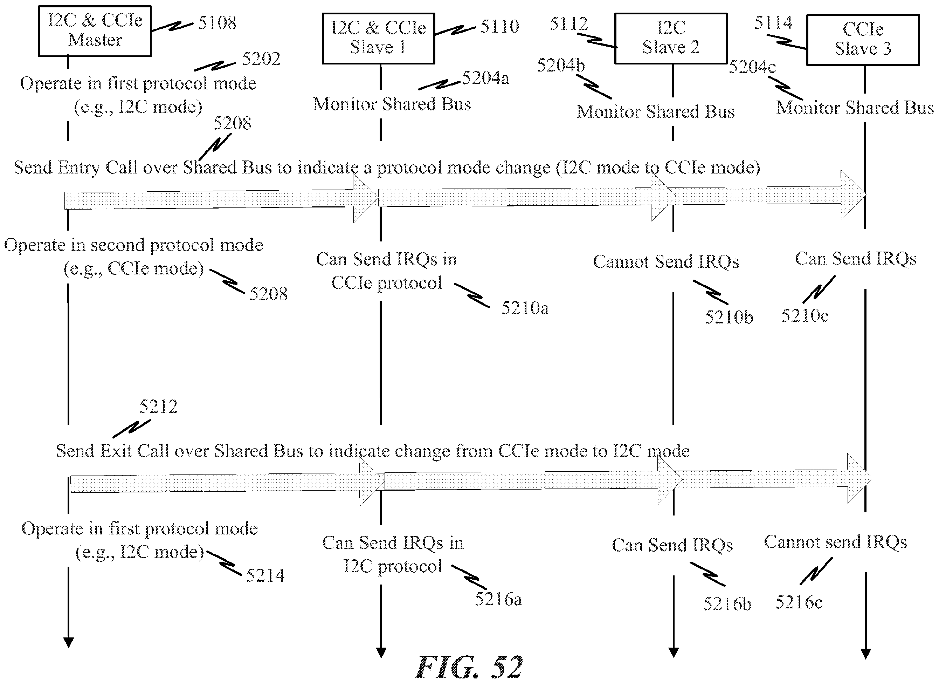

FIG. 52 illustrates the coexistence of the master/slave devices of FIG. 51 over a shared bus. The I2C-compatible and CCIe-compatible master device 5108 may initially operate in a first protocol mode (e.g., I2C mode) 5202. The slave devices 5110, 5112, 5114 may simply monitor the shared bus 5204 for commands/transmissions from the master device 5108 or other slave devices.

The I2C-compatible and CCIe-compatible master device 5108 may initiate a switch to a second protocol mode (e.g., CCIe mode) by sending an Entry Call message over the shared bus 5208. All slave devices 5110, 5112, and 5114 monitor the shared bus and recognize the Entry Call message as a change in how the shared bus is used (e.g., change from first protocol mode to second protocol mode). The entry call may be such that devices operating in the first protocol mode (e.g., I2C mode) and the second protocol mode (e.g., CCIe mode) can detect and/or decode the entry call. The I2C & CCIe Slave 1 5110 may still use the bus and can issue interrupt requests 5210a since it is able to communicate in both the first and second protocol modes. The I2C-compatible Slave 2 5112 may not use the bus and cannot issue interrupt requests 5210b since it is not able to communicate in the second protocol mode (CCIe mode). The CCIe-compatible Slave 3 5114 may use the bus and can issue interrupt requests 5210c since it is able to communicate in the second protocol mode (CCIe mode).

The I2C-compatible and CCIe-compatible master device 5108 may subsequently switch back to the first protocol mode (e.g., I2C mode) by sending an Exit Call message over the shared bus 5212. All slave devices 5110, 5112, and 5114 monitor the shared bus and recognize the Exit Call message as a change in how the shared bus is used (e.g., change from second protocol mode to first protocol mode). The Exit Call may be such that devices operating in the first protocol mode (e.g., I2C mode) and the second protocol mode (e.g., CCIe mode) can detect and/or decode the exit call. The I2C & CCIe Slave 1 5110 may still use the bus and can issue interrupt requests 5216a since it is able to communicate in both the first and second protocol modes. The I2C-compatible Slave 2 5112 may use the bus and can issue interrupt requests 5216b since it able to communicate in the first protocol mode (I2C mode). The CCIe-compatible Slave 3 5114 may not use the bus and cannot issue interrupt requests 5216c since it is not able to communicate in the first protocol mode (I2C mode).

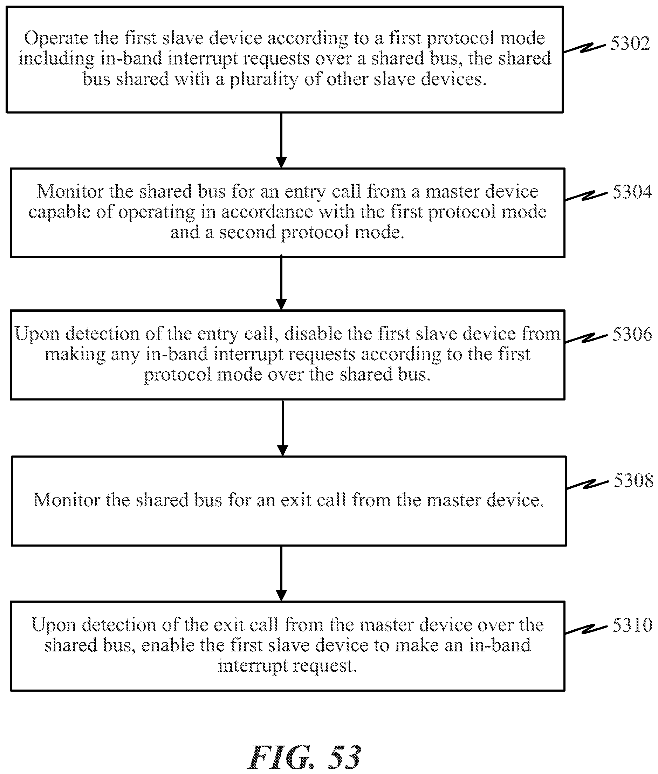

FIG. 53 illustrates a method operational by an I2C-compatible slave device that facilitates coexistence with CCIe-compatible slave devices over a shared bus, where all devices can use in-band interrupts over the shared bus. A first slave device (e.g., I2C-compatible slave device) may be operated according to a first protocol mode including in-band interrupt requests over a shared bus, the shared bus shared with a plurality of other slave devices 5302. The shared bus may be monitored by the first slave device for an entry call from a master device capable of operating in accordance with the first protocol mode and a second protocol mode 5304. Upon detecting the entry call, the first slave device may disable the first slave device from making any in-band interrupt requests according to the first protocol mode over the shared bus 5306. The first slave device may monitor the shared bus for an exit call from the master device 5308. Upon detection of an exit call from the master device over the shared bus, the first slave device may enable the first slave device to make an in-band interrupt request 5310. The plurality of other slave devices include one or more slave devices that operate according to a second protocol mode. The entry call may serve as an indicator to the one or more slave devices operating in the second protocol mode that the shared bus can operate according to the second protocol mode

In one example, the first slave device may comprise a bus interface coupled to a processing circuit. The bus interface may serve to couple to a shared bus shared with a plurality of other slave devices. The processing circuit may be configured to: (a) operate the first slave device according to a first protocol mode including in-band interrupt requests over a shared bus, the shared bus shared with a plurality of other slave devices; (b) monitor the shared bus for an entry call from a master device capable of operating in accordance with the first protocol mode and a second protocol mode; (c) disable the first slave device from making any in-band interrupt requests according to the first protocol mode over the shared bus upon detection of the entry call; (d) monitor the shared bus for an exit call from the master device; and/or (e) enable the first slave device to make an in-band interrupt request over the shared bus upon detection of an exit call from the master device. The plurality of other slave devices may include one or more slave devices that operate according to a second protocol mode. The entry call may serve as an indicator to the one or more slave devices operating in the second protocol mode that the shared bus can operate according to the second protocol mode.

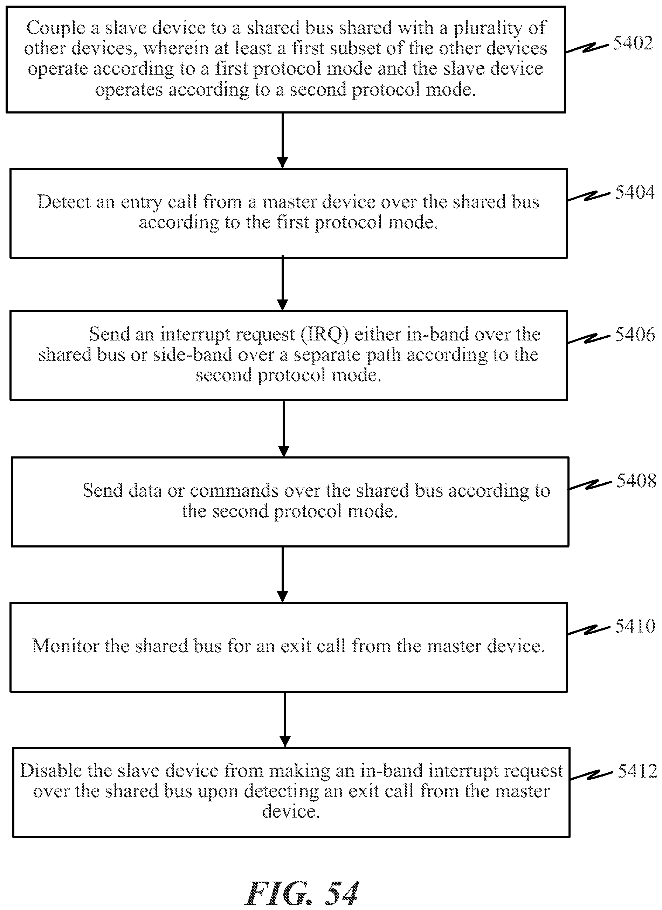

FIG. 54 illustrates a method operational by a CCIe-compatible slave device that facilitates coexistence with I2C-compatible slave devices over a shared bus, where all devices can use in-band interrupts over the shared bus. The slave device is coupled to a shared bus shared with a plurality of other devices, wherein at least a first subset of the other devices operate according to a first protocol mode and the slave device operates according to a second protocol mode 5402. An entry call may be detected by the slave device over the shared bus from a master device capable of operating according to the first protocol mode and the second protocol mode 5404. An interrupt request (IRQ) may be sent by the slave device either in-band over the shared bus or side-band over a separate path according to the second protocol mode 5406. The entry call may serve as an indicator to the slave device that the shared bus can operate according to the second protocol mode. The slave device may send data or commands over the shared bus according to the second protocol mode 5408.

The slave device may also monitor the shared bus for an exit call from the master device 5410. Upon detection of an exit call from the master device, the slave device may disable or stop making an in-band interrupt request over the shared bus 5412. The exit call may serve to indicate to the slave device that the shared bus is to operate according to the first protocol mode.

In one example, a slave device may include a bus interface coupled to a processing circuit. The bus interface may serve to couple to a shared bus shared with a plurality of other devices, wherein at least a first subset of the other devices operate according to a first protocol mode and the slave device operates according to a second protocol mode. The processing circuit may be configured to: (a) detect an entry call over the shared bus from a master device capable of operating according to the first protocol mode and the second protocol mode; (b) send an interrupt request (IRQ) either in-band over the shared bus or side-band over a separate path according to the second protocol mode; (c) send data or commands over the shared bus according to the second protocol mode; (d) monitor the shared bus for an exit call from the master device; and/or (e) disable the slave device from making an in-band interrupt request over the shared bus upon detection of an exit call from the master device.
The entry call may serve as an indicator to the slave device that the shared bus can operate according to the second protocol mode. The exit call serves to indicate to the slave device that the shared bus is to operate according to the first protocol mode.

Similarly, a system is provided in which I2C-compatible devices and CCIe-compatible devices may coexist while both types of devices may use interrupt requests over a shared bus. A first set of devices may be coupled to the shared bus. A second set of devices may also be coupled to the shared bus.

A first device within the first set of devices may be configured to: (a) operate according to a first protocol mode including send/receiving in-band interrupt requests over the shared bus; (b) monitor the shared bus for an entry call from a device in the second set of devices; and/or (c) upon detection of the entry call, disable the first slave device from making any in-band interrupt requests over the shared bus.

A second device within the second set of devices may be configured to: (a) detect an entry call over the shared bus according to the first protocol mode; (b) send an interrupt request (IRQ) over the shared bus according to the second protocol mode; (c) send data or commands over the shared bus according to the second protocol mode; and/or (d) disable sending any in-band interrupt over the shared bus according to the second protocol mode if an exit call is detected on the shared bus.

A master device may be coupled to the shared bus and configured to: (a) operate according to both a first protocol mode and a second protocol mode; to manage communications over the shared bus; (b) send an entry call over the shared bus according to the first protocol mode; (c) detect interrupt requests from slave devices according to both the first protocol mode and the second protocol mode; and/or (d) respond to the interrupt requests by granting a requesting slave device access to the shared bus.

### Exemplary Multi-Mode Shared Bus Architecture

A device is provided comprising a shared bus, a first slave device, a second slave device, and/or a master device. The first slave device may be coupled to the shared bus and is configured to: (a) operate according to a first protocol mode including issuing in-band interrupt requests over the shared bus; (b) monitor the shared bus for an entry call indicating the shared bus is switching to a second protocol mode; and/or (c) upon detection of the entry call, disable the first slave device from making in-band interrupt requests over the shared bus.

The second slave device may be coupled to the shared bus and is configured to: (a) operate according to the second protocol mode including issuing side-band interrupt requests over an interrupt bus or in-band interrupt request over the shared bus; and/or (b) detect the entry call over the shared bus, the entry call transmitted according to the second protocol mode.

The master device may be coupled to the shared bus and configured to: (a) operate according to both the first protocol mode and the second protocol mode; (b) manage communications over the shared bus; (c) send the entry call over the shared bus indicating the shared bus is switching to a second protocol mode, where the entry call is sent according to the first protocol mode; (d) detect interrupt requests from slave devices according to both the first protocol mode and the second protocol mode; and/or (e) respond to the interrupt requests by granting a requesting slave device access to the shared bus.

The master device may be further configured to send an exit call over the shared bus indicating the shared bus is switching to the first protocol mode, where the exit call is sent according to both the second protocol mode and the first protocol mode.

For in-band interrupts, the second protocol defines an interrupt period within symbols transmitted over the shared bus during which one or more slave devices coupled to the shared bus can assert an interrupt request on a first line of the shared bus while a second line of the shared bus is used by the master device for a heartbeat transmission. In one implementation, the master device and second slave device may be configured to internally mask the first line of the shared bus during the interrupt period.

The master device may be configured to send an interrupt group inquiry call to all slave devices that operate according to the second protocol mode on the shared bus, where such interrupt group inquiry call provides slots in which any asserting slave devices can respond.

The second slave device may be further configured to receive data or commands over the shared bus according to the second protocol mode when the shared bus operates according to the second protocol mode.

The first slave device may be further configured to send an interrupt request over a dedicated interrupt line or bus separate from the shared bus while the shared bus operates according to the second protocol mode.

The device may also include an interrupt router slave device configured to receive interrupt requests from the first slave device over a dedicated line and send the received interrupt request over the dedicated interrupt line or bus according to the second protocol.

In one example, the shared bus may include a first line and a second line. When the shared bus operates according to the first protocol mode, the first line is used for data transmissions and the second line is used for a first clock signal. When the shared bus operates according to the second protocol mode, both the first line and second line are used for data transmissions while a second clock signal is embedded in symbol-to-symbol transitions with the data transmissions.

### Exemplary Multi-Mode CCIe/I2C Master Device

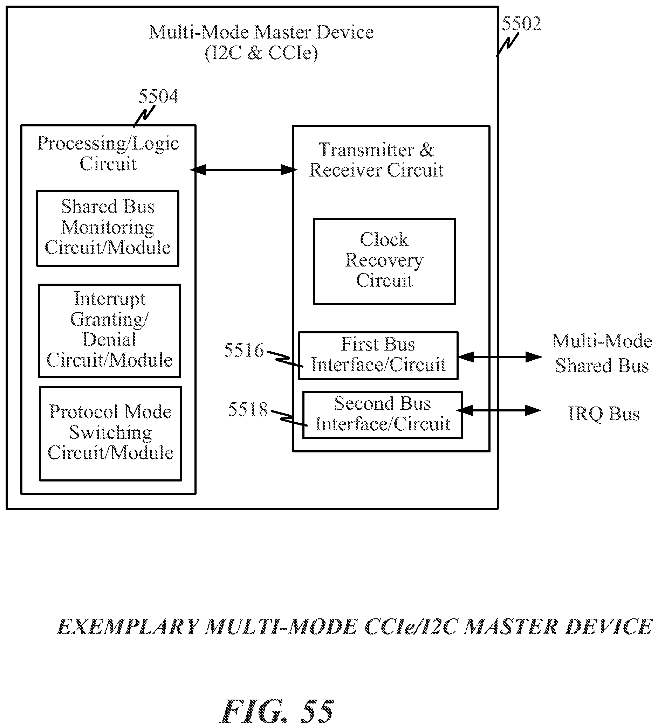

FIG. 55 illustrates an exemplary multi-mode master device 5502 that may include a first bus interface 5516, a second bus interface 5518, and a processing circuit 5504. The first bus interface may serve to couple to other devices coupled to a shared control data bus, the data bus dynamically configured to operate in either a first protocol mode or a second protocol mode. The second bus interface may server to couple to a dedicated interrupt line used by at least a subset of the other devices and which issue interrupt requests over the dedicated interrupt line in the second protocol mode. The processing circuit may be configured to: (a) manage data transfers over a shared bus to which a plurality of other devices are coupled, wherein at least a first subset of the other devices operate according to a first protocol mode and a second subset of the other devices operate according to a second protocol mode incompatible with the first protocol mode; (b) dynamically switch operation of the shared bus between the first protocol and second protocol mode by: (1) sending an entry call over the shared bus indicating that the shared bus is to operate according to the second protocol mode, and/or (2) sending an exit call over the shared bus indicating that the shared bus is to operate according to the first protocol mode

The master device may be further configured to: (a) receive interrupt requests from the first subset of devices over the shared bus when the shared bus operates according to the first protocol mode; (b) receive interrupt requests from the second subset of devices over a dedicated interrupt bus when the shared bus operates according to the second protocol mode, and/or (c) receive interrupt requests from the first subset of devices over the dedicated interrupt bus when the shared bus operates according to the second protocol mode. In one implementation, no interrupt requests are received from the first subset of devices when the shared bus operates according to the second protocol mode.

The shared bus includes a first line and a second line. When the shared bus operates according to the first protocol mode, the first line used for data transmissions and the second line used for a first clock signal. When the shared bus operates according to the second protocol mode, both the first line and second line are used for data transmissions while a second clock signal is embedded in symbol-to-symbol transitions with the data transmissions.

The second protocol may define an interrupt period within symbols transmitted over the shared bus during which the second subset of the other devices can assert an interrupt request on a first line of the shared bus while a second line of the shared bus is used by the master device for a heartbeat transmission.

The master device may also be configured to internally mask the first line of the shared bus during the interrupt period.

In one implementation, in response to an in-band interrupt request while operating according to the second protocol mode, the master device may send an interrupt group inquiry call to all slave devices that operate according to the second protocol mode on the shared bus, where such interrupt group inquiry call provides slots in which any asserting slave devices can respond.

### Exemplary CCIe Slave Device

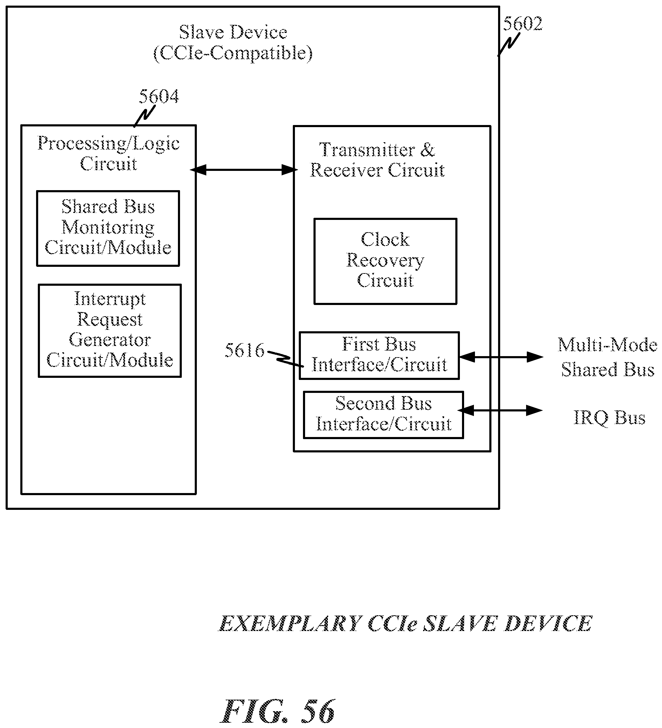

FIG. 56 illustrates an exemplary slave device 5602 that may comprise a bus interface 5616 and a processing circuit 5604. The bus interface may serve to couple to a shared bus shared with a plurality of other devices, wherein at least a first subset of the other devices operate according to a first protocol mode and the slave device operates according to a second protocol mode. The processing circuit may be configured to: (a) detect an entry call over the shared bus from a master device capable of operating according to the first protocol mode and the second protocol mode, the entry call indicating that the shared bus is to operate according to the second protocol mode; (b) send an interrupt request (IRQ) either in-band over the shared bus or side-band over a separate path to the master device; (c) communicate over the shared bus according to the second protocol mode; (d) monitor the shared bus for an exit call from the master device; and/or (c) disable the slave device from communicating over the shared bus upon detection of an exit call from the master device. The exit call may serve to indicate to the slave device that the shared bus is to operate according to the first protocol mode.

The shared bus may include a first line and a second line. When the shared bus operates according to the first protocol mode, the first line used for data transmissions and the second line used for a first clock signal. When the shared bus operates according to the second protocol mode, both the first line and second line are used for data transmissions while a second clock signal is embedded in symbol-to-symbol transitions with the data transmissions.

### Exemplary I2C Slave Device

An exemplary CCIe slave device 1302 (FIG. 13) may include a bus interface 1306 and a processing circuit 1304. The bus interface may serve to couple to a shared bus shared with a plurality of other devices, wherein the slave device operates according to a first protocol mode and at least a first subset of the other devices operate according to a second protocol mode. The processing circuit may serve to coupled to the bus interface and configured to: (a) detect an entry call over the shared bus from a master device capable of operating according to the first protocol mode and the second protocol mode, the entry call indicating that the shared bus is to operate according to the second protocol mode; and/or (b) disable the slave device from making in-band interrupt requests over the shared bus upon detection of the entry call.

The processing circuit is further configured to monitor the shared bus for an exit call from the master device, the exit call indicating that the shared bus is to operate according to the first protocol mode. The shared bus includes a first line and a second line, when the shared bus operates according to the first protocol mode, the first line used for data transmissions and the second line used for a first clock signal, and when the shared bus operates according to the second protocol mode, both the first line and second line are used for data transmissions while a second clock signal is embedded in symbol-to-symbol transitions with the data transmissions.

### Exemplary Interrupt Request Router Slave Device

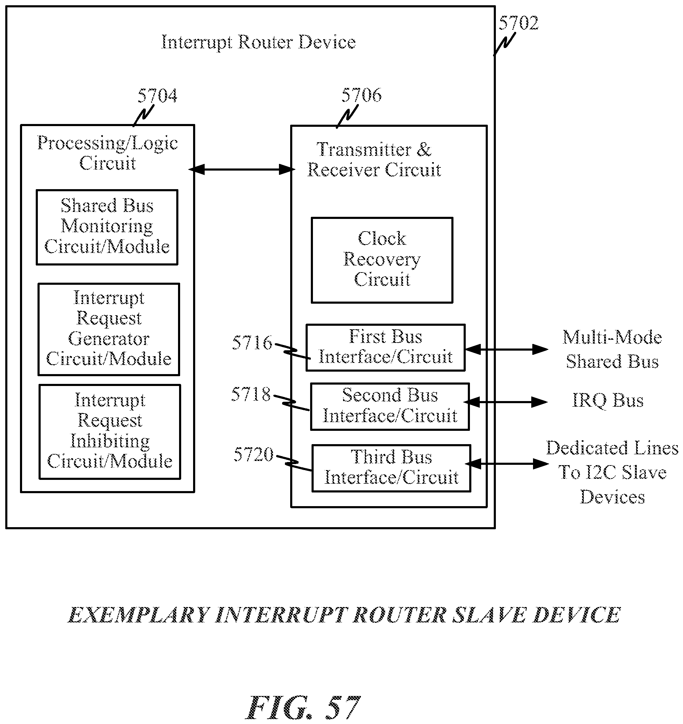

FIG. 57 illustrates an exemplary interrupt request router slave device 5702 that may include a first bus interface 5716, a second bus interface 5718, a third bus interface 5720, and a processing circuit 5704. The first bus interface may serve to couple to a shared control data bus, the data bus dynamically configured to operate in either a first protocol mode or a second protocol mode. The second bus interface may serve to couple to at least one subset of other slave device coupled to the shared bus, the subset of other slave devices operating according to the first protocol mode including in-band interrupt requests over the shared control data bus. The third bus interface may serve to couple to a dedicated interrupt line used in the second protocol mode to issue interrupt request to a master device that manages the shared bus. The processing circuit may be configured to: (a) receive an interrupt request over the second bus interface from a slave device within the first subset of slave devices; and/or (b) route the received interrupt request to the master device via the third bus interface.

One or more of the components, steps, features, and/or functions illustrated in the Figures may be rearranged and/or combined into a single component, step, feature, or function or embodied in several components, steps, or functions. Additional elements, components, steps, and/or functions may also be added without departing from novel features disclosed herein. The apparatus, devices, and/or components illustrated in the Figures may be configured to perform one or more of the methods, features, or steps described in the Figures. The novel algorithms described herein may also be efficiently implemented in software and/or embedded in hardware.

In addition, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

Moreover, a storage medium may represent one or more devices for storing data, including read-only memory (ROM), random access memory (RAM), magnetic disk storage mediums, optical storage mediums, flash memory devices, and/or other machine readable mediums for storing information. The term "machine readable medium" includes, but is not limited to portable or fixed storage devices, optical storage devices, wireless channels and various other mediums capable of storing, containing, or carrying instruction(s) and/or data.

Furthermore, embodiments may be implemented by hardware, software, firmware, middleware, microcode, or any combination thereof. When implemented in software, firmware, middleware, or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

Those of skill in the art would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The various features of the invention described herein can be implemented in different systems without departing from the invention. It should be noted that the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A device, comprising:
a shared bus;
a first slave device (122) coupled to the shared bus (108) and configured to
operate according to a first protocol mode including issuing in-band interrupt requests over the shared bus;
monitor the shared bus for an entry call indicating the shared bus is switching to a second protocol mode; and
upon detection of the entry call, disable the first slave device from making in-band interrupt requests over the shared bus; and
a second slave device (124) coupled to the shared bus (108) and configured to
operate according to the second protocol mode including issuing side-band interrupt requests over an interrupt bus (120) or in-band interrupt requests over the shared bus (108); and
detect the entry call over the shared bus (108), the entry call transmitted according to the second protocol mode.

2. The device of claim 1, further comprising:
a master device coupled to the shared bus and configured to:
operate according to both the first protocol mode and the second protocol mode;
manage communications over the shared bus; and
send the entry call over the shared bus indicating the shared bus is switching to the second protocol mode, where the entry call is sent according to the first protocol mode.

3. The device of claim 2, wherein the master device is further configured to:
detect interrupt requests from slave devices according to both the first protocol mode and the second protocol mode; and
respond to the interrupt requests by granting a requesting slave device access to the shared bus; or
wherein the master device is further configured to:
send an exit call over the shared bus indicating the shared bus is switching to the first protocol mode, where the exit call is sent according to both the second protocol mode and the first protocol mode.

4. The device of claim 2, wherein for in-band interrupts, the second protocol defines an interrupt period within symbols transmitted over the shared bus during which one or more slave devices coupled to the shared bus can assert an interrupt request on a first line of the shared bus while a second line of the shared bus is used by the master device for a heartbeat transmission; and preferably
wherein the master device and second slave device are configured to internally mask the first line of the shared bus during the interrupt period; or
wherein the master device is configured to send an interrupt group inquiry call to all slave devices that operate according to the second protocol mode on the shared bus, where such interrupt group inquiry call provides slots in which any asserting slave devices can respond.

5. The device of claim 1, wherein the second slave device is further configured to:
receive data or commands over the shared bus according to the second protocol mode when the shared bus operates according to the second protocol mode; or
wherein the first slave device is further configured to:
send an interrupt request over a dedicated interrupt line or bus separate from the shared bus while the shared bus operates according to the second protocol mode.

6. The device of claim 1, further comprising:
an interrupt router slave device configured to receive interrupt requests from the first slave device over a dedicated line and send the received interrupt request over the dedicated interrupt line or bus according to the second protocol.

7. A multi-mode master device (112), comprising:
a first bus interface to couple to other devices (118,122,124) coupled to a shared bus (108), the shared bus dynamically configured to operate in either a first protocol mode or a second protocol mode;
a second bus interface to couple to a dedicated interrupt line (120) used by at least a subset of the other devices (118,122,124) and which issue interrupt requests over the dedicated interrupt line (120) in the second protocol mode; and
a processing circuit coupled to the first bus interface and the second bus interface and configured to:
manage data transfers over the shared bus (108) to which a plurality of the other devices (118,122,124) are coupled, wherein at least a first subset of the other devices operate according to the first protocol mode and a second subset of the other devices operate according to the second protocol mode incompatible with the first protocol mode; and
dynamically switch operation of the shared bus between the first protocol and second protocol mode by:
sending an entry call over the shared bus (108) indicating that the shared bus is to operate according to the second protocol mode, and/or
sending an exit call over the shared bus (108) indicating that the shared bus is to operate according to the first protocol mode.

8. The master device of claim 7, wherein the processing circuit is further configured to:
receive interrupt requests from the first subset of devices over the shared bus when the shared bus operates according to the first protocol mode; or
wherein the processing circuit is further configured to:
receive interrupt requests from the second subset of devices over a dedicated interrupt bus when the shared bus operates according to the second protocol mode; or wherein the processing circuit is further configured to:
receive interrupt requests from the first subset of devices over the dedicated interrupt bus when the shared bus operates according to the second protocol mode; or wherein no interrupt requests are received from the first subset of devices when the shared bus operates according to the second protocol mode.

9. The master device of claim 7, wherein the second protocol defines an interrupt period within symbols transmitted over the shared bus during which the second subset of the other devices can assert an interrupt request on a first line of the shared bus while a second line of the shared bus is used by the master device for a heartbeat transmission; and preferably
wherein the processing circuit is further configured to internally mask the first line of the shared bus during the interrupt period.

10. The master device of claim 7, wherein in response to an in-band interrupt request while operating according to the second protocol mode, the master device sends an interrupt group inquiry call to all slave devices that operate according to the second protocol mode on the shared bus, where such interrupt group inquiry call provides slots in which any asserting slave devices can respond.

11. A slave device (124), comprising:
a bus interface to couple to a shared bus (108) shared with a plurality of other devices (114,118,122), wherein at least a first subset of the other devices operate according to a first protocol mode and the slave device operates according to a second protocol mode; and
a processing circuit coupled to the bus interface and configured to:
detect an entry call over the shared bus from a master device capable of operating according to the first protocol mode and the second protocol mode, the entry call indicating that the shared bus is to operate according to the second protocol mode; and
send an interrupt request (IRQ) either in-band over the shared bus or side-band over a separate path to the master device.

12. The slave device of claim 11, wherein the processing circuit is further configured to:
communicate over the shared bus according to the second protocol mode; or
wherein the processing circuit is further configured to:
monitor the shared bus for an exit call from the master device; and
disable the slave device from communicating over the shared bus upon detection of the exit call from the master device; and preferably
wherein the exit call serves to indicate to the slave device that the shared bus is to operate according to the first protocol mode.

13. A slave device (122), comprising:
a bus interface to couple to a shared bus (108) shared with a plurality of other devices (114,118,124), wherein the slave device (122) operates according to a first protocol mode and at least a first subset of the other devices operate according to a second protocol mode; and
a processing circuit coupled to the bus interface and configured to:
detect an entry call over the shared bus from a master device capable of operating according to the first protocol mode and the second protocol mode, the entry call indicating that the shared bus is to operate according to the second protocol mode; and
disable the slave device from making in-band interrupt requests over the shared bus upon detection of the entry call.

14. The slave device of claim 13, wherein the processing circuit is further configured to:
monitor the shared bus for an exit call from the master device, the exit call indicating that the shared bus is to operate according to the first protocol mode.

15. The device of claim 1, master device of claim 7, or the slave device of claim 11 or 13, wherein the shared bus includes a first line and a second line, when the shared bus operates according to the first protocol mode, the first line is used for data transmissions and the second line is used for a first clock signal, and when the shared bus operates according to the second protocol mode, both the first line and second line are used for data transmissions while a second clock signal is embedded in symbol-to-symbol transitions with the data transmissions.

## Patentansprüche

1. Eine Einrichtung, die Folgendes aufweist:
einen gemeinsam verwendeten Bus;
eine erste Slave-Einrichtung (122), die an den gemeinsam verwendeten Bus (108) gekoppelt ist und konfiguriert ist zum
Arbeiten gemäß einem ersten Protokollmodus, der Ausgeben von In-Band-Interrupt-Anfragen über den gemeinsam verwendeten Bus aufweist; Überwachen des gemeinsam verwendeten Busses hinsichtlich Eintrittsaufrufen, die anzeigen, dass der gemeinsam verwendete Bus zu einem zweiten Protokollmodus schaltet; und
auf eine Detektion des Eintrittsaufrufs hin, Unterbinden, dass die erste Slave-Einrichtung In-Band-Interrupt-Anfragen über den gemeinsam verwendeten Bus macht; und
eine zweite Slave-Einrichtung (124), die an den gemeinsam verwendeten Bus (108) gekoppelt ist und konfiguriert ist zum
Arbeiten gemäß dem zweiten Protokollmodus, der Ausgeben von Side-Band-Interrupt-Anfragen über einen Interrupt-Bus (120) oder von In-Band-Interrupt-Anfragen über den gemeinsam verwendeten Bus (108) aufweist; und
Detektieren des Eintrittsaufrufs über den gemeinsam verwendeten Bus (108), wobei der Eintrittsaufruf gemäß dem zweiten Protokollmodus gesendet wird.

2. Einrichtung nach Anspruch 1, die weiter Folgendes aufweist:
eine Master-Einrichtung, die an den gemeinsam verwendeten Bus gekoppelt ist und konfiguriert ist zum:
Arbeiten gemäß sowohl dem ersten Protokollmodus als auch dem zweiten Protokollmodus;
Verwalten von Kommunikationen über den gemeinsam verwendeten Bus; und
Senden des Eintrittsaufrufs über den gemeinsam verwendeten Bus, was anzeigt, dass der gemeinsam verwendete Bus zu dem zweiten Protokollmodus schaltet, wobei der Eintrittsaufruf gemäß dem ersten Protokollmodus gesendet wird.

3. Einrichtung nach Anspruch 2, wobei die Master-Einrichtung weiter konfiguriert ist zum:
Detektieren von Interrupt-Anfragen von Slave-Einrichtungen gemäß sowohl dem ersten Protokollmodus als auch dem zweiten Protokollmodus; und
Antworten auf die Interrupt-Anfragen durch Erteilen von Zugriff auf den gemeinsam verwendeten Bus an eine anfragende Slave-Einrichtung; oder
wobei die Master-Einrichtung weiter konfiguriert ist zum:
Senden eines Austrittsaufrufs über den gemeinsam verwendeten Bus, was anzeigt, dass der gemeinsam verwendete Bus zu dem ersten Protokollmodus schaltet, wobei der Austrittsaufruf gemäß sowohl dem zweiten Protokollmodus als auch dem ersten Protokollmodus gesendet wird.

4. Einrichtung nach Anspruch 2, wobei der zweite Protokollmodus für In-Band-Interrupts eine Interrupt-Periode innerhalb von Symbolen definiert, die über den gemeinsam verwendeten Bus gesendet werden, während der ein oder mehrere Slave-Einrichtungen, die an den gemeinsam verwendeten Bus gekoppelt sind, eine Interrupt-Anfrage auf einer ersten Leitung des gemeinsam verwendeten Busses anlegen, während eine zweite Leitung des gemeinsam verwendeten Busses durch die Master-Einrichtung für eine Heartbeat-Sendung verwendet wird; und wobei vorzugsweise
die Master-Einrichtung und die zweite Slave-Einrichtung konfiguriert sind, um intern die erste Leitung des gemeinsam verwendeten Busses während der Interrupt-Periode zu maskieren; oder
wobei die Master-Einrichtung konfiguriert ist zum Senden eines Interrupt-Gruppen-Ermittlungsaufrufs an alle Slave-Einrichtungen, die gemäß dem zweiten Protokollmodus auf dem gemeinsam verwendeten Bus arbeiten, wobei ein solcher Interrupt-Gruppen-Ermittlungsaufruf Schlitze vorsieht, in denen jegliche angelegten Slave-Einrichtungen antworten können.

5. Einrichtung nach Anspruch 1, wobei die zweite Slave-Einrichtung weiter konfiguriert ist zum:
Empfangen von Daten oder Befehlen über den gemeinsam verwendeten Bus gemäß dem zweiten Protokollmodus, wenn der gemeinsam verwendete Bus gemäß dem zweiten Protokollmodus arbeitet; oder
wobei die erste Slave-Einrichtung weiter konfiguriert ist zum:
Senden einer Interrupt-Anfrage über eine dedizierte bzw. speziell vorgesehene Interrupt-Leitung oder einen Bus separat von dem gemeinsamen verwendeten Bus, während der gemeinsam verwendete Bus gemäß dem zweiten Protokollmodus arbeitet.

6. Einrichtung nach Anspruch 1, die weiter Folgendes aufweist:
eine Interrupt-Router-Slave-Einrichtung, die konfiguriert ist zum Empfangen von Interrupt-Anfragen von der ersten Slave-Einrichtung über eine dedizierte bzw. speziell vorgesehene Leitung und zum Senden der empfangenen Interrupt-Anfrage über die dedizierte Interrupt-Leitung oder den dedizierten Interrupt-Bus gemäß dem zweiten Protokoll.

7. Eine Multi-Modus-Master-Einrichtung (112), die Folgendes aufweist:
eine erste Busschnittstelle zum Koppeln an andere Einrichtungen (118, 122, 124), die an den gemeinsam verwendeten Bus (108) gekoppelt sind, wobei der gemeinsam verwendete Bus dynamisch konfiguriert wird zum Arbeiten in entweder einem ersten Protokollmodus oder einen zweiten Protokollmodus;
eine zweite Busschnittstelle zum Koppeln einer dedizierten bzw. speziell vorgesehenen Interrupt-Leitung (120), die durch wenigstens einen Subsatz der anderen Einrichtungen (118, 122, 124) verwendet wird und welche Interrupt-Anfragen über die dedizierte Interrupt-Leitung (120) in dem zweiten Protokollmodus ausgeben; und
eine Verarbeitungsschaltung, die an die erste Busschnittstelle und die zweite Busschnittstelle gekoppelt ist und konfiguriert ist zum:
Verwalten von Datentransfers über den gemeinsam verwendeten Bus (108) an welchen eine Vielzahl der anderen Einrichtungen (118, 122, 124) gekoppelt sind, wobei wenigstens ein erster Subsatz der anderen Einrichtungen gemäß dem ersten Protokollmodus arbeitet und ein zweiter Subsatz der anderen Einrichtungen gemäß dem zweiten Protokollmodus arbeitet, der zu dem ersten Protokollmodus nicht kompatibel ist; und
dynamisches Schalten des Betriebs des gemeinsam verwendeten Busses zwischen dem ersten Protokoll- und dem zweiten Protokollmodus durch:
Senden eines Eintrittsaufrufs über den gemeinsam verwendeten Bus (108), der anzeigt, dass der gemeinsam verwendete Bus gemäß dem zweiten Protokollmodus arbeiten soll, und/oder Senden eines Austrittsaufrufs über den gemeinsam verwendeten Bus (108), der anzeigt, dass der gemeinsam verwendete Bus gemäß dem ersten Protokollmodus arbeiten soll.

8. Master-Einrichtung nach Anspruch 7, wobei die Verarbeitungsschaltung weiter konfiguriert ist zum:
Empfangen von Interrupt-Anfragen von dem ersten Subsatz von Einrichtungen über den gemeinsam verwendeten Bus, wenn der gemeinsam verwendete Bus gemäß dem ersten Protokollmodus arbeitet; oder
wobei die Verarbeitungsschaltung weiter konfiguriert ist zum:
Empfangen von Interrupt-Anfragen von dem zweiten Subsatz von Einrichtungen über einen dedizierten bzw. speziell vorgesehenen Interrupt-Bus, wenn der gemeinsam verwendete Bus gemäß dem zweiten Protokollmodus arbeitet; oder
wobei die Verarbeitungsschaltung weiter konfiguriert ist zum:
Empfangen von Interrupt-Anfragen von dem ersten Subsatz von Einrichtungen über den dedizierten Interrupt-Bus, wenn der gemeinsam verwendete Bus gemäß dem zweiten Protokollmodus arbeitet; oder
wobei keine Interrupt-Anfragen von dem ersten Subsatz von Einrichtungen empfangen werden, wenn der gemeinsam verwendete Bus gemäß dem zweiten Protokollmodus arbeitet.

9. Master-Einrichtung nach Anspruch 7, wobei das zweite Protokoll eine Interrupt-Periode innerhalb Symbolen definiert, die über den gemeinsam verwendeten Bus gesendet werden, während der der zweite Subsatz der anderen Einrichtungen eine Interrupt-Anfrage auf einer ersten Leitung des gemeinsam verwendeten Busses anlegen kann, während eine zweite Leitung des gemeinsam verwendeten Busses durch die Master-Einrichtung für eine Heartbeat-Sendung verwendet wird; und wobei vorzugsweise
die Verarbeitungsschaltung weiter konfiguriert ist zum internen Maskieren der ersten Leitung des gemeinsam verwendeten Busses während der Interrupt-Periode.

10. Master-Einrichtung nach Anspruch 7, wobei ansprechend auf eine In-Band-Interrupt-Anfrage, während eines Betriebs gemäß dem zweiten Protokollmodus, die Master-Einrichtung einen Interrupt-Gruppen-Ermittlungsaufruf an alle Slave-Einrichtungen sendet, die gemäß dem zweiten Protokollmodus auf dem gemeinsam verwendeten Bus arbeiten, wobei ein solcher Interrupt-Gruppen-Ermittlungsaufruf Schlitze vorsieht, in denen jegliche angelegte Slave-Einrichtungen antworten können.

11. Eine Slave-Einrichtung (124), die Folgendes aufweist:
eine Busschnittstelle zum Koppeln an einen gemeinsam verwendeten Bus (108), der mit einer Vielzahl anderer Einrichtungen (114, 118, 122) gemeinsam verwendet wird, wobei wenigstens ein erster Subsatz der anderen Einrichtungen gemäß einem ersten Protokollmodus arbeitet und die Slave-Einrichtung gemäß einem zweiten Protokollmodus arbeitet; und
eine Verarbeitungsschaltung, die an die Busschnittstelle gekoppelt ist und konfiguriert ist zum:
Detektieren eines Eintrittsaufrufs über den gemeinsam verwendeten Bus von einer Master-Einrichtung, die in der Lage ist gemäß dem ersten Protokollmodus und dem zweiten Protokollmodus zu arbeiten, wobei der Eintrittsaufruf anzeigt, dass der gemeinsam verwendete Bus gemäß dem zweiten Protokollmodus arbeiten soll; und
Senden einer Interrupt-Anfrage bzw. IRQ (IRQ = interrupt request) entweder im Band bzw. In-Band über den gemeinsam verwendeten Bus oder im Seitenband bzw. Side-Band über einen separaten Pfad an die Master-Einrichtung.

12. Slave-Einrichtung nach Anspruch 11, wobei die Verarbeitungsschaltung weiter konfiguriert ist zum:
Kommunizieren über den gemeinsam verwendeten Bus gemäß dem zweiten Protokollmodus; oder
wobei die Verarbeitungsschaltung weiter konfiguriert ist zum:
Überwachen des gemeinsam verwendeten Busses für einen Austrittsaufruf von der Master-Einrichtung; und
Unterbinden, dass die Slave-Einrichtung über den gemeinsam verwendeten Bus kommuniziert auf eine Detektion des Austrittsaufrufs von der Master-Einrichtung hin; und wobei vorzugsweise
der Austrittsaufruf dazu dient der Slave-Einrichtung anzuzeigen, dass der gemeinsam verwendete Bus gemäß dem ersten Protokollmodus arbeiten soll.

13. Eine Slave-Einrichtung (122), die Folgendes aufweist:
eine Busschnittstelle zum Koppeln eines gemeinsam verwendeten Busses (108), der mit einer Vielzahl anderer Einrichtungen (114, 118, 124) gemeinsam verwendet wird, wobei die Slave-Einrichtung (122) gemäß einem ersten Protokollmodus arbeitet und wenigstens ein erster Subsatz der anderen Einrichtung gemäß einem zweiten Protokollmodus arbeitet; und
eine Verarbeitungsschaltung, die an die Busschnittstelle gekoppelt ist und konfiguriert ist zum:
Detektieren eines Eintrittsaufrufs über den gemeinsam verwendeten Bus von einer Mastereinrichtung, die in der Lage ist, gemäß dem ersten Protokollmodus und dem zweiten Protokollmodus zu arbeiten, wobei der Eintrittsaufruf anzeigt, dass der gemeinsam verwendete Bus gemäß dem zweiten Protokollmodus arbeitet; und
Unterbinden, dass die Slave-Einrichtung In-Band-Interrupt-Anfragen über den gemeinsam verwendeten Bus macht, auf eine Detektion des Eintrittsaufrufs hin.

14. Slave-Einrichtung nach Anspruch 13, wobei die Verarbeitungsschaltung weiter konfiguriert ist zum:
Überwachen des gemeinsam verwendeten Busses hinsichtlich eines Austrittsaufrufs von der Master-Einrichtung, wobei der Austrittsaufruf anzeigt, dass der gemeinsam verwendete Bus gemäß dem ersten Protokollmodus arbeiten soll.

15. Einrichtung nach Anspruch 1, Master-Einrichtung nach Anspruch 7 oder die Slave-Einrichtung nach Anspruch 11 oder 13, wobei der gemeinsam verwendete Bus eine erste Leitung und eine zweite Leitung aufweist, wobei wenn der gemeinsam verwendete Bus gemäß dem ersten Protokollmodus arbeitet, die erste Leitung für Datensendungen verwendet wird und die zweite Leitung für ein erstes Taktsignal verwendet wird, und wobei, wenn der gemeinsam verwendete Bus gemäß dem zweiten Protokollmodus arbeitet, sowohl die erste Leitung als auch die zweite Leitung für Datensendungen verwendet werden, während ein zweites Taktsignal in Symbol-zu-Symbol-Übergänge mit den Datensendungen eingebettet wird.

## Revendications

1. Dispositif comprenant :
un bus partagé ;
un premier dispositif esclave (122) couplé au bus partagé (108) et agencé pour
fonctionner selon un premier mode de protocole comprenant l'émission de requêtes d'interruption dans la bande sur le bus partagé ;
surveiller le bus partagé pour chercher un appel d'entrée indiquant que le bus partagé commute vers un deuxième mode de protocole ; et
lors de la détection de l'appel d'entrée, désactiver le premier dispositif esclave pour l'empêcher de faire des requêtes d'interruption dans la bande sur le bus partagé ; et
un deuxième dispositif esclave (124) couplé au bus partagé (108) et agencé pour
fonctionner selon le deuxième mode de protocole comprenant l'émission de requêtes d'interruption de bande latérale sur un bus d'interruption (120) ou de requêtes d'interruption dans la bande sur le bus partagé (108) ; et
détecter l'appel d'entrée sur le bus partagé (108), l'appel d'entrée étant transmis selon le deuxième mode de protocole.

2. Dispositif selon la revendication 1, comprenant en outre :
un dispositif maître couplé au bus partagé et agencé pour :
fonctionner à la fois selon le premier mode de protocole et selon le deuxième mode de protocole ;
gérer des communications sur le bus partagé ; et
envoyer l'appel d'entrée sur le bus partagé indiquant que le bus partagé commute vers le deuxième mode de protocole, l'appel d'entrée étant envoyé selon le premier mode de protocole.

3. Dispositif selon la revendication 2, dans lequel le dispositif maître est en outre agencé pour :
détecter des requêtes d'interruption provenant de dispositifs esclaves à la fois selon le premier mode de protocole et selon le deuxième mode de protocole ; et
répondre aux requêtes d'interruption en accordant à un dispositif esclave demandeur un accès au bus partagé ; ou
dans lequel le dispositif maître est en outre agencé pour :
envoyer un appel de sortie sur le bus partagé indiquant que le bus partagé commute vers le premier mode de protocole, l'appel de sortie étant envoyé à la fois selon le deuxième mode de protocole et selon le premier mode de protocole.

4. Dispositif selon la revendication 2, dans lequel pour des interruptions dans la bande, le deuxième protocole définit une période d'interruption dans des symboles transmis sur le bus partagé pendant laquelle un ou plusieurs dispositifs esclaves couplés au bus partagé peuvent activer une requête d'interruption sur une première ligne du bus partagé pendant qu'une deuxième ligne du bus partagé est utilisée par le dispositif maître pour la transmission de battements de coeur ; et de préférence
dans lequel le dispositif maître et le deuxième dispositif esclave sont agencés pour masquer de façon interne la première ligne du bus partagé pendant la période d'interruption ; ou
dans lequel le dispositif maître est agencé pour envoyer un appel d'interrogation de groupe d'interruptions à tous les dispositifs esclaves qui fonctionnent selon le deuxième mode de protocole sur le bus partagé, un tel appel d'interrogation de groupe d'interruptions fournissant des créneaux dans lesquels les dispositifs esclaves qui s'activent peuvent répondre.

5. Dispositif selon la revendication 1, dans lequel le deuxième dispositif esclave est en outre agencé pour :
recevoir des données ou des commandes sur le bus partagé selon le deuxième mode de protocole lorsque le bus partagé fonctionne selon le deuxième mode de protocole ; ou
dans lequel le premier dispositif esclave est en outre agencé pour :
envoyer une requête d'interruption sur une ligne d'interruption dédiée ou un bus séparé du bus partagé pendant que le bus partagé fonctionne selon le deuxième mode de protocole.

6. Dispositif selon la revendication 1, comprenant en outre :
un dispositif esclave routeur d'interruptions agencé pour recevoir des requêtes d'interruption du premier dispositif esclave sur une ligne dédiée et envoyer la requête d'interruption reçue sur la ligne d'interruption dédiée ou le bus selon le deuxième protocole.

7. Dispositif maître multimode (112), comprenant :
une première interface de bus pour se coupler à d'autres dispositifs (118, 122, 124) couplés à un bus partagé (108), le bus partagé étant configuré dynamiquement pour fonctionner soit dans un premier mode de protocole soit dans un deuxième mode de protocole ;
une deuxième interface de bus pour se coupler à une ligne d'interruption dédiée (120) utilisée par au moins un sous-ensemble des autres dispositifs (118, 122, 124) et qui émet des requêtes d'interruption sur la ligne d'interruption dédiée dans le deuxième mode de protocole ; et
un circuit de traitement couplé à la première interface de bus et à la deuxième interface de bus et agencé pour :
gérer des transferts de données sur le bus partagé (108) auquel une pluralité des autres dispositifs (118, 122, 124) est couplée, au moins un premier sous-ensemble des autres dispositifs fonctionnant selon le premier mode de protocole et un deuxième sous-ensemble des autres dispositifs fonctionnant selon le deuxième mode de protocole incompatible avec le premier mode de protocole ; et
commuter dynamiquement le fonctionnement du bus partagé entre le premier mode de protocole et le deuxième mode de protocole :
en envoyant un appel d'entrée sur le bus partagé (108) indiquant que le bus partagé doit fonctionner selon le deuxième mode de protocole, et/ou
en envoyant un appel de sortie sur le bus partagé (108) indiquant que le bus partagé doit fonctionner selon le premier mode de protocole.

8. Dispositif maître selon la revendication 7, dans lequel le circuit de traitement est en outre agencé pour :
recevoir des requêtes d'interruption provenant du premier ensemble de dispositifs sur le bus partagé lorsque le bus partagé fonctionne selon le premier mode de protocole ; ou
dans lequel le circuit de traitement est en outre agencé pour :
recevoir des requêtes d'interruption provenant du deuxième sous-ensemble de dispositifs sur un bus d'interruption dédié lorsque le bus partagé fonctionne selon le deuxième mode de protocole ; ou
dans lequel le circuit de traitement est en outre agencé pour :
recevoir des requêtes d'interruption provenant du premier sous-ensemble de dispositifs sur le bus d'interruption dédié lorsque le bus partagé fonctionne selon le deuxième mode de protocole ; ou
dans lequel aucune requête d'interruption n'est reçue du premier sous-ensemble de dispositifs lorsque le bus partagé fonctionne selon le deuxième mode de protocole.

9. Dispositif maître selon la revendication 7, dans lequel le deuxième protocole définit une période d'interruption dans des symboles transmis sur le bus partagé pendant laquelle le deuxième sous-ensemble des autres dispositifs peut activer une requête d'interruption sur une première ligne du bus partagé pendant qu'une deuxième ligne du bus partagé est utilisée par le dispositif maître pour la transmission de battements de coeur ; et de préférence
dans lequel le circuit de traitement est en outre agencé pour masquer de façon interne la première ligne du bus partagé pendant la période d'interruption.

10. Dispositif maître selon la revendication 7, dans lequel en réponse à une requête d'interruption dans la bande pendant un fonctionnement selon le deuxième mode de protocole, le dispositif maître envoie un appel d'interrogation de groupe d'interruptions à tous les dispositifs esclaves qui fonctionnent selon le deuxième mode de protocole sur le bus partagé, un tel appel d'interrogation de groupe d'interruptions fournissant des créneaux dans lesquels les dispositifs esclaves qui s'activent peuvent répondre.

11. Dispositif esclave (124), comprenant :
une interface de bus pour se coupler à un bus partagé (108), partagé avec une pluralité d'autres dispositifs (114, 118, 122), dans lequel au moins un premier sous-ensemble des autres dispositifs fonctionne selon un premier mode de protocole et le dispositif esclave fonctionne selon un deuxième mode de protocole ; et
un circuit de traitement couplé à l'interface de bus et agencé pour :
détecter un appel d'entrée sur le bus partagé provenant d'un dispositif maître capable de fonctionner selon le premier mode de protocole et selon le deuxième mode de protocole, l'appel d'entrée indiquant que le bus partagé doit fonctionner selon le deuxième mode de protocole ; et
envoyer une requête d'interruption (IRQ) soit dans la bande sur le bus partagé soit dans une bande latérale sur un chemin séparé vers le dispositif maître.

12. Dispositif esclave selon la revendication 11, dans lequel le circuit de traitement est en outre agencé pour :
communiquer sur le bus partagé selon le deuxième mode de protocole ; ou
dans lequel le circuit de traitement est en outre agencé pour :
surveiller le bus partagé pour chercher un appel de sortie provenant du dispositif maître ; et
désactiver le dispositif esclave pour l'empêcher de communiquer sur le bus partagé à la détection de l'appel de sortie provenant du dispositif maître ; et de préférence
dans lequel l'appel de sortie sert à indiquer au dispositif esclave que le bus partagé doit fonctionner selon le premier mode de protocole.

13. Dispositif esclave (122), comprenant :
une interface de bus pour se coupler à un bus partagé (108), partagé avec une pluralité d'autres dispositifs (114, 118, 124), dans lequel le dispositif esclave (122) fonctionne selon un premier mode de protocole et au moins un premier sous-ensemble des autres dispositifs fonctionne selon un deuxième mode de protocole ; et
un circuit de traitement couplé à l'interface de bus et agencé pour :
détecter un appel d'entrée sur le bus partagé provenant d'un dispositif maître capable de fonctionner selon le premier mode de protocole et selon le deuxième mode de protocole, l'appel d'entrée indiquant que le bus partagé doit fonctionner selon le deuxième mode de protocole ; et
désactiver le dispositif esclave pour l'empêcher de faire des requêtes d'interruption dans la bande sur le bus partagé lors d'une détection de l'appel d'entrée.

14. Dispositif esclave selon la revendication 13, dans lequel le circuit de traitement est en outre agencé pour :
surveiller le bus partagé pour chercher un appel de sortie provenant du dispositif maître, l'appel de sortie indiquant que le bus partagé doit fonctionner selon le premier mode de protocole.

15. Dispositif selon la revendication 1, dispositif maître selon la revendication 7, ou dispositif esclave selon la revendication 11 ou 13, dans lequel le bus partagé comprend une première ligne et une deuxième ligne, dans lequel le bus partagé fonctionne selon le premier mode de protocole, la première ligne est utilisée pour des transmissions de données et la deuxième ligne est utilisée pour un premier signal d'horloge, et lorsque le bus partagé fonctionne selon le deuxième mode de protocole, on utilise à la fois la première ligne et la deuxième ligne pour des transmissions de données pendant qu'un deuxième signal d'horloge est incorporé dans des transitions de symbole à symbole avec les transmissions de données.
